# EUROPEAN PATENT APPLICATION

(11) **EP 4 752 557 A1**
(43) Date of publication of application: **03.06.2026**
(21) Application number: 25218558.2
(22) Date of filing: 26.11.2025
(51) Int. Cl.: G01N 35/00, G01N 35/10, B29B 17/00, B65D 85/00, B07C 5/34

(54) **SPECIMEN MEASUREMENT SYSTEM AND SPECIMEN MEASUREMENT APPARATUS**

(30) Priority: 29.11.2024 JP 2024208639
(71) Applicant: SYSMEX CORPORATION, Kobe-shi Hyogo 651-0073 (JP)
(72) Inventor: AKAKABE, Takehiko, Hyogo, 651-0073 (JP); OHYAMA, Yasuhiro, Hyogo, 651-0073 (JP); HADANO, Takaaki, Hyogo, 651-0073 (JP)
(74) Representative: Becker, Eberhard

(57) **Abstract**

A specimen measurement system (1) comprises: a measurement unit (2) configured to measure a specimen; and a control unit (7) configured to analyze measurement data. The measurement unit (2) comprises: a first reagent container (230) accommodating a first reagent containing a substance that binds to an analyte in the specimen; a reagent holder (23) configured to hold the first reagent container (230); a specimen processor (21) configured to prepare a measurement sample by mixing the first reagent and the specimen; and a detector (22) configured to interrogate the analyte. The measurement unit (2) is arranged on a housing (24) that stores a second reagent container (240) containing a second reagent used for: (i) washing of a flow path of the measurement unit (2), (ii) dilution of the specimen, (iii) preparation of the measurement sample, and (iv) interrogation of the analyte of the measurement sample by the detector (22).

## Description

### FIELD OF THE INVENTION

The present disclosure relates to a system and an apparatus for performing specimen measurement.

### BACKGROUND OF THE INVENTION

In recent years, various initiatives have been demanded for environmental load reduction. One of the initiatives is collecting used products, converting them into resources, and manufacturing new products (recycling, so-called). Japanese National Publication No. 2022-525396 discloses a technique for determining the plastic composition of a beverage bottle, which is a plastic product, and determining whether or not the plastic product is recyclable.

### SUMMARY OF THE INVENTION

The scope of the present invention is defined solely by the appended claims, and is not affected to any degree by the statements within this summary.

In order to achieve global goals for reducing environmental load (for example, SDGs: Sustainable Development Goals), there is a demand for an ecosystem for managing recycling of products in the field of clinical specimen testing as well. While Japanese National Publication No. 2022-525396 discloses a technique concerning recycling of beverage bottles, no disclosure is found about a system for recycling management of a specimen measurement apparatus that analyzes clinical specimens.

The present disclosure relates to a specimen measurement system (1) comprising: a measurement unit (2) configured to measure a specimen; and a control unit (7) configured to analyze measurement data from the measurement unit (2); wherein the measurement unit (2) comprises: a first reagent container (230) accommodating a first reagent containing a substance that binds to an analyte in the specimen; a reagent holder (23) configured to hold the first reagent container (230); a specimen processor (21) configured to prepare a measurement sample by mixing the first reagent and the specimen; and a detector (22) configured to interrogate the analyte for the measurement of the measurement sample; wherein the measurement unit (2) is arranged on a housing that stores a second reagent container (240), the second reagent container (240) containing a second reagent used for at least one of: (i) washing of a flow path of the measurement unit (2), (ii) dilution of the specimen, (iii) preparation of the measurement sample, and (iv) interrogation of the analyte of the measurement sample by the detector (22), wherein the second reagent container (240) stored in the housing is connected to the measurement unit (2) via a reagent feeding tube; and wherein the control unit (7) is programmed to execute operations including: analyzing the measurement data acquired by the detector (22) to generate a measurement result; and managing a number of replacements of the second reagent container (240) based on a remaining amount of the second reagent.

Another aspect of the present disclosure relates to A specimen measurement apparatus (11) comprising: a measurement unit (2) configured to measure a specimen, and a control unit (7) configured to analyze measurement data from the measurement unit (2); wherein the measurement unit (2) comprises: a first reagent container (230) configured to contain a first reagent including a substance that binds to an analyte in the specimen; a reagent holder (23) configured to holder the first reagent container (230); a specimen processor (21) configured to prepare a measurement sample by mixing the first reagent and the specimen; and a detector (22) configured to interrogate the analyte for the measurement of the measurement sample; wherein the measurement unit (2) is arranged on a housing that stores a second reagent container (240), the second reagent container

(240) containing a second reagent used for at least one of: (i) washing of a flow path of the measurement unit (2), (ii) dilution of the specimen, (iii) preparation of the measurement sample, and (iv) interrogation of the analyte of the measurement sample by the detector (22), wherein the second reagent container (240) stored in the housing is connected to the measurement unit (2) via a reagent feeding tube; and wherein the control unit (7) is programmed to execute operations including: analyzing the measurement data acquired by the detector (22) to generate a measurement result; and managing a remaining amount (701) of the second reagent for a management of a number of times the second reagent container (240) has been replaced.

According to the present invention, recycling concerning the specimen measurement apparatus can be managed.

### BRIEF DESCRIPTION OF THE DRAWINGS

FIG. 1 is a diagram showing an outline of recycling of reagent containers.
FIG. 2 is a diagram showing a configuration example of a specimen measurement apparatus.
FIG. 3 is a diagram showing a configuration example of a specimen measurement apparatus.
FIG. 4 is a diagram showing a configuration example of a specimen measurement system.
FIG. 5 is a diagram showing a configuration example of a specimen measurement system.
FIG. 6 is a diagram showing a configuration example of a specimen measurement apparatus.
FIG. 7 is a diagram showing a configuration example of a specimen measurement system.
FIG. 8 is a diagram showing a configuration example of a reagent container.
FIG. 9 is a diagram showing a configuration example of a specimen measurement apparatus.
FIG. 10 is a diagram showing a configuration example of a specimen measurement apparatus.
FIG. 11 is a diagram showing a configuration example of a reagent supply unit.
FIG. 12 is a diagram showing a configuration example of a reagent supply unit.
FIG. 13 is a flowchart showing an operation example of a remaining amount manager.
FIG. 14 is a flowchart showing an operation example of a remaining amount manager.
FIG. 15 is a diagram showing a configuration example of a specimen measurement apparatus.
FIG. 16 is a diagram showing a configuration example of a reagent container.
FIG. 17 is a flowchart showing an operation example of a reagent manager.
FIG. 18 is a diagram showing components of a specimen measurement system.
FIG. 19 is a diagram showing a configuration example of a computer.
FIG. 20 is a diagram showing a configuration example 1 of a specimen measurement system.
FIG. 21 is a diagram showing a configuration example 2 of a specimen measurement system.
FIG. 22 is a diagram showing a configuration example 3 of a specimen measurement system.
FIG. 23 is a diagram showing a configuration example 4 of a specimen measurement system.
FIG. 24 is a diagram showing a configuration example 5 of a specimen measurement system.
FIG. 25 is a diagram showing a configuration example 6 of a specimen measurement system.
FIG. 26 is a diagram showing a configuration example 7 of a specimen measurement system.
FIG. 27 is a diagram showing a hardware configuration example of a control unit.
FIG. 28 is a diagram showing a configuration example of control software and data management software.
FIG. 29 is a diagram showing a modification example of the configuration example of the control unit.
FIG. 30 is a diagram showing a configuration example in a case where the measurement unit is a blood cell analyzer.
FIG. 31 is a schematic diagram for explaining a specimen aspirator and a sample preparator in a case of supplying a measurement sample to an FCM detector.
FIG. 32 is a schematic diagram for explaining a specimen aspirator and a sample preparator in a case of supplying a measurement sample to an RBC/PLT detector.
FIG. 33 is a schematic diagram for explaining a specimen aspirator and a sample preparator in a case of supplying a measurement sample to an HGB detector.
FIG. 34 is a diagram showing a configuration example in a case where the measurement unit is a urine particle analyzer.
FIG. 35 is a diagram showing a configuration example of a detector.
FIG. 36 is a diagram showing a configuration example in a case where the measurement unit is a blood coagulation analyzer.
FIG. 37 is a diagram showing a configuration example of a light irradiation part of the detector.
FIG. 38 is a diagram showing a configuration example of an optical detector of the detector.
FIG. 39 is a diagram showing a configuration example in a case where the measurement unit is an immunoassay analyzer.
FIG. 40 is a diagram showing an example of a flow of a process performed by a sample preparator.
FIG. 41 is a diagram showing a configuration example of an interface.
FIG. 42 is a flowchart showing an example of the flow of the process performed by an interface of the specimen measurement apparatus.
FIG. 43 is a diagram showing a configuration example of an interface of a data management system.
FIG. 44 is a diagram showing an example of a data structure of an HTTP request body when lot information of quality control is updated.
FIG. 45 is a diagram showing examples of a request for information regarding the specimen measurement apparatus and a response to the request.
FIG. 46 is a diagram showing examples of a request for information regarding specimen measurement and a response to the request.
FIG. 47 is a diagram showing examples of a request for information regarding maintenance of the specimen measurement apparatus and a response to the request.
FIG. 48 is a diagram showing examples of a request regarding an operation of the specimen measurement apparatus.
FIG. 49 is a diagram showing a configuration example of a PUSH notification from the specimen measurement apparatus to the data management system.
FIG. 50 is a diagram showing examples of events and examples of information corresponding to the events (information to serve as the target of PUSH notification).
FIG. 51 is a diagram showing a configuration example of an application.
FIG. 52 is a diagram showing a configuration example in a case where the application is a reagent management application.
FIG. 53 is a diagram showing an example of a GUI that d is plays facilities on a map.
FIG. 54 is a diagram showing an example of a GUI that provides information concerning reagent management.
FIG. 55 is a diagram showing an example of a GUI that provides information concerning reagent management.
FIG. 56 is a diagram showing a configuration example of providing the function of the application as a Web service.
FIG. 57 is a diagram showing another configuration example of providing the function of the application as a Web service.
FIG. 58 is a diagram showing still another configuration example of providing the function of the application as a Web service.
FIG. 59 is a diagram showing a configuration example of providing the function of the application.
FIG. 60 is a diagram showing a configuration example of providing the application in a secure communication environment.
FIG. 61 is a diagram showing a configuration example of providing the application by using MDM or MAM.
FIG. 62 is a diagram showing an example of a data structure in a case where a database of an MDM/MAM system is a relational database.

### DETAILED DESCRIPTION

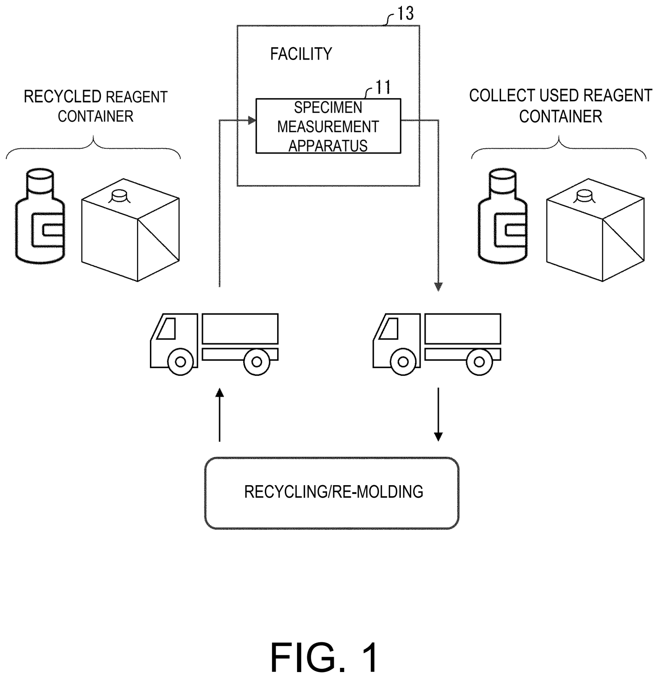

[First Embodiment] In the present embodiment, as shown in the example of FIG. 1, a container that accommodates a reagent used for a measurement on a specimen by the specimen measurement apparatus 11 is collected from a facility 13 where the specimen measurement apparatus 11 is installed. The collected reagent container is recycled, and a recycled reagent container is used by the specimen measurement apparatus 11. For example, the collected reagent container is once destroyed and made into pellets. The reagent container as a recycled product is re-molded from the pellets. The re-molded reagent container is reused as the recycled product.

The amount of recycled reagent containers consumed in the facility 13 where the specimen measurement apparatus 11 is installed is important as an index indicating whether the facility 13, for example a medical institution, has contributed to the reduction of environmental load. In the present embodiment, as described later, it is possible to grasp the recycled amount of the reagent container based on the number of replacements of the reagent container by the specimen measurement apparatus 11. That is, the specimen measurement system 1 in which the specimen measurement apparatus 11 is used automatically grasps the recycled amount based on the number of replacements of the reagent container. By automating the grasping of the recycled amount based on the number of replacements of the reagent container, it becomes possible to reduce the workload of the operator required for managing the number of replacements and the recycled amount.

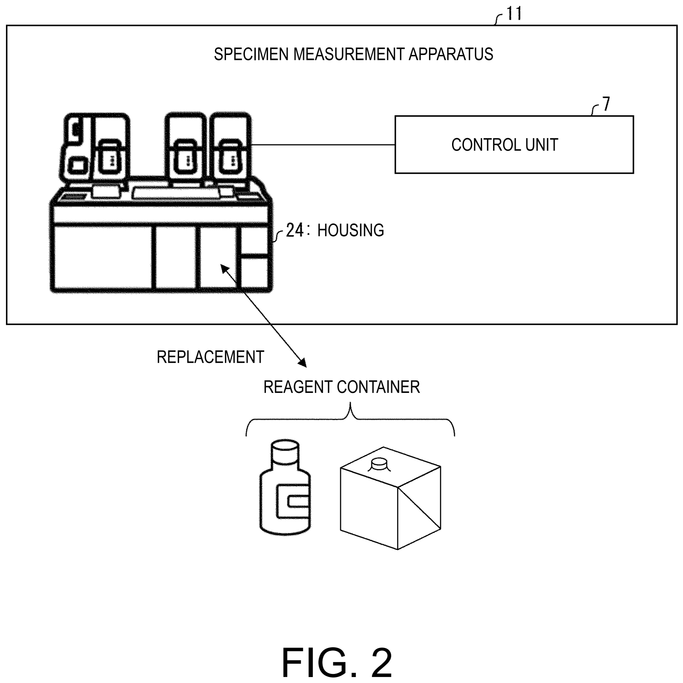

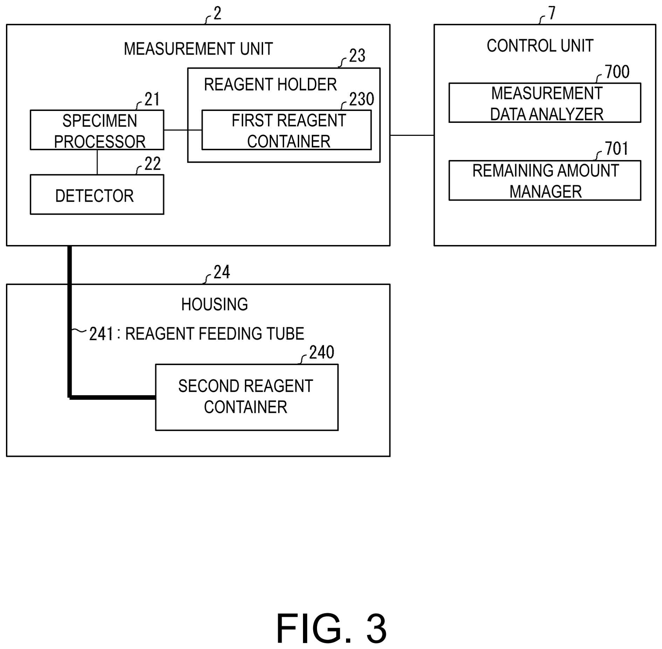

An example of the specimen measurement apparatus 11 of the present embodiment is shown in FIG. 2 and FIG. 3.

As illustrated in FIG. 2, the specimen measurement apparatus 11 includes a measurement unit 2, a control unit 7, and a housing 24. The housing 24 can accommodate a reagent container. For example, a used reagent container is removed from the housing 24 and replaced with a new reagent container. The used reagent container removed from the housing 24 is collected for recycling. For example, a manufacturer of the reagent or a contractor entrusted by the manufacturer of the reagent collects the used reagent container. The collected reagent container is provided to, for example, the manufacturer that manufactures the reagent container as a recycled product. The manufacturer, for example, destroys the collected reagent container and makes into pellets. The manufacturer produces the reagent container as the recycled product from, for example, the pellets.

FIG. 3 shows a configuration example of the specimen measurement apparatus 11.

The measurement unit 2 includes a specimen processor 21, a detector 22, a reagent holder 23, and a first reagent container 230 arranged in the reagent holder 23. The specimen processor 21, for example, prepares a measurement sample by mixing the first reagent accommodated in the first reagent container 230 and the specimen. The specimen is, for example, aspirated by an aspiration tube from a specimen container and provided to the specimen processor 21. The prepared measurement sample is supplied to the detector 22. The detector 22 measures the analyte contained in the measurement sample. The reagent holder 23 may be configured to hold a plurality of types of first reagent containers 230. For example, a plurality of types of first reagent containers 230 are arranged in the reagent holder 23 according to a plurality of types of measurement items that can be measured by the specimen measurement apparatus 11.

A second reagent container 240 is arranged in the housing 24. A second reagent accommodated in the second reagent container 240 is supplied to the measurement unit 2 via a reagent feeding tube 241. The second reagent accommodated in the second reagent container 240 is used for performing at least one of, for example, (i) washing of a flow path of the measurement unit, (ii) dilution of the specimen, (iii) preparation of the measurement sample, and (iv) interrogation of the analyte of the measurement sample by the detector. The use of the second reagent is not limited to the above (i) to (iv). The second reagent may be shared for a plurality of measurement operations each corresponding to a plurality of types of first reagent containers 230, for example.

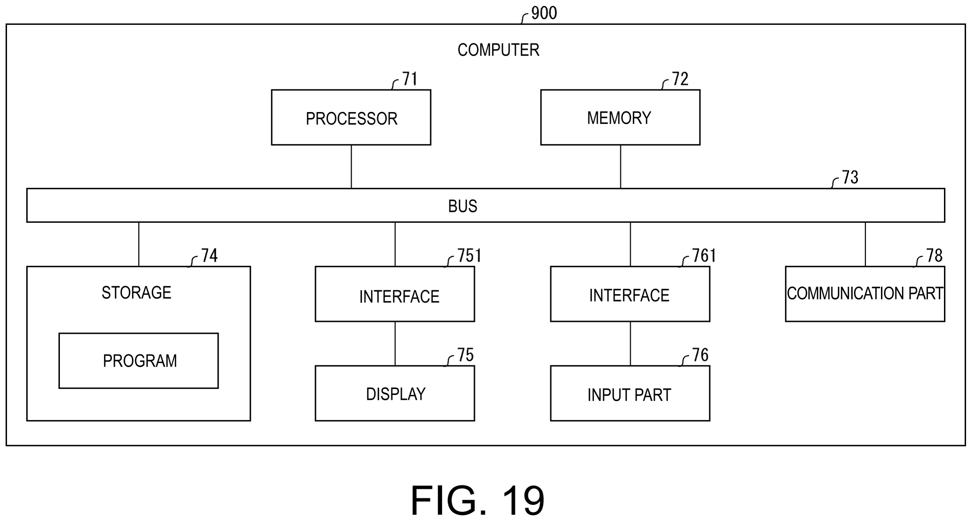

The control unit 7 is configured by, for example, one or a plurality of computers. The computer has a configuration similar to the computer 900 shown in FIG. 19, for example. The control unit 7 includes a measurement data analyzer 700 and a remaining amount manager 701. The measurement data analyzer 700 and the remaining amount manager 701 are functional blocks implemented by, for example, a processor 71 of the computer 900 as the control unit 7 loading and executing a program read from a storage 74 into a memory 72. The measurement data analyzer 700, for example, analyzes measurement data acquired by the detector 22 interrogating the measurement sample and generates a measurement result. The remaining amount manager 701, for example, manages the remaining amount of the second reagent container 240. The remaining amount manager 701 may manage the remaining amount of the first reagent container 230. The remaining amount of the reagent managed by the remaining amount manager 701 is used for managing the number of replacements of the second reagent container, for example. For example, the second reagent container is estimated to have been replaced in response to the remaining amount of the second reagent container becoming equal to or less than a predetermined remaining amount (e.g., an amount at which the second reagent is considered to be substantially absent in the container, a minimum required amount for the operation of the measurement unit 2, or the like). When the second reagent container is estimated to have been replaced, the number of replacements is incremented.

The second reagent container (used reagent container) removed from the housing 24 due to replacement is disposed at a predetermined disposal location by an operator of the facility 13, for example. A contractor that collects the reagent container, for example, collects the reagent container placed in the predetermined disposal location.

The number of reagent containers recycled by the facility 13 is estimated from the number of replacements of the reagent container. For example, as long as the facility 13 follows an operation rule by which the facility 13 is required to dispose the used reagent container removed from the housing 24 at a predetermined disposal location for recycling, the number of replacements of the reagent container and the number of reagent containers provided for recycling by the facility 13 can be regarded as substantially the same number. Management of the number of replacements of the reagent can be automated by a function that monitors the reagent remaining amount by the specimen measurement apparatus 11. By estimating the number of recycled reagent containers from the number of replacements of the reagent container, the load on the operator of the facility 13 for managing the number of recycled reagent containers can be reduced, for example. By estimating the number of recycled reagent containers from the number of replacements of the reagent container, the load on the recycling contractor for managing the number of collected reagent containers can be reduced, for example. The method for estimating the number of recycled reagent containers is not limited, and the number may be estimated based on a predetermined rule, or may be estimated using statistical processing or artificial intelligence or the like. In addition, the method for determining the number of recycled reagent containers is not limited to "estimation", and may be, for example, "determination" or "calculation" instead of "estimation".

The computer 900 as the control unit 7 stores the various data managed by the remaining amount manager 701 in the storage 74.

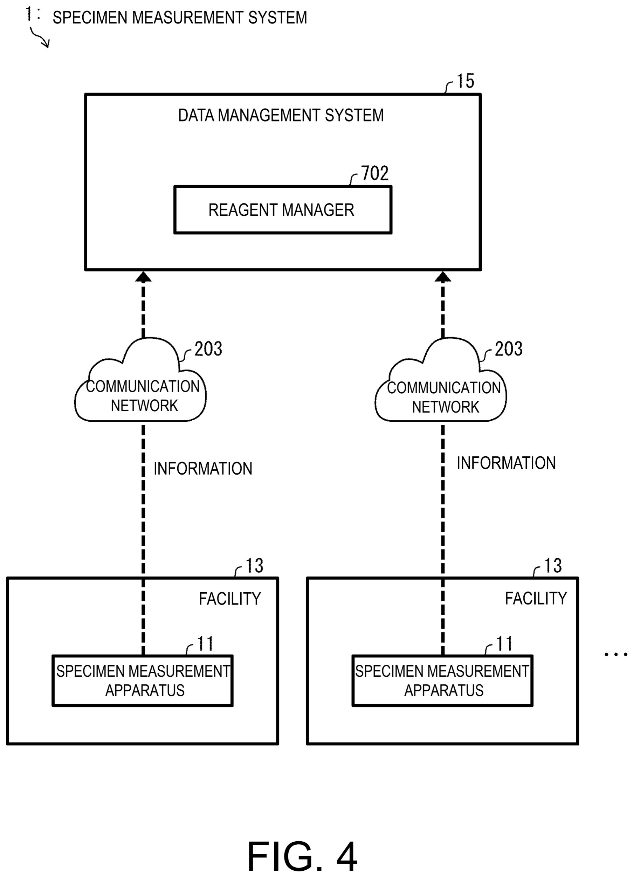

FIG. 4 shows an example of the specimen measurement system 1 of the present embodiment.

The specimen measurement system 1 includes the specimen measurement apparatus 11 and a data management system 15 described above. The specimen measurement apparatus 11 is installed in the facility 13. The specimen measurement apparatus 11 transmits information about the reagent to the data management system 15 via a communication network 203, for example. The communication network 203 is, for example, the Internet. For example, the remaining amount manager 701 of the specimen measurement apparatus 11 transmits remaining amount information indicating the remaining amount of the reagent container to the data management system 15. The remaining amount manager 701 may transmit an apparatus ID for identifying the specimen measurement apparatus 11 and a facility ID for identifying the facility 13 to the data management system 15 in addition to the remaining amount information. By transmitting the remaining amount information and the facility ID to the data management system 15, the data management system 15 can manage the remaining amount of the reagent container for each facility 13. By transmitting the remaining amount information and the apparatus ID to the data management system 15, the data management system 15 can manage the remaining amount of the reagent container for each specimen measurement apparatus 11. The remaining amount manager 701 may transmit the remaining amount information for each reagent container, for example, in the configuration where the specimen measurement apparatus 11 includes a plurality of reagent containers. The remaining amount information for each reagent container is transmitted with a container ID for identifying the reagent container, for example. By transmitting the remaining amount information and the container ID to the data management system 15, the data management system 15 can manage the remaining amount for each reagent container.

The data management system 15 is configured by, for example, one or a plurality of computers. The computer has a configuration similar to the computer 900 shown in FIG. 19, for example. The data management system 15 may include various server apparatuses such as a Web server, a cloud server, and a storage server, for example. The data management system 15 includes a reagent manager 702. The reagent manager 702 is a functional block implemented by, for example, a processor 71 of the computer 900 as the data management system 15 loading and executing a program read from the storage 74 into a memory 72. The reagent manager 702, for example, manages the number of replacements of the reagent container based on the remaining amount information acquired from the specimen measurement apparatus 11. For example, the reagent manager 702 monitors whether or not the remaining amount of the reagent container has become equal to or less than a predetermined remaining amount (e.g., an amount at which the second reagent is considered to be substantially absent in the container, a minimum required amount for the operation of the measurement unit 2, or the like) based on the remaining amount information. The reagent manager 702, for example, increments the number of replacements of the corresponding reagent container in response to the remaining amount becoming equal to or less than the predetermined remaining amount. The reagent manager 702 may, for example, manage the number of replacements of the reagent container for each facility 13 based on the facility ID transmitted from the remaining amount manager 701 of the specimen measurement apparatus 11. The reagent manager 702 may, for example, manage the number of replacements of the reagent container for each specimen measurement apparatus 11 based on the apparatus ID transmitted from the remaining amount manager 701 of the specimen measurement apparatus 11. The reagent manager 702 may, for example, manage the number of replacements for each facility 13 and specimen measurement apparatus 11 based on the facility ID and the apparatus ID transmitted from the remaining amount manager 701 of the specimen measurement apparatus 11.

The reagent manager 702, for example, estimates the number of recycled reagent containers (hereinafter sometimes referred to as a "recycle count") based on the number of replacements. The reagent manager 702 may, for example, estimate the recycle count for each facility 13 based on the facility ID. The reagent manager 702 may, for example, estimate the recycle count for each specimen measurement apparatus 11 based on the apparatus ID.

Various data managed by the reagent manager 702 is stored in the storage 74 of the computer 900 as the data management system 15.

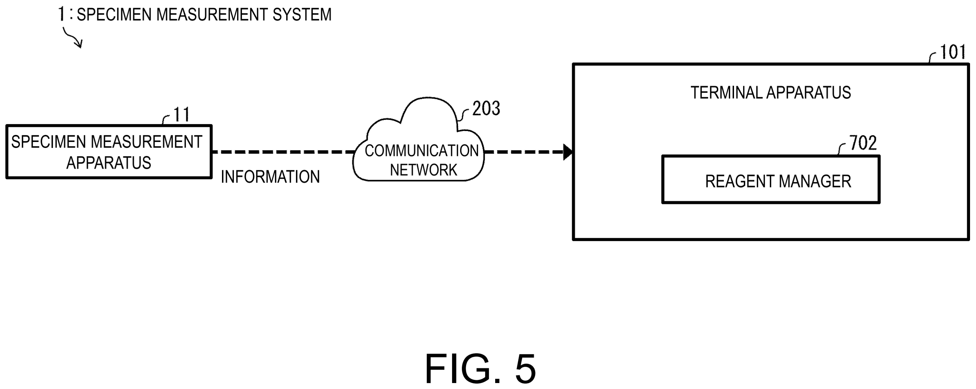

FIG. 5 shows another configuration example of the specimen measurement system 1.

In the example of FIG. 5, the reagent manager 702 is implemented by a terminal apparatus 101. The specimen measurement apparatus 11 transmits remaining amount information to the terminal apparatus 101 via the communication network 203, for example. The terminal apparatus 101 is, for example, a computer used in the facility 13 where the specimen measurement apparatus 11 is installed, and specifically, a PC (personal computer), a tablet, a smartphone, or the like. The terminal apparatus 101 has a configuration similar to the computer 900 shown in FIG. 19, for example. In the situation where the terminal apparatus 101 is used in the facility 13 for example, the specimen measurement apparatus 11 and the terminal apparatus 101 are connected via the communication network 203 as an intranet. The terminal apparatus 101 may be used outside the facility 13, for example. In the situation where the terminal apparatus 101 is used outside the facility 13 for example, the specimen measurement apparatus 11 and the terminal apparatus 101 are connected via the communication network 203 as the Internet. The remaining amount manager 701 of the specimen measurement apparatus 11 transmits remaining amount information indicating the remaining amount of the reagent container to the terminal apparatus 101. The remaining amount manager 701 may transmit an apparatus ID for identifying the specimen measurement apparatus 11 and a facility ID for identifying the facility 13 to the terminal apparatus 101 in addition to the remaining amount information. By transmitting the remaining amount information and the facility ID to the terminal apparatus 101, the terminal apparatus 101 can manage the remaining amount of the reagent container for each facility 13. By transmitting the remaining amount information and the apparatus ID to the terminal apparatus 101, the terminal apparatus 101 can manage the remaining amount of the reagent container for each specimen measurement apparatus 11. The remaining amount manager 701 transmits the remaining amount information for each reagent container, for example, in the configuration in which the specimen measurement apparatus 11 includes a plurality of reagent containers. The remaining amount information for each reagent container is transmitted with a container ID for identifying the reagent container, for example. By transmitting the remaining amount information and the container ID to the terminal apparatus 101, the terminal apparatus 101 can manage the remaining amount for each reagent container.

The reagent manager 702 of the terminal apparatus 101 has the same functions as the reagent manager 702 of the data management system 15 described above. The reagent manager 702 of the terminal apparatus 101 is a functional block implemented by, for example, the processor 71 of the computer 900 as the terminal apparatus 101 loading and executing a program read from the storage 74 into the memory 72. Various data managed by the reagent manager 702 of the terminal apparatus 101 is stored in the storage 74 of the computer 900 as the terminal apparatus 101.

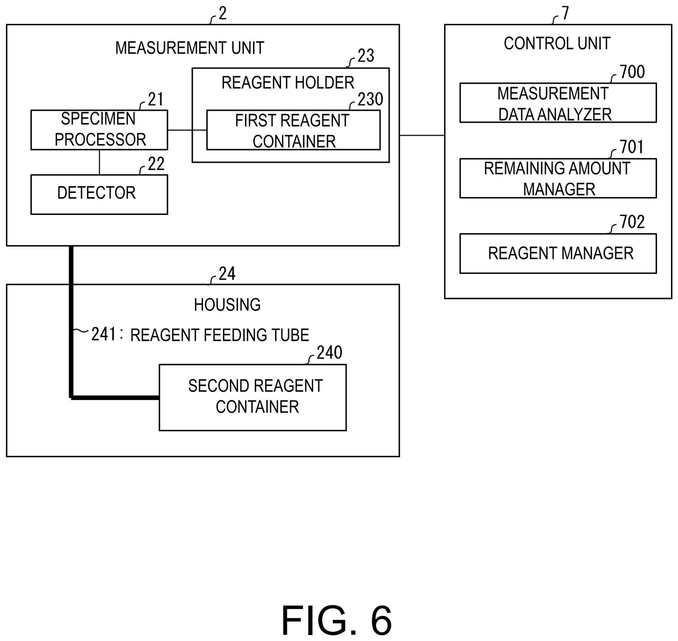

As in the configuration example shown in FIG. 6, the control unit 7 of the specimen measurement apparatus 11 may include the reagent manager 702. The reagent manager 702 of the control unit 7 has the same function as the reagent manager 702 of the data management system 15 described above. The reagent manager 702 of the control unit 7 is a functional block implemented by, for example, the processor 71 of the computer 900 as the control unit 7 loading and executing a program read from the storage 74 into the memory 72. The reagent manager 702 of the control unit 7 manages the number of replacements of the reagent container based on the remaining amount information acquired from the remaining amount manager 701 of the control unit 7. The reagent manager 702 of the control unit 7 estimates the recycle count of the reagent container based on the number of replacements of the reagent container. Various data managed by the reagent manager 702 of the control unit 7 is stored in the storage 74 of the computer 900 as the control unit 7.

The reagent manager 702 of the control unit 7 may, for example, cooperate with the reagent manager 702 of the data management system 15 and the reagent manager 702 of the terminal apparatus 101. The reagent manager 702 of the control unit 7 transmits the number of replacements and/or the recycle count of the reagent to the terminal apparatus 101 and/or the data management system 15, for example. The reagent manager 702 of the control unit 7 may, for example, transmit at least one of the above-described container ID, facility ID, and apparatus ID, and the number of replacements and/or the recycle count to the terminal apparatus 101 and/or the data management system 15. By the reagent manager 702 of the control unit 7 cooperating with the terminal apparatus 101 and/or the data management system 15, the number of replacements and/or the recycle count can be commonly managed. For example, the reagent manager 702 of the control unit 7 manages the number of replacements and/or the recycle count at the specimen measurement apparatus 11, and the reagent manager 702 of the data management system 15 manages the number of replacements and/or the recycle count of each of the plurality of facilities 13.

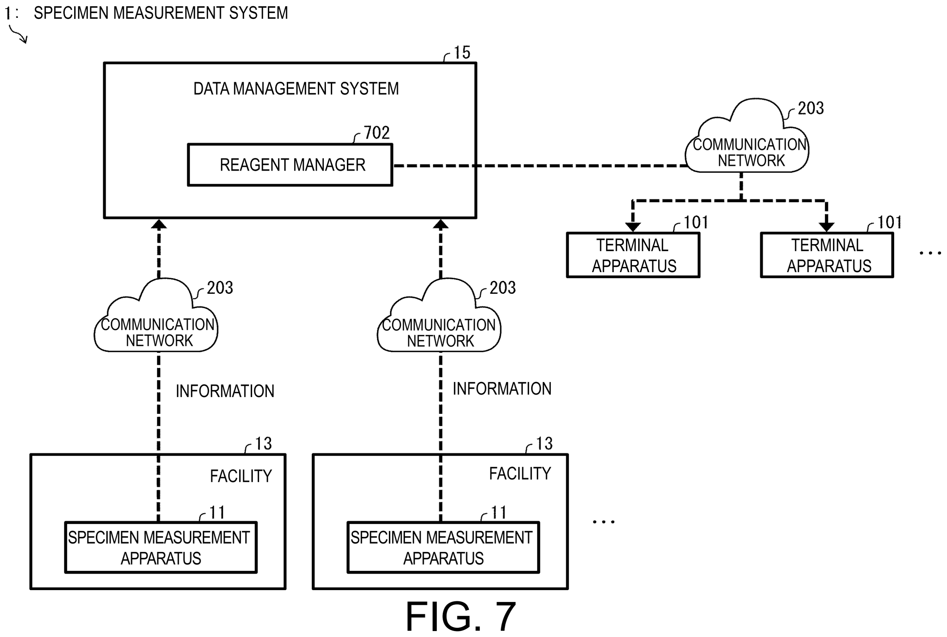

FIG. 7 shows another configuration example of the specimen measurement system 1.

The reagent manager 702 of the data management system 15 transmits the number of replacements for each facility 13 to at least one terminal apparatus 101, for example. The reagent manager 702 may, for example, manage the correspondence between the facility 13 and the terminal apparatus 101. The terminal apparatus 101 is, for example, the terminal apparatus 101 of the contractor that collects used reagent containers in an assumption that the contractor is preassigned the facility 13 from which to collect the reagent container. In such a case, the reagent manager 702, for example, manages the correspondence between the contractor's terminal apparatus 101 and the facility 13 assigned to the contractor. The reagent manager 702 transmits, to the terminal apparatus 101, the number of replacements at the facility 13 corresponding to said terminal apparatus 101, for example, based on the correspondence between the terminal apparatus 101 and the facility 13. By transmitting the number of replacements of the corresponding facility 13 to the terminal apparatus 101, the contractor using the terminal apparatus 101 can grasp the accumulation status of the used reagent container at the facility 13 for which the contractor is responsible. The contractor can determine the necessity of collection of the reagent container based on the accumulation status of the used reagent container (for example, the contractor visits the facility 13 for collection if the number of accumulated reagent containers exceeds a predetermined number). For example, the reagent manager 702 may transmit the number of replacements in each of predetermined periods of time (e.g., daily, every three days, weekly, or the like) at the facility 13 to the terminal apparatus 101 instead of cumulated number of replacements. By transmitting the number of replacements for respective periods to the terminal apparatus 101, the contractor can understand the latest accumulation status of the used reagent container at the facility 13.

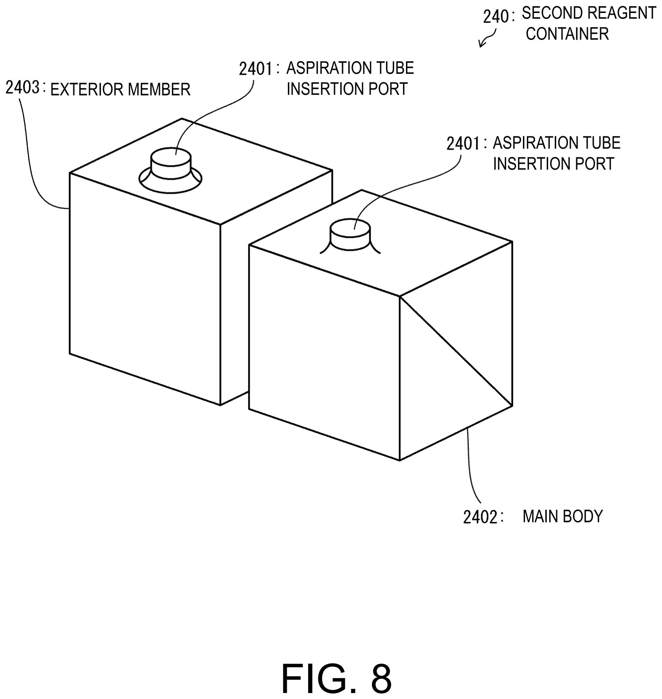

FIG. 8 shows an example of a reagent container to be recycled. FIG. 8 shows an example of the second reagent container 240 as a container to be recycled.

The second reagent container 240 is manufactured by molding a recyclable material, for example. For example, the second reagent container 240 is a mono-material container. The second reagent container 240 includes, for example, an aspiration tube insertion port 2401, a main body 2402, and an exterior member 2403. For example, the main body 2402 may be configured as a mono-material container, and the main body 2402 may be the material to be recycled. The aspiration tube insertion port 2401 is a member allowing insertion of an aspiration tube into the second reagent container 240 installed in the housing 24, the aspiration tube used for aspirating the second reagent and feeding through the reagent feeding tube 241, for example. The main body 2402 may be covered with the exterior member 2403. The exterior member 2403 is made of, for example, cardboard.

The second reagent container 240 is molded of resin, for example. The second reagent container 240 is molded of polyethylene-based resin, for example. For example, the main body 2402 of the second reagent container 240 is molded of polyethylene-based resin. The polyethylene-based resin is, for example, polyethylene terephthalate (PET) or polyethylene naphthalate (PEN). The main body part 2402 of the second reagent container 240 may be molded of plastic, for example.

The first reagent container 230 may be recyclable. For example, the first reagent container 230 may be manufactured by molding a recyclable material. The first reagent container 230 may be a mono-material container, for example. The first reagent container 230 is molded of polyethylene-based resin, for example. The polyethylene-based resin is, for example, polyethylene terephthalate (PET) or polyethylene naphthalate (PEN). The first reagent container 230 may be molded of plastic, for example.

The first reagent placed in the measurement unit 2 is used, for example, to measure a predetermined measurement item. For example, the first reagent contains a substance that specifically binds (e.g., an antibody) to an analyte (i.e., a predetermined measurement item) in the specimen. For example, a labeling substance is attached to the substance that specifically binds to the analyte, and the detector 22 detects the predetermined analyte in the specimen by interrogating the labeling substance. For example, the first reagent contains a dye for staining the analyte corresponding to the measurement item. The detector 22 detects the analyte in the specimen by interrogating fluorescence generated from the dye that stained the analyte in the specimen, for example. For example, a plurality of types of first reagent containers are installed in the measurement unit 2 to measure a plurality of types of measurement items. The plurality of types of first reagent containers may accommodate different first reagents, respectively, for example. For example, the second reagent can be commonly used in different types of measurements with different types of first reagents. For example, the first reagent is used exclusively for the measurement of the corresponding measurement item while the second reagent can be commonly used for the measurements of different measurement items. The first reagent is, for example, exclusively used for the preparation of the measurement sample for measuring the corresponding measurement item.

The second reagent accommodated in the second reagent container 240 is used, for example, for washing of a flow path of the measurement unit 2. For example, the measurement unit 2 has an aspiration tube for aspirating a specimen. The second reagent is, for example, used to wash the aspiration tube every time the aspirated specimen is measured, in order to suppress the carryover of the specimen remaining in the aspiration tube to the measurement of the next specimen. For example, in the measurement unit 2, the measurement sample prepared by mixing the specimen and the first reagent is fed to the detector 22 via a flow path. For example, the flow path through which the measurement sample is fed is washed with the second reagent.

The second reagent is used, for example, for dilution of the specimen aspirated by the aspiration tube from the specimen container in the measurement unit 2. For example, the specimen aspirated by the aspiration tube is discharged into a chamber provided in the specimen processor 21. For example, the second reagent is supplied to the chamber into which the specimen is discharged, and the specimen is diluted.

The second reagent is used for the preparation of the measurement sample, for example. For example, the measurement sample is prepared by mixing the specimen and the second reagent. The measurement sample may be prepared by mixing the specimen, the first reagent, and the second reagent. The second reagent is, for example, a reagent (hemolysis agent) for lysing red blood cells in the specimen in the measurement unit 2 that performs a blood cell count test.

The second reagent is used for measurement (interrogation) of the measurement sample, for example. For example, the detector 22 of the measurement unit 2 that performs a blood cell count test includes a flow cytometer. The second reagent is used, for example, as a sheath fluid in the measurement of the measurement sample by the flow cytometer.

The capacity of the second reagent container 240 is, for example, not less than 2 liters and not more than 25 liters. As described above, the second reagent accommodated in the second reagent container 240 can be shared for a plurality of measurement operations using a plurality of types of first reagents. Therefore, for example, the capacity of the second reagent container 240 is larger than the capacity of the first reagent container 230. The capacity of the first reagent container 230 is, for example, not less than 1 ml and not more than 300 ml.

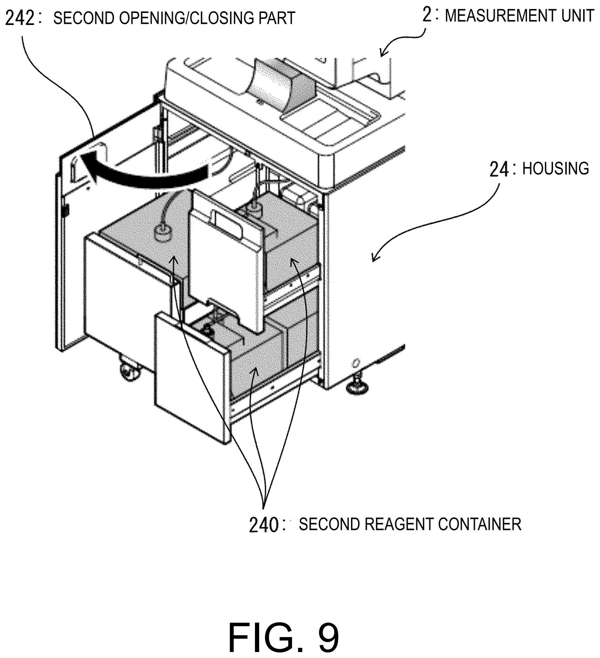

FIG. 9 shows a configuration example of the housing 24.

For example, the measurement unit 2 is arranged on the top surface of the housing 24. The housing 24 includes a second opening/closing part 242. Opening of the second opening/closing part 242 enables to place the second reagent container 240 into the housing 24 and to remove the second reagent container 240 from the housing 24. The second reagent container 240 may be arranged on a drawer provided with the housing 24. An aspiration tube or pipe for supplying the second reagent to the measurement unit 2 is inserted into the aspiration tube insertion port 2401 of the second reagent container 240 arranged in the housing 24. Even when the second opening/closing part 242 is opened, the operation of the specimen measurement apparatus 11 can be continued as long as the second reagent is in a state capable of being supplied to the measurement unit 2.

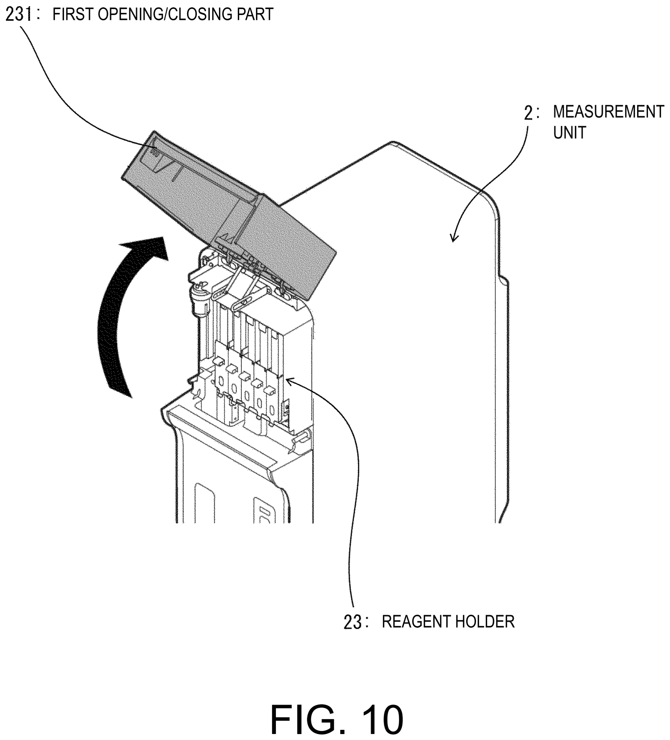

FIG. 10 shows a configuration example of the first opening/closing part 231 of the measurement unit 2.

For example, the first opening/closing part 231 is arranged on the front surface of the measurement unit 2, in other words, the surface accessible by an operator of the laboratory. The measurement unit 2 is placed on the housing 24. That is, the first opening/closing part 231 is arranged above the second opening/closing part 242. By opening the first opening/closing part 231, the operator can access the reagent holder 23 for placing the first reagent container 230. In response to the first opening/closing part 231 being opened, the operation of the measurement unit 2 may be stopped, for example.

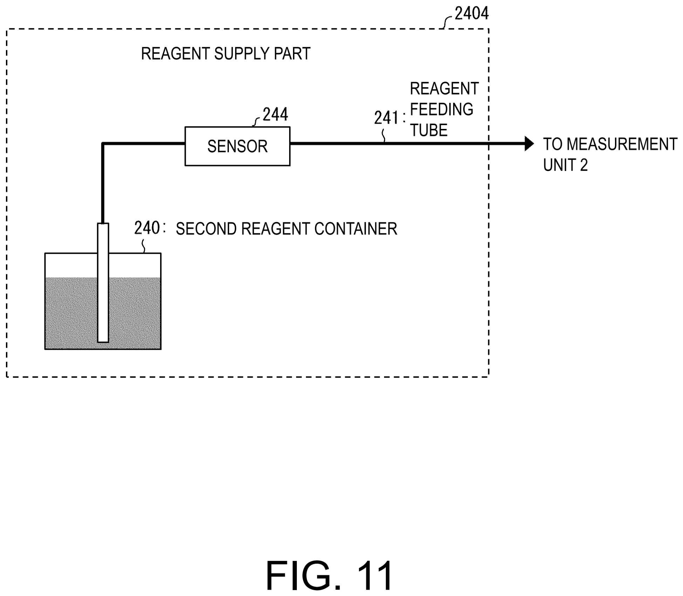

FIG. 11 shows a configuration example of a reagent supply unit 2404 for supplying the second reagent from the housing 24 to the measurement unit 2.

The reagent supply unit 2404 includes the second reagent container 240, a sensor 244, and a reagent feeding tube 241. The second reagent accommodated in the second reagent container 240 is fed to the measurement unit 2 via the reagent feeding tube 241 by applying negative pressure from a pneumatic source, for example. The sensor 244 can detect whether or not the second reagent substantially remains in the second reagent container 240. Whether or not the second reagent substantially remains in the second reagent container 240 means whether or not the second reagent container 240 contains a remaining amount sufficient for the second reagent to be aspirated from the second reagent container 240 into the reagent feeding tube 241. For example, even if the second reagent remains in the second reagent container 240, if the amount is not sufficient for the second reagent to be aspirated by the aspiration tube, it is determined that the second reagent substantially does not remain. The sensor 244 is, for example, a sensor to detect or monitor bubbles. The sensor 244 determines the presence or absence of the second reagent fed in the reagent feeding tube 241 by detecting/monitoring bubbles in the reagent feeding tube 241, for example. For example, if an amount of the second reagent sufficient for aspiration by the aspiration tube does not remain in the second reagent container 240, the aspiration tube aspirates air, and thus bubbles flow into the reagent feeding tube 241. The sensor 244 detects such bubbles. For example, the remaining amount manager 701 determines that the second reagent container 240 has become substantially empty based on the sensor 244 detecting bubbles.

The sensor 244 may be provided with the aspiration tube inserted into the second reagent container 240. For example, the sensor 244 as a liquid level sensor may be provided in the aspiration tube. The sensor 244 includes, for example, a plurality of electrodes having different lengths. For example, in the configuration having two electrodes, the length of the shorter one of the two electrodes is set to correspond to the liquid level to be detected (the liquid level at which the remaining amount of the second reagent can be determined as being depleted, in other words). With this configuration, upon the liquid level in the second reagent container 240 becoming lower than the shorter electrode (which means that the liquid level goes down to such a level that no liquid is present between the two electrodes), electrical conduction between the two electrodes is interrupted. When electrical conduction between the electrodes is interrupted, the sensor 244 detects that the liquid level has become equal to or less than a predetermined height, and thereby determines that the remaining amount in the second reagent container 240 has been depleted.

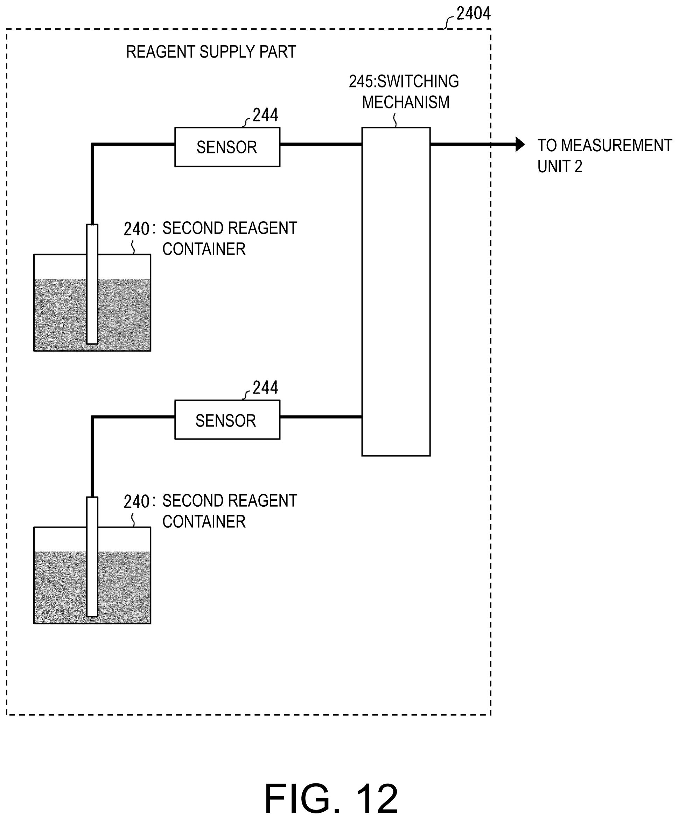

FIG. 12 shows another configuration example of the reagent supply unit 2404.

The reagent supply unit 2404 includes, for example, a plurality of second reagent containers 240, a sensor 244, and a switching mechanism 245. The reagent supply unit 2404 can supply the second reagent to the measurement unit 2 from another second reagent container 240, even while one of the plurality of second reagent containers 240 is being replaced, for example. Therefore, the measurement unit 2 can continue the measurement operation even if the used second reagent container 240 is being replaced. The switching mechanism 245 switches the supply source from which the second reagent is supplied to the measurement unit 2, for example. For example, the switching mechanism 245 switches the supply source of the second reagent to another second reagent container 240 in response to the remaining amount of the plurality of second reagent containers 240 being depleted. With the function of the switching mechanism 245, even while the used second reagent container 240 is removed from the housing 24 for recycling, the supply of the second reagent to the measurement unit 2 can be continued without stopping the operation of the specimen measurement apparatus 11.

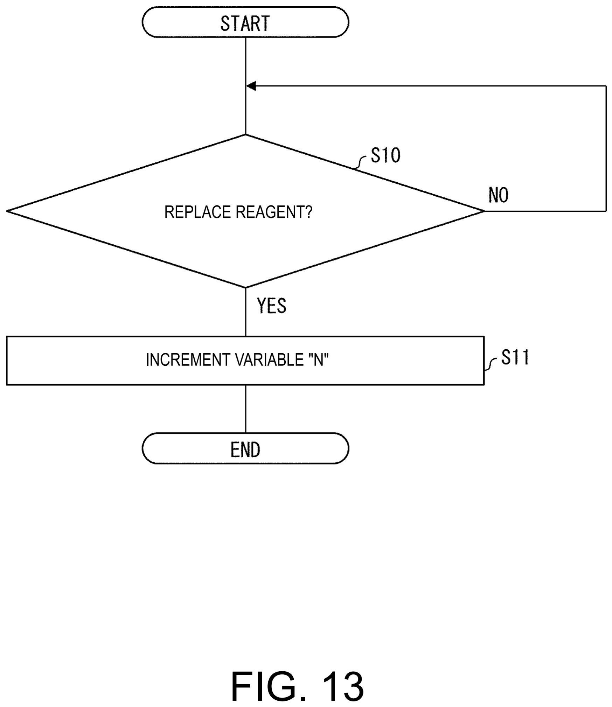

FIG. 13 shows an example of operation in which the remaining amount manager 701 manages the number of replacements of the reagent.

The remaining amount manager 701 monitors whether or not the remaining amount of the reagent in the reagent container has become equal to or less than a predetermined amount (S10). For example, the remaining amount manager 701 monitors whether or not the detector 244 detects that the remaining amount in the second reagent container has become equal to or less than a predetermined amount (i.e., the remaining amount is substantially zero). In response to the sensor 244 detecting that the remaining amount in the second reagent container has become equal to or less than the predetermined amount, the remaining amount manager 701 determines that the reagent container has been replaced. For example, the remaining amount manager 701 manages the number of replacements by a variable ("N"). The remaining amount manager 701, for example, increments the variable N in response to the second reagent container having no remaining amount (S11). The remaining amount manager 701, for example, may increment the variable N in response to the used reagent container being removed and a new reagent container being installed. For example, in response to the installation of a new second reagent container 240, the second reagent is aspirated from the installed second reagent container 240 to confirm that the container has been properly installed. For example, in response to the aspiration of the second reagent, the sensor 244 monitors the presence or absence of air bubbles in the reagent feeding tube 241. Upon the sensor 244 determining that the reagent feeding tube 241 is filled with the second reagent without the air bubble being detected, the remaining amount manager 701, for example, determines that the second reagent container 240 has been replaced, and increments the variable N.

The remaining amount manager 701, for example, may manage the number of replacements of the reagent containers in the specimen measurement apparatus 11 for each predetermined period (e.g., weekly, monthly, every three months, annually, etc.). The remaining amount manager 701, for example, may manage the number of replacements for each apparatus in a configuration where a plurality of specimen measurement apparatuses 11 are installed in the facility 13. The remaining amount manager 701, for example, manages the total value of the number of replacements of each apparatus as the number of replacements of the facility 13. The remaining amount manager 701, for example, may manage the number of replacements for each type of second reagent container in a configuration where a plurality of types of second reagent containers to be recycled are installed in the specimen measurement apparatus 11. The remaining amount manager 701, for example, manages the total number of replacements for each type of second reagent container as the number of replacements of the specimen measurement apparatus 11. The remaining amount manager 701, for example, manages the number of replacements of each of the first reagent container and the second reagent container when the first reagent container is a target for recycling. The remaining amount manager 701, for example, manages the total value of the number of replacements of the first reagent container and the number of replacements of the second reagent container as the number of replacements of the specimen measurement apparatus 11.

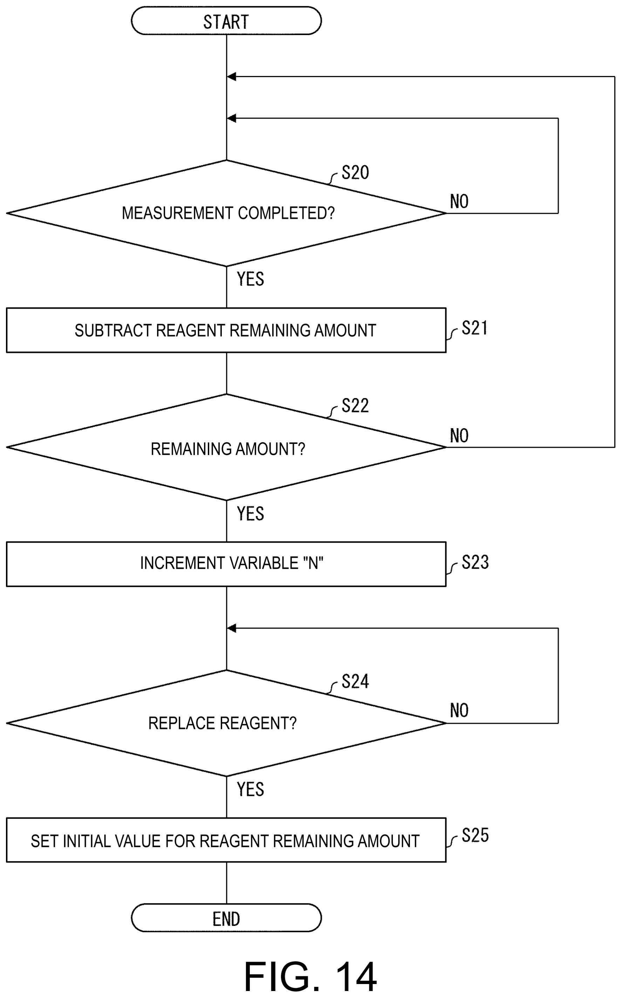

FIG. 14 shows an example of operation in which the remaining amount manager 701 manages the number of replacements of the reagent containers. In the example of FIG. 14, the remaining amount manager 701 manages the remaining amount in the reagent container based on the number of measurements.

The remaining amount manager 701 monitors whether or not the measurement operation of the specimen has been completed (S20). For example, the remaining amount manager 701 monitors the measurement operation by the specimen measurement apparatus 11 for each specimen. The remaining amount manager 701, for example, determines that the measurement operation of the specimen has been completed in response to the measurement result of the specimen having been acquired.

The remaining amount manager 701 manages the remaining test count of the reagent container in response to the completion of the specimen measurement (S21). For example, the remaining amount manager 701 manages the remaining test count of at least one of the first reagent container and the second reagent container. The remaining amount manager 701, for example, manages the remaining amount information of the reagent for each reagent container to be managed. For example, the initial value of the remaining amount information is determined based on the capacity of the reagent container. For example, in a configuration where the capacity of the reagent container is 20 liters, the initial value of the remaining amount information is 20 liters. The remaining amount manager 701, for example, subtracts an amount of consumption of the reagent (first reagent and/or second reagent) used in the measurement operation from the remaining amount information in response to the completion of the measurement operation. The remaining amount manager 701 is configured or programmed with the consumption amount of the reagent (first reagent and/or second reagent) to be used for each type of measurement operation. The remaining amount manager 701, for example, determines the consumption amount to be subtracted from the remaining amount information according to the type of the completed measurement operation. For example, in a setting where the consumption amount of the second reagent by the completed measurement operation is 50 ml, the remaining amount manager 701 subtracts 50 ml from the remaining amount information.

The remaining amount manager 701 increases the number of replacements of the reagent container in response to the reagent container having no remaining amount (in the case of "YES" in S22). The remaining amount manager 701, for example, increments the variable N corresponding to the number of replacements of the reagent container in response to the reagent container having no remaining amount (S23). Alternatively, the process of S23 may be executed upon the determination becomes "YES" in S24 described later.

The remaining amount manager 701 resets the remaining amount information to the initial value in response to the reagent container being replaced (in the case of "YES" in S24) (S25).

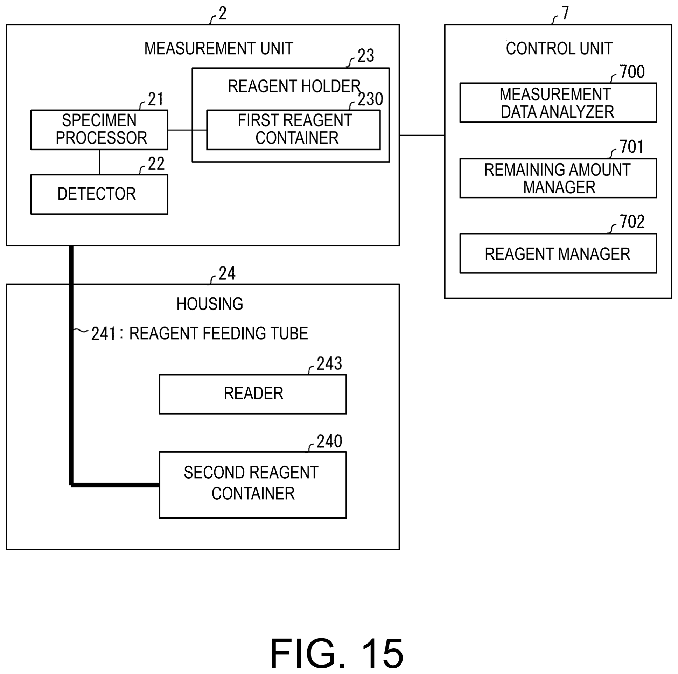

FIG. 15 shows another configuration example of the specimen measurement apparatus 11. In the example of FIG. 15, the specimen measurement apparatus 11 is capable of reading the information of the label 2430 attached to the reagent container by the reader 243.

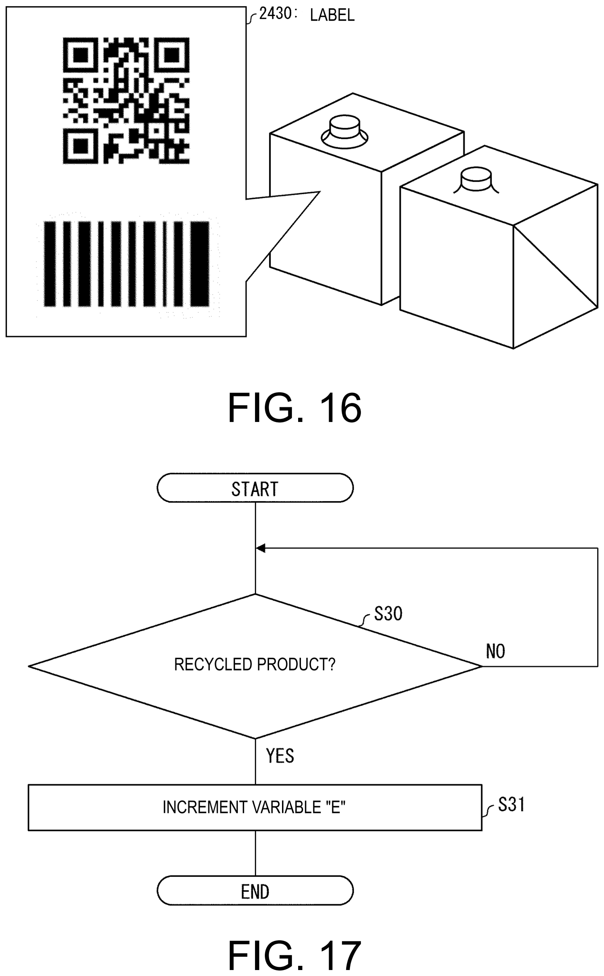

As shown in the example of FIG. 15, for example, the reader 243 may be provided in the housing 24. The reader 243 may be provided in the measurement unit 2 or may be provided in the control unit 7. The reader 243 is capable of reading the information of the label 2430 (e.g., bar code, QR code (registered trademark)) exemplified in FIG. 16. The label 2430 includes, for example, information indicating whether or not the reagent container is a recycled product. The label 2430 may include other information (e.g., lot information, date of manufacture, etc.).

FIG. 17 shows an example of operation in which the reagent manager 702 of the control unit 7 manages whether or not the reagent container used by the specimen measurement apparatus 11 is a recycled product.

The reagent manager 702, for example, determines whether or not the reagent container is a recycled product based on the information read by the reader 243 (S30). The reagent manager 702, for example, determines the second reagent container as being a recycled product or not based on the information read by the reader 243 in the course of replacement of the second reagent container.

The reagent manager 702 manages the number of times the recycled reagent container has been used (S31). For example, the reagent manager 702 manages the number of times the recycled product has been used based on a variable ("E") corresponding to the number of times the recycled reagent container has been used. The reagent manager 702, for example, increments the variable E when it is determined in S30 that the second reagent container installed in the specimen measurement apparatus 11 is a recycled product (in the case of "YES").

The reagent manager 702 may transmit the number of times of having used the recycled product to the data management system 15. The reagent manager 702 of the data management system 15, for example, manages the number of times of having used the recycled product for each facility 13.

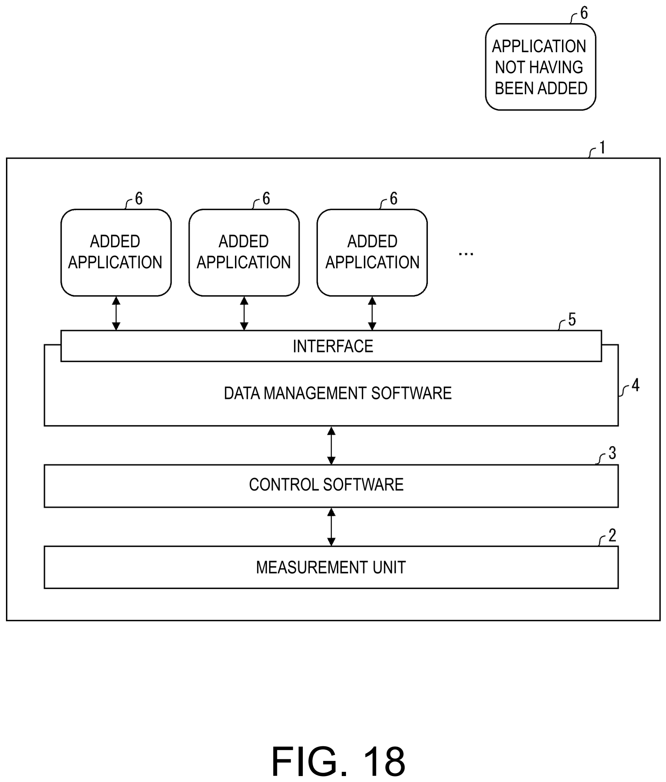

[Second Embodiment] The specimen measurement system 1 according to the present embodiment, as an example as shown in FIG. 18, includes the measurement unit 2, the control software 3, the data management software 4, and the interface 5 as components. The measurement unit 2, for example, measures a specimen and acquires measurement data. The control software 3 and the data management software 4 may be integrally formed. The specimen measurement system 1 is, for example, the specimen measurement apparatus including the measurement unit 2, the control software 3, the data management software 4, and the interface 5.

The specimen measurement system 1 is, for example, a system including a specimen measurement apparatus including the measurement unit 2, the control software 3, the data management software 4, and the interface 5, and other apparatuses or other piece of software.

The measurement unit 2 measures a specimen allocated to the measurement unit 2 and acquires data corresponding to a measurement result. An example of the measurement unit 2 is a unit that performs measurement for blood cell analysis. The measurement unit 2 operates based on control by the control software 3. The measurement unit 2 provides the acquired data to the data management software 4 via the control software 3.

The control software 3 controls the operation of the measurement unit 2 in cooperation with the data management software 4. The control software 3 commands the measurement unit 2 to execute a measurement operation corresponding to a measurement order for the specimen allocated to the measurement unit 2. The control software 3 analyzes the data acquired by the measurement unit 2 and acquires measurement data (i.e,, the measurement result).

The data management software 4 manages data regarding the measurement unit 2. The data management software 4 has a function (e.g., UI: User interface) of providing the measurement result acquired by the control software 3 to an operator. The data management software 4 has a function related to apparatus operations such as registration and acquisition of a measurement order, and a function of providing information related to the measurement order to the control software 3. The data management software 4 may manage the data based on a classification according to a type of data regarding the measurement unit 2. For example, the data management software 4 may classify and manage the data according to the type of the cooperating measurement unit 2. The type of the measurement unit 2 is, for example, a unit that performs measurement for blood cell analysis. The control software 3 and the data management software 4 may be mutually independent software. Software having a function equivalent to that of the control software 3 and a function equivalent to that of the data management software 4 may perform control of the measurement unit 2 and management of data regarding the measurement unit 2.

The measurement unit 2, the control software 3, and the data management software 4 described above may, for example, require certification by a certifying institution as medical device. A medical device requiring certification is, for example, an in vitro diagnostic medical device. In this case, the measurement unit 2, the control software 3, and the data management software 4 provide functions corresponding to the intended use of the certified medical device, for example. The intended use of the medical device is to measure a specimen and provide a measurement result, for example. In the case where the medical device is a blood cell analyzer, the intended use is to measure a blood specimen and provide a measurement result concerning blood cells (e.g., red blood cell count, white blood cell count, white blood cell differentiation, and the like) ,for example,.

The application software 6 (hereinafter simply referred to as "application") is software independent of the control software 3 and the data management software 4. The application 6, for example, has a function having been incorporated in software of a prior art regarding the apparatus for measuring the specimen. That is, the application 6 has a function separated from the software of the prior art regarding the apparatus for measuring a specimen. The application 6 may have a new function that was not incorporated into the prior art software regarding the apparatus for measuring the specimen, for example. The application 6, for example, is equipped with the functions of the above-described remaining amount manager 701 and reagent manager 702, and can provide a function for managing the number of replacements of the reagent container, the recycling amount of the reagent container, and the amount of use of the reagent container that is a recycled product. The application 6 provides a function different from the function corresponding to the "Intended Use" of the medical device, for example. Examples of the application 6 are software for healthcare uses other than medical care (hereinafter referred to as "non-medical device software") and software not for healthcare uses (hereinafter referred to as "non-health software"). The non-medical device software and the non-health software are software that does not require certification as that requires limited certification as a medical device. The application 6 may be an application that requires certification as a medical device.

The application 6 is capable of being added to the specimen measurement system 1. In other words, the application 6 is capable of being add-on to the specimen measurement system 1. The application 6 added to the specimen measurement system 1 serves as a component of the specimen measurement system 1. The application 6 added to the specimen measurement system 1 provides, for example, a function of utilizing information (e.g., data regarding the measurement unit 2)managed by the data management software 4, and a function of utilizing the function of the data management software 4. For example, the functions provided by the application 6 are (i) a function that the data management software 4 does not have, and (ii) a function that expands an existing function of the data management software 4. The functions provided by the application 6 are new functions different from the function corresponding to the intended use as the medical device, for example. The application 6 added to the specimen measurement system 1 may provide a function for expanding the specimen measurement system 1. In other words, the application 6 added to the specimen measurement system 1 may be said to provide a function that complements the data management software 4.

Since the application 6 is separated/isolated from the data management software 4 and the control software 3, the application 6 may be easily added to the specimen measurement system 1 without modifying the data management software 4 and the control software 3. Moreover, for example, if the application 6 is non-medical device software or non-health software that does not require certification as a medical device, it may not be necessary to acquire the certification by the certification institution when the application 6 is added to the specimen measurement system 1 . Similarly, when deleting the application 6 from the specimen measurement system 1, there is no need to modify the data management software 4 and the control software 3.

The application 6 separated/isolated from the data management software 4 is capable of cooperating with the data management software 4 via the interface 5. The interface 5 is, for example, a software interface. The interface 5 is, for example, an API (Application Programming Interface). For example, the interface 5 allows the application 6 to utilize information (for example, data such as measurement data regarding the measurement unit 2) managed by the data management software 4 and the function of the data management software 4. For example, the interface 5 accepts a request from the application 6 and performs a response corresponding to the request against the application 6, thereby allowing the application 6 to utilize data corresponding to the request or utilize a function corresponding to the request. The request from the application 6 is a request for utilization of data managed by the data management software 4 and/or a request for utilization of a function of the data management software 4, for example. The response to the application 6 is provision of data corresponding to the request and/or provision of a function corresponding to the request, for example.

The application 6 may communicate with the interface 5 in accordance with a predetermined rule (hereinafter, referred to as "Rule R") defined in advance. The interface 5 may allow the application 6 to utilize the information/function regarding the data management software 4 according to the rule R. For example, when the interface 5 is configured as a Web API, the rule R is, as an example, determined as a combination of a URI (Uniform Resource Identifier) for designating a processing subject by a predetermined syntax, and a predetermined HTTP (Hyper Text Transfer Protocol) method indicating manipulation with respect to the processing subject. According to the rule R, the application 6 creates, as a request to the interface 5, a combination of a URI and an HTTP method that the processing subject and manipulation with respect to the processing subject are specified. Hereinafter, the request is also referred to as "command C". The application 6 transmits a command C created according to the rule R to the interface 5. The interface 5 provides a response according to the command C transmitted from the application 6, to the application 6. For example, according to the command C transmitted from the application 6, the interface 5 allows the application 6 to utilize at least one of: (i) data regarding the measurement unit 2, (ii) data regarding measurement operation by the measurement unit 2, (iii) data regarding maintenance of the measurement unit 2, and (iv) data regarding manipulation of the measurement unit 2. Further, for example, according to the command C transmitted from the application 6, the interface 5 allows the application 6 to execute at least one of: (i) acquisition of data regarding the measurement unit 2, (ii) registration of the data, (iii) update of the data, and (iv) deletion of the data. For example, there may be a plurality of types of rules R depending on the type of the specimen measurement apparatus 11. For example, manners of information management of the data management software 4 and the data management system 15 may differ depending on the type of the specimen measurement apparatus 11. In such a case, for example, if the application 6 uses information corresponding to a certain type of the specimen measurement apparatus 11, the application 6 communicates with the interface 5/5A according to a corresponding type of the rule R (i.e., the rule R corresponding to the certain type of the specimen measurement apparatus 11). Therefore, the application 6 may be able to use a plurality of types of information each of which are respectively different with respect to the manners of the information management.

The interface 5 may allow a plurality of types of applications 6 to utilize the data regarding the measurement unit 2 according to the rule R which is common among the plurality of types of applications 6. The plurality of types of applications 6 may provide different functions. The rule 5 may be common among the applications 6 which operate in different operating systems, respectively. For example, the interface 5 may allow the applications 6 to utilize data regarding the measurement unit 2 according to the rule R which is common among a plurality of types of the applications 6 respectively created for a plurality of types of operating systems.

The interface 5 may be incorporated into the data management software 4 or may be incorporated into a software program separate from the data management software 4. The interface 5 may be software independent of (i) the data management software 4, (ii) the control software 3, and (iii) other software programs. Also, the data management software 4 may be configured by one piece of software (e.g., one executable file) or by a plurality of pieces of software (e.g., a plurality of executable files). For example, the software responsible for the interface 5 and the software responsible for the data management software 4 may be configured by different executable files.

### Example of Software Operating Environment

[Example of Software Operating Environment] The control software 3, the data management software 4, the interface 5, and the application 6 are executed on, for example, one or more computers 900. The computer 900 is, for example, a smartphone (iPhone, Android device), a tablet (iPad, Android tablet, Windows tablet), a Windows PC with Windows OS installed, or a Mac with Mac OS installed (iPhone, iPad, Android, Windows, and Mac OS are registered trademarks). The application 6 may be created for a plurality of types of operating systems, respectively, for example. For example, for a certain application 6, one for Windows OS and one for iOS may be created, respectively.

An example of the configuration of the computer 900 is shown in FIG. 19. The computer 900 includes, as an example, a processor 71, a memory 72, a bus 73, a storage 74, a display 75, an interface 751, an input part 76, an interface 761, and a communication part 78. The terminal apparatus 101 and the control unit 7 have a configuration similar to the computer 900 shown in FIG. 19.

The storage 74 is a non-volatile memory, such as an SSD (Solid State Drive), flash memory, HDD (Hard Disk Drive), or a combination thereof, for example. The storage 74 stores various programs, including, for example, the control software 3, the data management software 4, the interface 5, and the application 6, as well as various types of data.

The processor 71 is, for example, an IPU (Infrastructure Processing Unit), a CPU (Central Processing Unit), a GPU (Graphic Processing Unit), a DSP (Digital Signal Processor), an MPU (Micro Processing Unit), or a combination thereof. The processor 71 may be realized by, for example, a logic circuit. The processor 71 reads out various programs from the storage 74, loads them into the memory 72, and executes them. The memory 72 is a volatile memory, such as a RAM (Random Access Memory) or a DRAM (Dynamic Random Access Memory), for example.

The interface 751 connects the bus 73 and the display 75, such as a display. The interface 761 connects the bus 73 and the input part 76, such as a keyboard or a mouse. The communication part 78 handles communication with external devices.

In the following, for the purpose of simplifying the explanation of the operations of the control software 3, the data management software 4, the interface 5, or the application 6, the members corresponding to the processor 71, the storage 74, and the memory 72 for executing these may be omitted from the description.

Note that the computer 900 may further include a communication interface for communicating with other devices. The computer 900 may further include an input/output interface for connecting input/output devices such as a keyboard, a mouse, a display, and a printer. Example of Specimen Measurement System Configuration

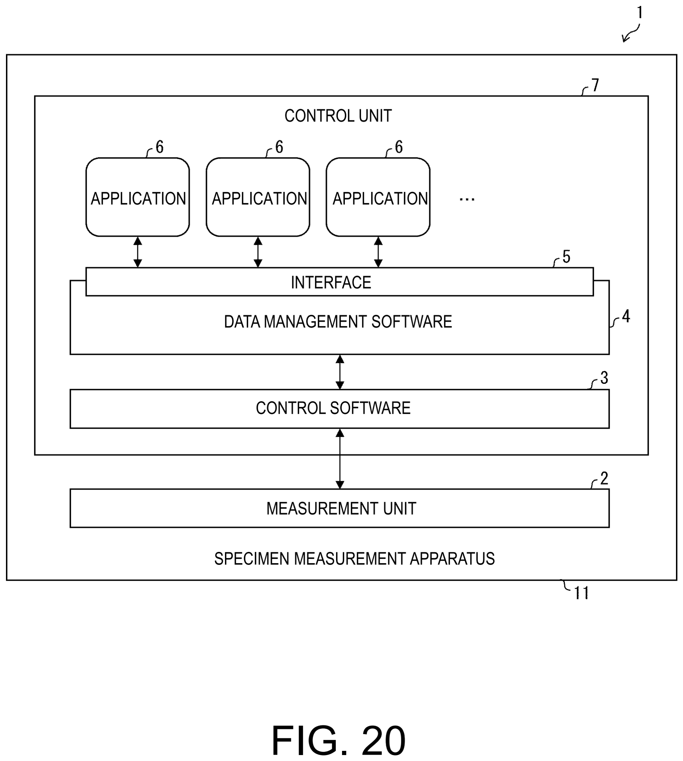

[Example of Specimen Measurement System Configuration] [Configuration Example 1]FIG. 20 shows an example of the configuration of the specimen measurement system 1. In the configuration example shown in the figure, the specimen measurement system 1 is configured as a specimen measurement apparatus 11 including the measurement unit 2 and a control unit 7 that executes the control software 3, the data management software 4, the interface 5, and the application 6. In the case of this configuration example, the application 6 is executed by the specimen measurement apparatus 11 and utilizes the information managed by the data management software 4 and the function of the data management software 4 via the interface 5.

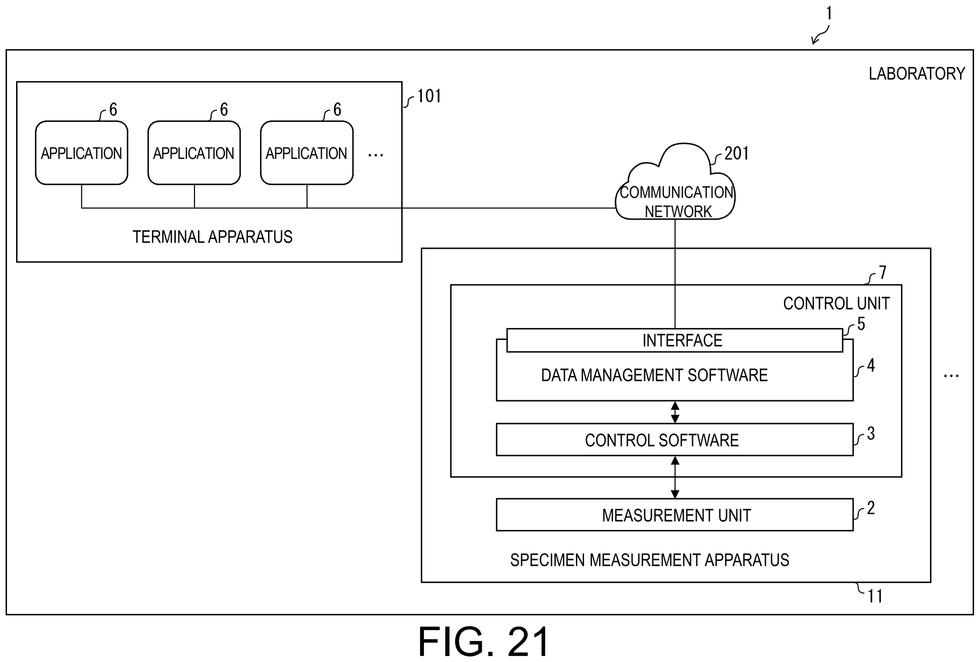

[Configuration Example 2] The application 6 may be installed on a device different from the specimen measurement apparatus 11. In the configuration example shown in FIG. 21, the specimen measurement system 1 includes the specimen measurement apparatus 11 installed in a laboratory and a terminal apparatus 101 connected to the specimen measurement apparatus 11 via a communication network 201. The terminal apparatus 101 is used, for example, within the laboratory. The communication network 201 is, for example, an intranet work.

The specimen measurement apparatus 11 includes the measurement unit 2 and a control unit 7 that executes the control software 3, the data management software 4, and the interface 5. The terminal apparatus 101 is a computer used by a user of the specimen measurement system 1, and is, for example, a computer such as a PC, a smartphone, or a tablet. The terminal apparatus 101 is equipped with the application 6 and executes the application 6.

In the case of this configuration example, the application 6 executed by the terminal apparatus 101 accesses the interface 5 of the specimen measurement apparatus 11 via the communication network 201. The interface 5 causes the application 6 of the terminal apparatus 101 to utilize the information managed by the data management software 4 and the function of the data management software 4 via the communication network 201.

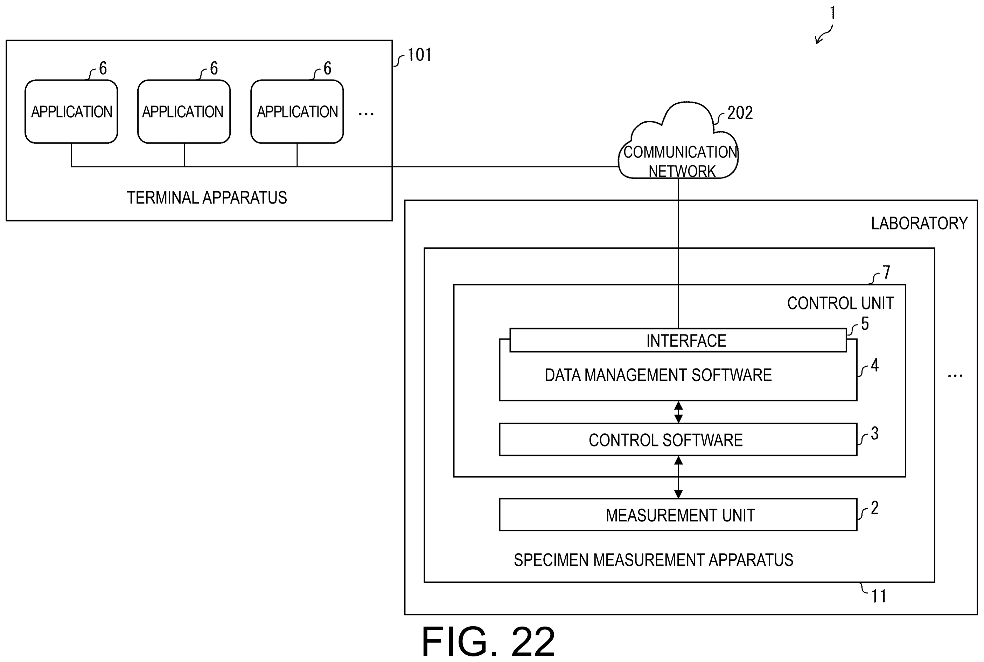

[Configuration Example 3] The terminal apparatus 101 equipped with the application 6 may be used in a location different from the facility where the specimen measurement apparatus 11 is installed (e.g., outside the laboratory, or in a separate room in the same facility as the laboratory). In the configuration example shown in FIG. 22, the specimen measurement system 1 includes the specimen measurement apparatus 11 installed in a laboratory and the terminal apparatus 101 used in a facility different from the laboratory and connected to the specimen measurement apparatus 11 via a communication network 202. The communication network 202 is, for example, the Internet or an intranet. The specimen measurement apparatus 11 includes the measurement unit 2 and a control unit 7 that executes the control software 3, the data management software 4, and the interface 5. The terminal apparatus 101 is equipped with the application 6 and executes the application 6.

In the case of this configuration example, the application 6 executed by the terminal apparatus 101 accesses the interface 5 of the specimen measurement apparatus 11 via the communication network 202. The interface 5 causes the application 6 of the terminal apparatus 101 to utilize the information managed by the data management software 4 and the function of the data management software 4 via the communication network 202.

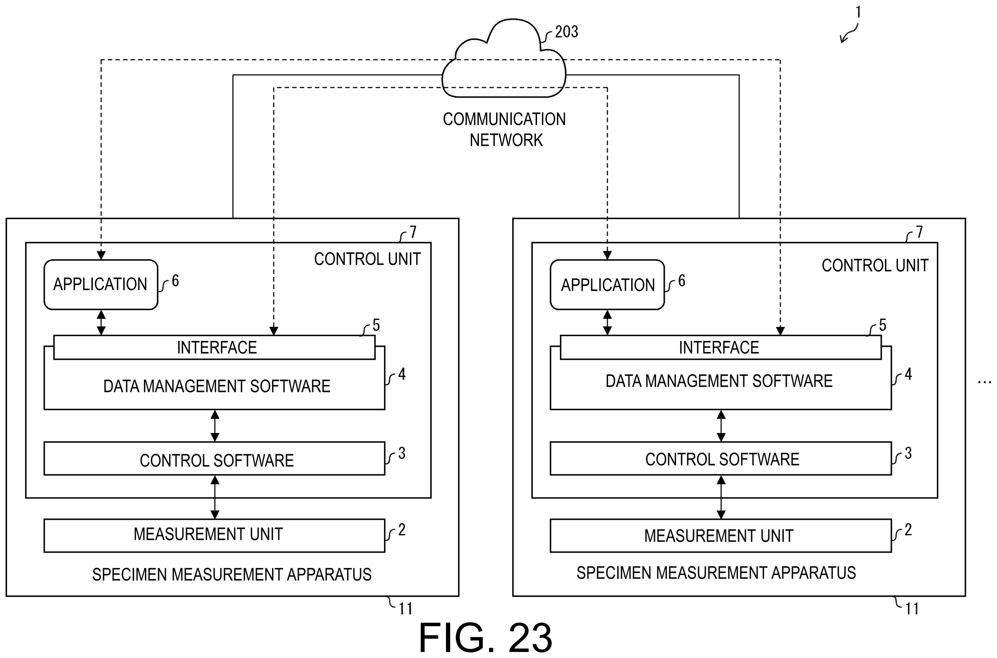

[Configuration Example 4] In the case where the specimen measurement apparatus 11 is equipped with the application 6, the application 6 itself installed in the specimen measurement apparatus 11 may access another specimen measurement apparatus 11 and utilize the information managed by the data management software 4 of the other specimen measurement apparatus 11 and the function of the data management software 4. In the configuration example shown in FIG. 23, the specimen measurement system 1 is configured such that specimen measurement apparatuses 11, each including the measurement unit 2 and a control unit 7 that executes the control software 3, the data management software 4, the interface 5, and the application 6, are connected to be communicable via a communication network 203. The communication network 203 is, for example, an intranetwork or the Internet.

In the case of this configuration example, the application 6 executed by a certain specimen measurement apparatus 11 can utilize the information managed by the data management software 4 of the specimen measurement apparatus 11 and the function of the data management software 4 via the interface 5 of the specimen measurement apparatus 11, and can also access the interface 5 of another specimen measurement apparatus 11 connected via the communication network 203 and utilize the information managed by the data management software 4 of that specimen measurement apparatus 11 and the function of the data management software 4.

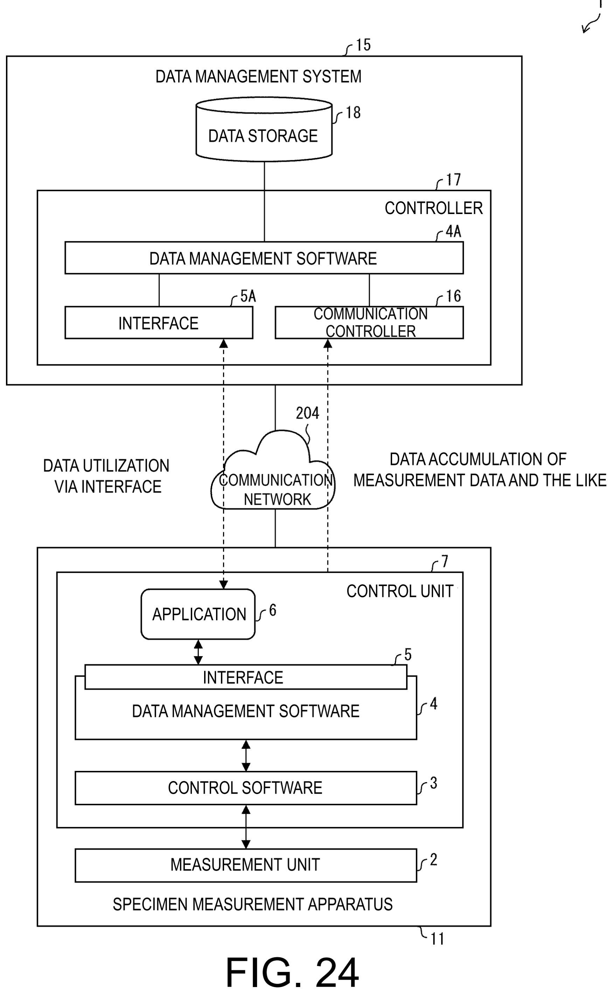

[Configuration Example 5] The information managed by the data management software 4 (e.g., measurement data, etc.) may be managed by a device different from the specimen measurement apparatus 11. In the configuration example shown in FIG. 24, the specimen measurement system 1 includes the specimen measurement apparatus 11 and a data management system 15 connected to the specimen measurement apparatus 11 via a communication network 204. The communication network 204 is, for example, an intranet work or the Internet. The information managed by the data management software 4 (e.g., measurement data, etc.) may be managed by both the specimen measurement apparatus 11 and the data management system 15. For example, a copy of all or a part of the information managed by the data management software 4 of the specimen measurement apparatus 11 may be managed by the data management system 15.

As shown in FIG. 24, the specimen measurement apparatus 11 includes the measurement unit 2 and a control unit 7 that executes the control software 3, the data management software 4, the interface 5, and the application 6. The specimen measurement apparatus 11 has a function to provide information managed by the data management software 4 to the data management system 15. Although details will be described later, as an example of the function, the interface 5 may provide the information (measurement data, etc.) corresponding to the event to the data management system 15 via PUSH notification through the communication network 204 in response to a predetermined event. The PUSH notification may be executed by something other than the interface 5 (e.g., the data management software 4 or other software installed in the control unit 7). The specimen measurement apparatus 11 may provide the information managed by the data management software 4 to the data management system 15 as a response to an inquiry from the data management system 15, instead of the PUSH notification. The provision of information to the data management system 15 is the same for Configuration Examples 6 and 7, which will be described later.

The data management system 15 includes, for example, a controller 17 that executes the data management software 4A, the interface 5A, and a communication controller 16. The controller 17 is equivalent to the processor 902 shown in FIG. 2. The data management system 15 includes a data storage 18, which is a storage device. The data management software 4A accumulates and manages the information PUSH notified from the specimen measurement apparatus 11 in the data storage 18. The communication controller 16 has a function to control communication related to the PUSH notification from the specimen measurement apparatus 11.

The application 6 is capable of cooperating with the data management software 4A via the interface 5A. The data management software 4A acquires data corresponding to the request from the application 6 received by the interface 5A from the data storage 18 and provides it to the requesting application 6. The interface 5A has a function to utilize information managed by the data storage 18 by the application 6 executed in the specimen measurement apparatus 11 via the data management software 4A. The interface 5A is equivalent to the interface 5, is, for example, a software interface, and is typically an API. The interface 5A causes the application 6 to utilize the information managed by the data management software 4A. The application 6 cooperates with the interface 5A based on the rule R, and the interface 5A causes the application 6 to utilize the information and functions regarding the data management software 4A based on the rule R.

In the case of this configuration example, as shown in FIG. 24, the application 6 executed in the specimen measurement apparatus 11 accesses the interface 5A of the data management system 15 via the communication network 204 and requests utilization of the information accumulated in the data storage 18 of the data management system 15. The data management system 15 may be installed in a laboratory or a medical facility, and in this case, the application 6 of the specimen measurement apparatus 11 accesses the interface 5A via the communication network 204 as an intranet, for example.

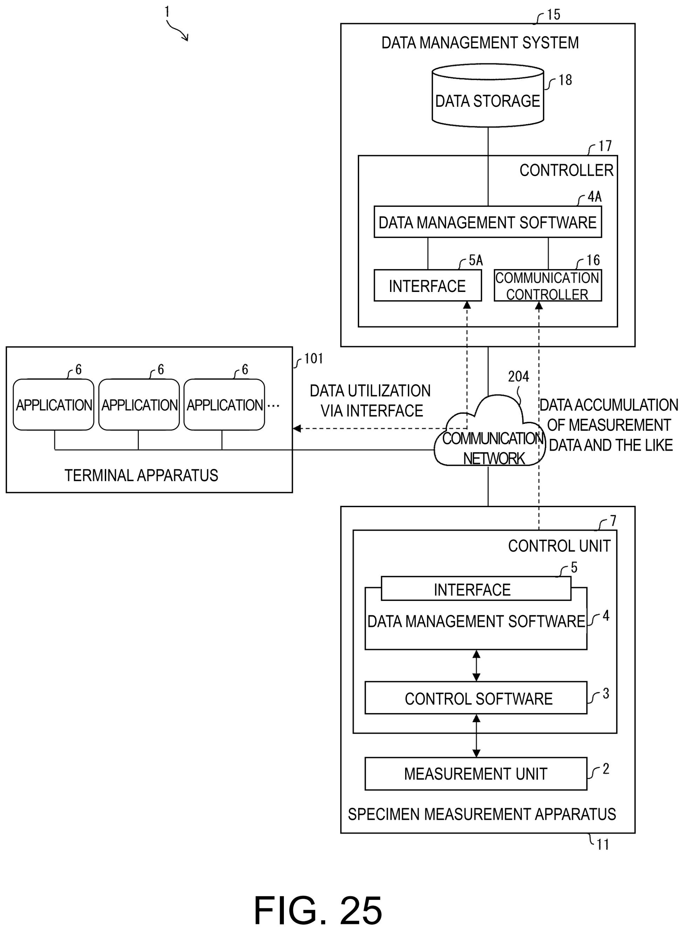

[Configuration Example 6]The information accumulated in the data storage 18 of the data management system 15 may be utilized by the application 6 executed in the terminal apparatus 101. In the configuration example shown in FIG. 25, the specimen measurement system 1 is configured such that the specimen measurement apparatus 11, the data management system 15, and the terminal apparatus 101 are connected via the communication network 204.

In the case of this configuration example, the application 6 executed by the terminal apparatus 101 accesses the interface 5A of the data management system 15 via the communication network 204 and requests utilization of the information accumulated in the data storage 18 of the data management system 15. The application 6 executed by the terminal apparatus 101 cooperates with the interface 5A based on the rule R.

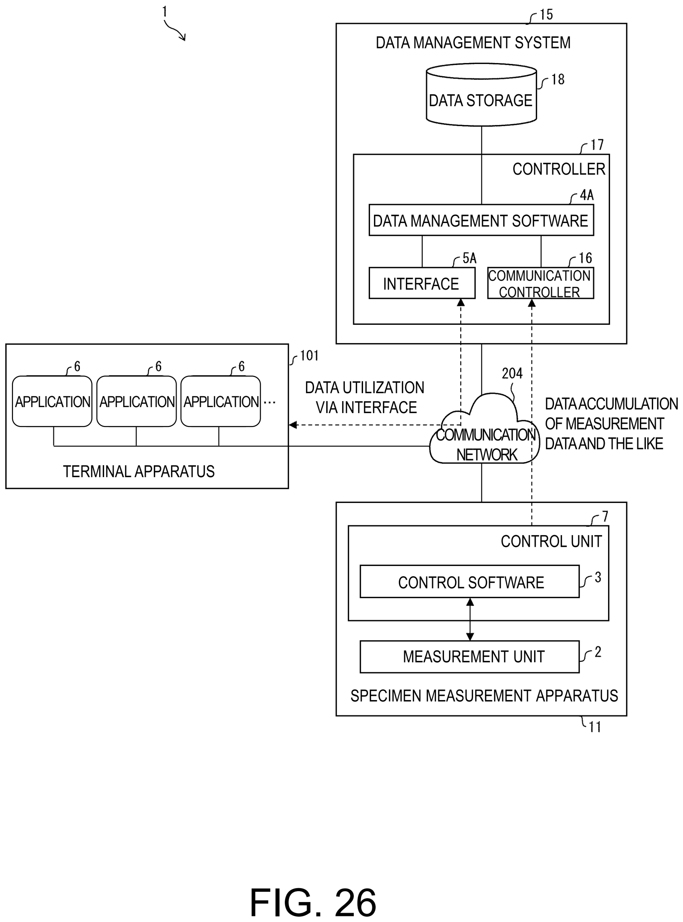

[Configuration Example 7] As a modification of Configuration Example 6, the specimen measurement apparatus 11 may not include the data management software 4 and the interface 5. The configuration example shown in FIG. 26 is the same as Configuration Example 6, except that the specimen measurement apparatus 11 and the imaging device 12 do not include the data management software 4 and the interface 5.

In this configuration example, information such as measurement data acquired when the control software 3 controls the measurement unit 2 is transmitted to the data management system 15 via the communication network 204, and is accumulated in the data storage 18 via the data management software 4A of the data management system 15. The application 6 executed on the terminal apparatus 101 accesses the interface 5A of the data management system 15 via the communication network 204, similar to the sixth configuration example, and requests the use of the information accumulated in the data storage 18 of the data management system 15.

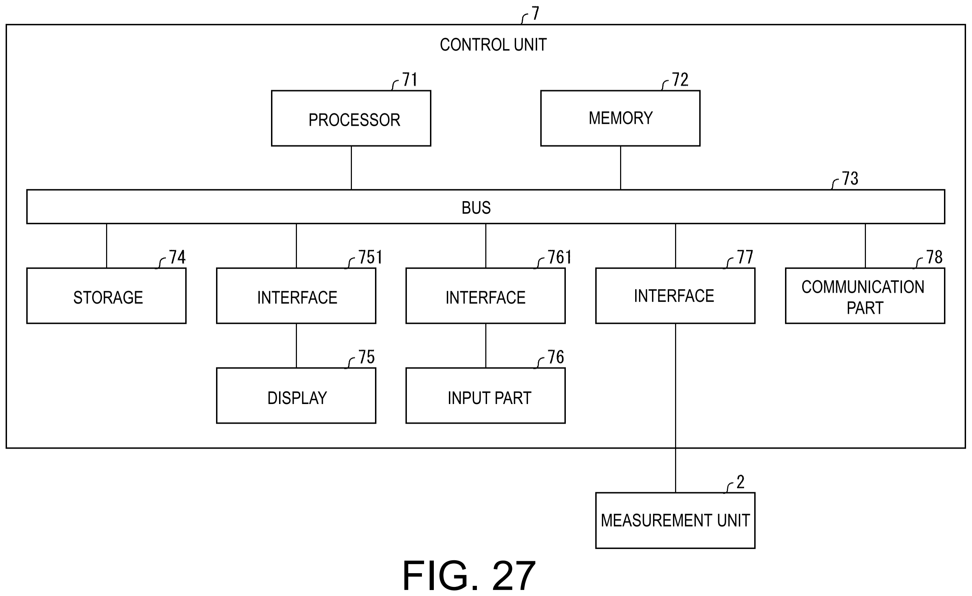

The control unit 7 is, for example, a computer. FIG. 27 shows a hardware configuration example of the control unit 7. As an example, the control unit 7 comprises a processor 71, a memory 72, a bus 73, a storage 74, a display 75, an interface 751, an input part 76, an interface 761, an interface 77, and a communication part 78.

The processor 71 is a control part that comprehensively controls the functions of the control unit 7. The processor 71 is equivalent to the processor 71 shown in FIG. 2. For example, the processor 71 reads the control software 3 and the data management software 4 from the storage 74, deploys them to the memory 72, and executes them. The storage 74 is equivalent to the storage 74 shown in FIG. 19. The memory 72 is equivalent to the memory 72 shown in FIG. 19.

The interface 751 connects the bus 73 and a display 75 such as a display. The interface 761 connects the bus 73 and an input part 76 such as a keyboard or a mouse. The interface 77 connects the bus 73 and the measurement unit 2. The communication part 78 is responsible for communication with an external device.

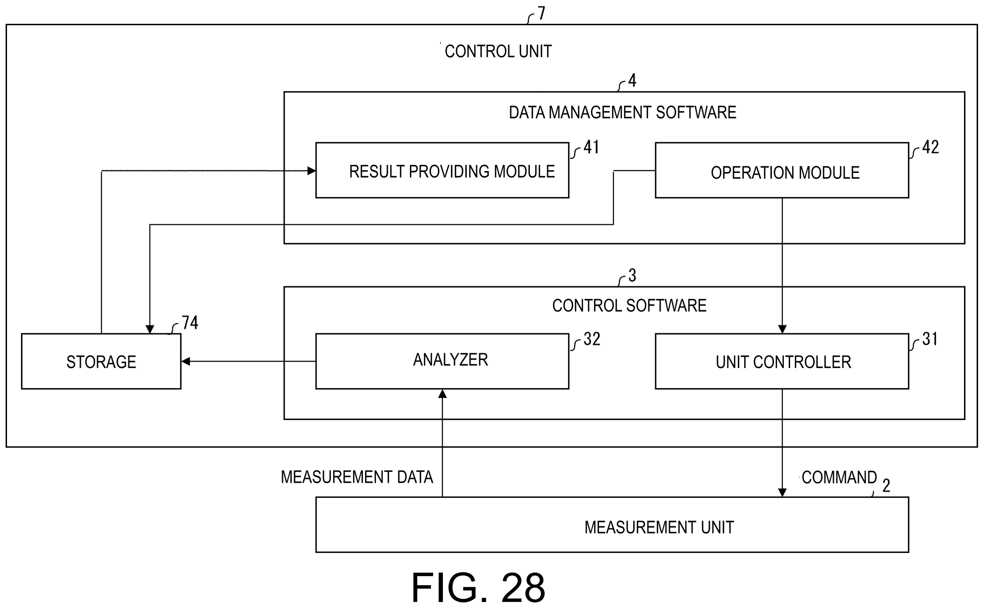

[Configuration Example of Control Software and Data Management Software] FIG. 28 shows a configuration example of the control software 3 and the data management software 4 executed in the control unit 7. The control software 3 includes, for example, a unit controller 31 and an analyzer 32. The unit controller 31, for example, commands the measurement unit 2 to execute an operation corresponding to a measurement order of a specimen to be measured. The analyzer 32, for example, analyzes data acquired by the measurement unit 2 that operated according to the command of the unit controller 31, generates measurement data as a measurement result, and stores the generated measurement data in the storage 74.

The data management software 4 includes, for example, a result providing module 41 and an operation module 42. The result providing module 41 has a function (for example, GUI: Graphical User Interface) of acquiring the measurement data generated by the analyzer 32 from the storage 74 and providing the acquired measurement data to an operator. The operation module 42 has operation functions such as a function for registering measurement orders/specimen information by an operator (UI), a function for acquiring measurement orders and specimen information from a Laboratory Information System (LIS) and/or a Hospital Information System (HIS), a function for registering measurement instructions based on measurement orders, various setting functions regarding the apparatus and the system, and registration of reagent information and consumable information. Information set and registered by the operation module 42 is stored in the storage 74. The operation functions included in the data management software 4 are, for example, functions required for the Intended Use of the specimen measurement apparatus 11 approved as a medical device (for example, minimum functions for measuring a specimen and providing a measurement result specified by the Intended Use). The operation functions included in the data management software 4 are, for example, functions required for the Intended Use of the specimen measurement apparatus 11 approved as a medical device, and additional functions for enhancing user convenience. The operation functions of the data management software 4 are, for example, expandable by adding the application 6.

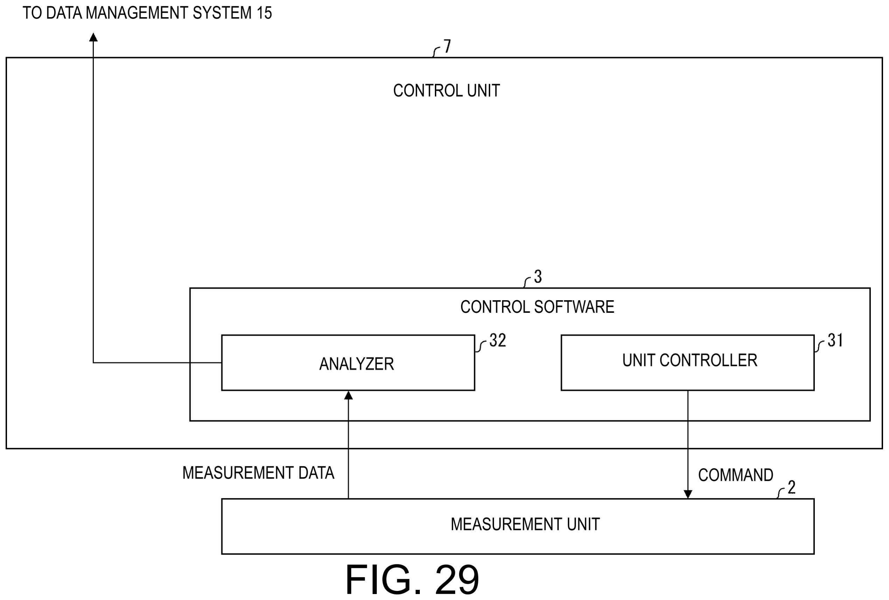

As a modification, the control unit 7 of the specimen measurement apparatus 11 may not comprise the data management software 4, as shown in FIG. 29. The control unit 7 illustrated in FIG. 29 is used, for example, in the system illustrated in FIG. 26. In the case of this example, the unit controller 31, for example, commands the measurement unit 2 to execute an operation corresponding to a measurement order acquired from LIS/HIS. The analyzer 32 analyzes data acquired by the measurement unit 2 that operated according to the command of the unit controller 31, generates measurement data as a measurement result, and transmits the generated measurement data to the data management system 15 via the communication part 78, for example.

[Measurement Unit] As described above, the measurement unit 2 includes, as an example, the specimen processor 21 and the detector 22. The specimen processor 21 prepares a measurement sample based on a specimen and a reagent. The detector 22 measures the measurement sample prepared by the specimen processor 21. The unit controller 31 of the control software 3 controls the operations of the specimen processor 21 and the detector 22 in cooperation with the operation module 42 of the data management software 4 (according to an instruction from the operation module 42). The unit controller 31 performs operation control of mechanisms and a fluid circuit that constitute the specimen processor 21 and the detector 22, for example. The operation control may include at least one of, for example, control of a liquid aspiration operation including at least one of a specimen and a reagent, control for preparing a measurement sample by mixing the specimen and the reagent, control for causing the detector 22 to detect the measurement sample, and control for causing the detector 22 to detect at least one of optical information and an electrical signal regarding the measurement sample and for analyzing a measurement result based on the detected detection result.

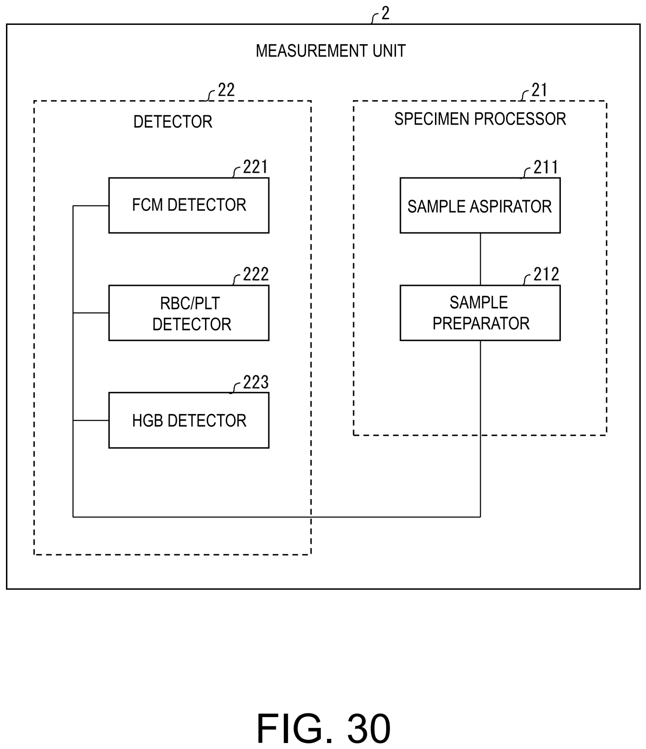

[Blood Cell Analyzer] FIG. 30 shows a configuration example when the measurement unit 2 is a blood cell analyzer. In this case, the specimen processor 21 includes, for example, a specimen aspirator 211 and a sample preparator 212, and the detector 22 includes, for example, an FCM detector 221, an RBC/PLT detector 222, and an HGB detector 223.

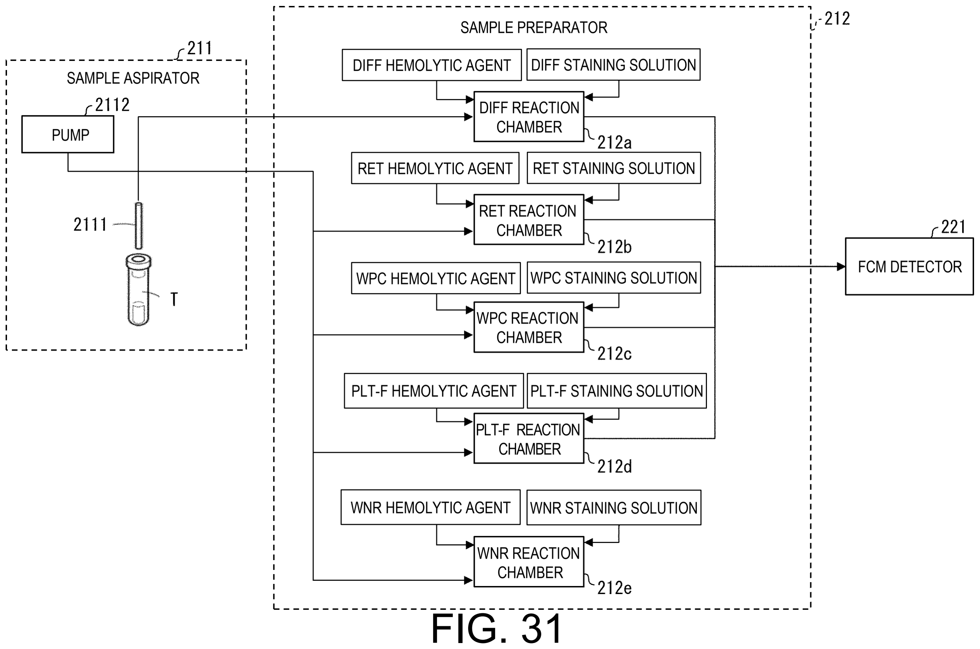

FIG. 31 is a schematic diagram for describing the specimen aspirator 211 and the sample preparator 212 when supplying a measurement sample to the FCM detector 221. The specimen aspirator 211 comprises a nozzle 2111 for aspirating a blood specimen (whole blood) from a blood collection tube T, and a pump 2112 for applying negative pressure/positive pressure to the nozzle. The nozzle 2111 is inserted into the blood collection tube T by being moved up and down by an apparatus mechanism unit (not shown). When the pump 2112 applies negative pressure with the nozzle 2111 inserted into the blood collection tube T, the blood specimen is aspirated via the nozzle 2111. Note that the apparatus mechanism unit may comprise a hand member for inverting and stirring the blood collection tube T before aspirating blood from the blood collection tube T.

The sample preparator 212 includes five reaction chambers 212a to 212e. The reaction chambers 212a to 212e are respectively used in measurement channels (also referred to as measurement systems) of DIFF, RET, WPC, PLT-F, and WNR. To each reaction chamber, a hemolytic agent container accommodating a hemolytic agent and a staining solution container accommodating a staining solution, which are reagents corresponding to the respective measurement channels, are connected via flow paths. A measurement channel is constituted by one reaction chamber and reagents (hemolytic agent and staining solution) connected thereto. For example, the DIFF measurement channel corresponds to a measurement item for classifying (five classification of white blood cells) white blood cells into a plurality of subpopulations, and is composed of a DIFF hemolytic agent and a DIFF staining solution, which are reagents for DIFF measurement, and a DIFF reaction chamber. The RET measurement channel corresponds to a measurement item regarding the measurement of reticulocytes, the WPC measurement channel corresponds to a measurement item regarding the measurement of abnormal white blood cells, the PLT-F measurement channel corresponds to a measurement item regarding the optical measurement of platelets, and the WNR measurement channel corresponds to a measurement item regarding white blood cells and nucleated red blood cells. These measurement channels are also configured similarly to the DIFF measurement channel.

The nozzle 2111, having aspirated the blood specimen, accesses the reaction chamber corresponding to the measurement channel corresponding to the order among the reaction chambers 212a to 212e from above by horizontal and vertical movement by the apparatus mechanism unit, and discharges the aspirated blood specimen. The sample preparator 212 supplies the corresponding hemolytic agent and staining solution to the reaction chamber into which the blood specimen was discharged, and prepares the measurement sample by mixing the blood specimen, the hemolytic agent, and the staining solution within the reaction chamber. The prepared measurement sample is supplied from the reaction chamber to the FCM detector 221 via the flow path, and cell measurement is performed by a flow cytometry method.

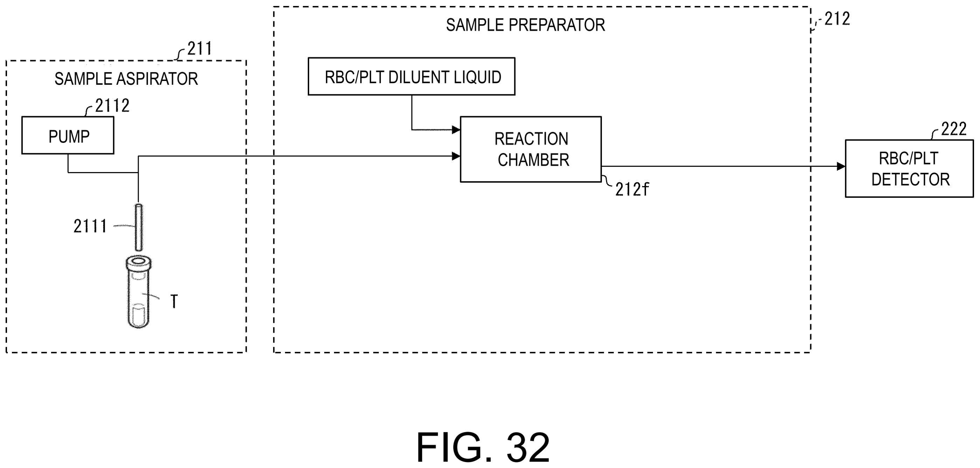

FIG. 32 is a schematic diagram for describing the specimen aspirator 211 and the sample preparator 212 when supplying a measurement sample to the RBC/PLT detector 222. The specimen aspirator 211 is the same as the specimen aspirator 211 shown in FIG. 31. The sample preparator 212 comprises a reaction chamber 212f. To the reaction chamber 212f, a diluent container accommodating a diluent corresponding to RBC/PLT is connected via a flow path. The measurement sample is prepared by mixing the blood specimen and the diluent within the reaction chamber 212f. The prepared measurement sample is supplied from the reaction chamber to the RBC/PLT detector 222 via the flow path.

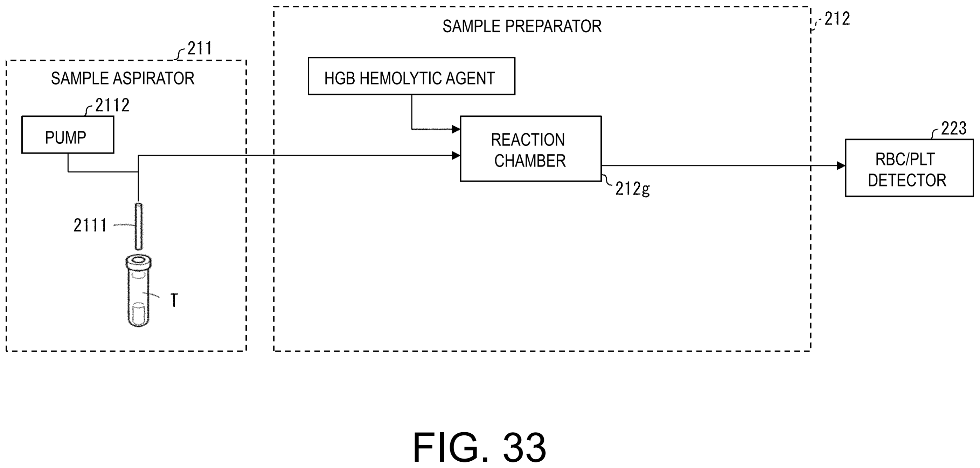

FIG. 33 is a schematic diagram for describing the specimen aspirator 211 and the sample preparator 212 when supplying a measurement sample to the HGB detector 223. The specimen aspirator 211 is the same as the specimen aspirator 211 shown in FIG. 31. The sample preparator 212 comprises a reaction chamber 212g. To the reaction chamber 212g, a hemolytic agent container accommodating a hemolytic agent, which is a reagent corresponding to HGB, is connected via a flow path. The measurement sample is prepared by mixing the blood specimen and the hemolytic agent within the reaction chamber 212g. The prepared measurement sample is supplied from the reaction chamber to the HGB detector 223 via the flow path.

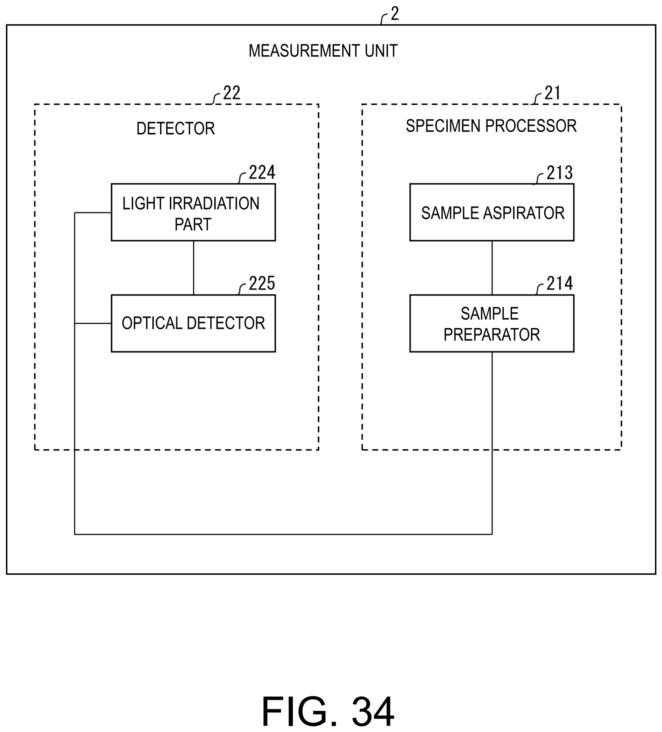

[Urine Particle Analyzer] FIG. 34 shows a configuration example when the measurement unit 2 is a urine particle analyzer. In this case, the specimen processor 21 includes, for example, a specimen aspirator 213 and a sample preparator 214, and the detector 22 includes, for example, a light irradiation part 224 and an optical detector 225.

The sample preparator 214 aspirates a urine specimen from a specimen container by the specimen aspirator 213. The specimen aspirator 213 is formed of a pipe-shaped aspiration tube. The sample preparator 214 mixes a reagent with the urine specimen aspirated by the specimen aspirator 213 to prepare a measurement sample. The reagent mixed with the urine specimen is a staining solution containing a dye that stains particles in the urine specimen, and/or a diluent.

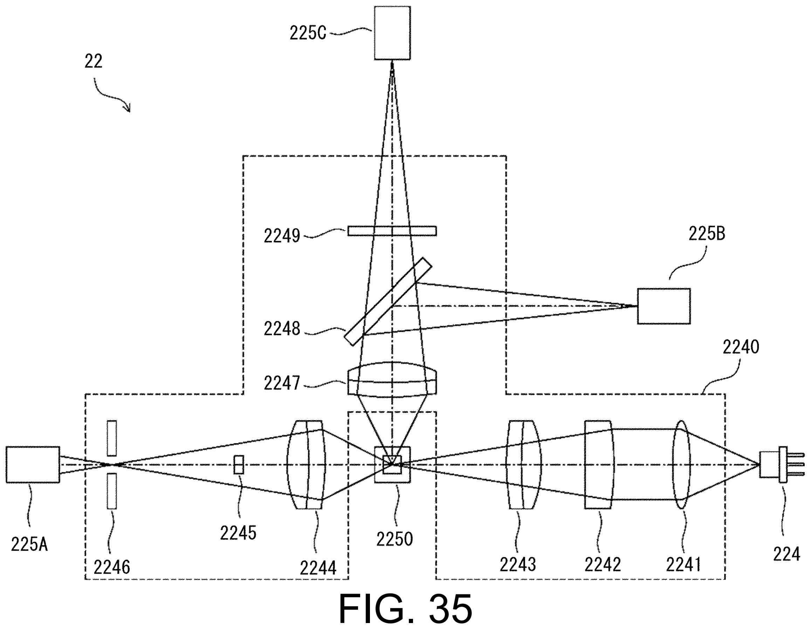

The detector 22 measures the measurement sample prepared by the sample preparator 214. FIG. 35 shows a configuration example of the detector 22. The detector 22 comprises a flow cell 2250, the light irradiation part 224, an optical system 2240, and an optical detector 225 (225A, 225B, 225C). The flow cell 2250 causes the measurement sample to flow in one direction while being surrounded by a sheath fluid. The light irradiation part 224 is formed of, for example, a laser diode, and emits light of a predetermined wavelength. The optical system 2240 irradiates the sample flow in the flow cell 2250 with the light emitted from the light irradiation part 224. The optical system 2240 guides forward scattered light generated from particles in the flow cell 2250 to the optical detector 225A. The optical system 2240 guides side scattered light and side fluorescence generated from the particles to the optical detector 225B and 225C, respectively.

The optical system 2240 includes a collimator lens2241, a cylindrical lens 2242, a condenser lens 2243, a condenser lens 2244, a beam stopper 2245, a pinhole 2246, a condenser lens 2247, a dichroic mirror 2248, and an optical filter 2249.

The collimator lens 2241 converts the light emitted from the light irradiation part 224 into parallel light. The cylindrical lens 2242 and the condenser lens 2243 shape the light transmitted through the collimator lens 2241 into a shape having a large width in a direction perpendicular to the flow of the measurement sample and apply the light to the sample flow in the flow cell 2250. Accordingly, forward scattered light is generated to the forward direction of the particle flowing in the flow cell 2250, and side scattered light and fluorescence are generated to the side direction of the particle flowing in the flow cell 2250.

The condenser lens 2244 condenses the forward scattered light to the position of the pinhole 2246. The beam stopper 2245 blocks light transmitted through the flow cell 2250 without being applied to the particle in the measurement sample. The optical detector 225A receives the forward scattered light having passed through the pinhole 2246. The optical detector 225A includes, for example, a photodiode. The optical detector 225A amplifies a detection signal by an amplifier, to generates a forward scattered light signal based on the forward scattered light, and outputs the generated forward scattered light signal.

The condenser lens 2247 converges each of the side scattered light and the fluorescence. The dichroic mirror 2248 reflects the side scattered light transmitted through the condenser lens 2247. The optical detector 225B receives the side scattered light reflected by the dichroic mirror 2248. The optical detector 225B includes, for example, a photodiode or a photomultiplier tube. The optical detector 225B amplifies a detection signal by an
amplifier, to generate a side scattered light signal based on the side scattered light, and outputs the generated side scattered light signal.

The dichroic mirror 2248 allows transmission therethrough of the fluorescence transmitted through the condenser lens 2247. The optical filter 2249 removes light in a wavelength band that may become noise, from the fluorescence transmitted through the dichroic mirror 2248. The optical detector 225C receives the fluorescence transmitted through the optical filter 2249. The optical detector 225C includes, for example, a photomultiplier. The optical detector 225C amplifies a detection signal by an amplifier, to generate a fluorescence signal based on the fluorescence, and outputs the generated fluorescence signal.

The optical detector 225 (225A, 225B, 225C) can switch the light receiving sensitivity between a low sensitivity and a high sensitivity, by switching the driving voltage at the time of photoelectric conversion, or by an amplifier. While a measurement sample flows in the flowcell 2250, the optical detectors 225 (225A, 225B,225C) each generate and output a signal of corresponding light when the light receiving sensitivity is a low sensitivity, and a signal of corresponding light when the light receiving sensitivity is a high corresponding.

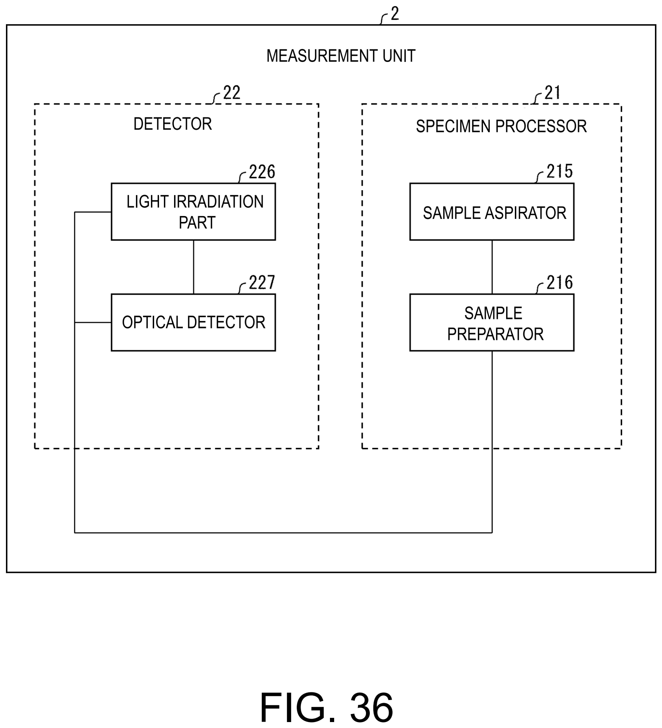

[Blood Coagulation Analyzer] FIG. 36 shows a configuration example when the measurement unit 2 is a blood coagulation analyzer. In this case, the specimen processor 21 includes, for example, a specimen aspirator 215 and a sample preparator 216, and the detector 22 includes, for example, a light irradiation part 226 and an optical detector 227.

The specimen aspirator 215 aspirates a specimen from a specimen container. The sample preparator 216 mixes a reagent with the specimen aspirated by the specimen aspirator 215 to prepare a measurement sample.

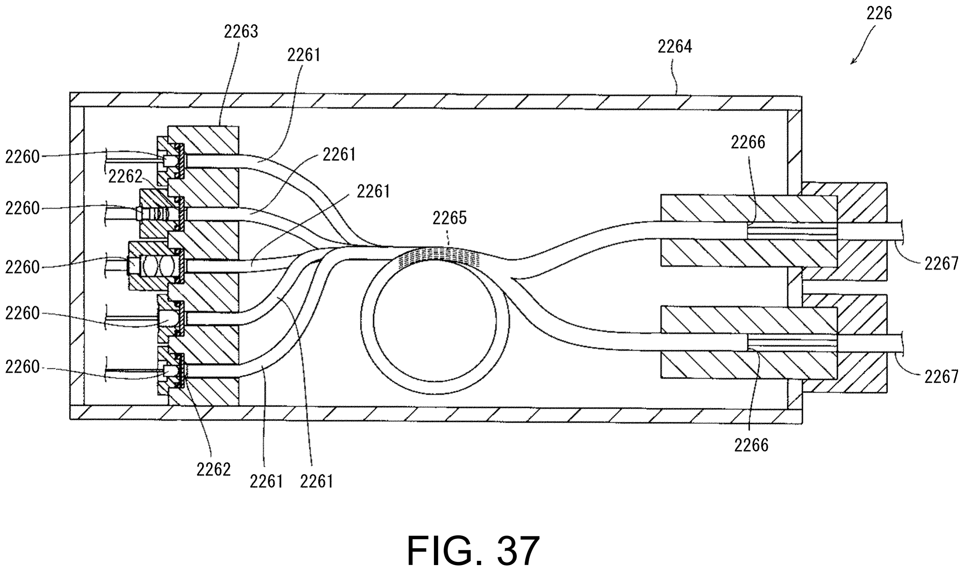

The detector 22 measures the measurement sample prepared by the sample preparator 216. FIG. 37 shows a configuration example of the light applicator 226 of the detector 22. The light applicator 226 includes five light sources 2260, five optical fiber parts 2261 provided so as to correspond to the five light sources 2260, and one holding member 2263 for holding the respective light sources 2260 and incident ends 2262 of the respective optical fiber parts 2261. The light sources 2260, the optical fiber parts 2261, and the holding member 2263 are housed in a metal-made housing 2264, for example.

The plurality of optical fiber portions 2261 each include a plurality of optical fibers 2265. The plurality of optical fiber parts 2261 are, at emission ends 2266, bundled such that the plurality of optical fiber parts 2261 corresponding to the respective light sources 2260 are mixed so as to be approximately uniformly distributed. The five optical fiber portions 2261 are intertwisted at a portion to be integrated, so as to have two emission ends 2266. The two emission ends 2266 are provided so as to correspond to the optical detector 227. The light applicator 226 includes light distribution members 2267 configured to distribute light from the emission end 2266 in the form of bundles.

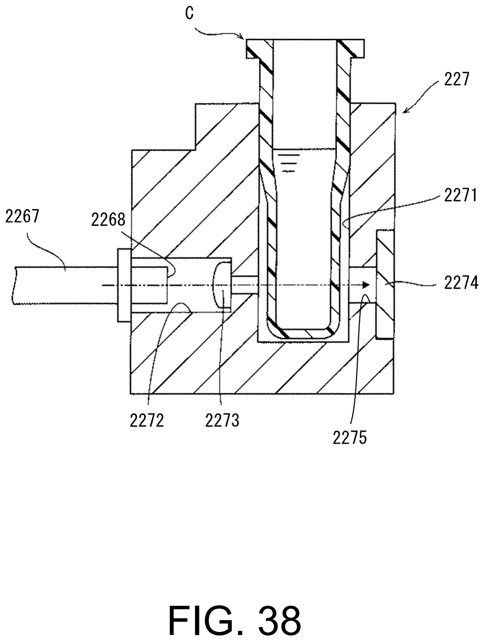

FIG. 38 shows a configuration example of the optical detector 227 of the detector 22. The optical detector 227 includes a container placement part 2271 as a hole part extending in the up-down direction, and in a hole 2272 extending from the container placement part 2271 sideways, an emission end 2268 of the light distribution member 2267 is disposed. A condenser lens 2273 is disposed inside the hole 2272. A light receiver 2274 is provided at an end portion of the hole 2275 formed so as to face the hole 2272 across the container placement part2271. Accordingly, the emission end 2268 of the light distribution member 2267, the condenser lens 2273, the container placement part 2271, and the light receiver 2274 are disposed so as to be linearly arranged. Light outputted from the emission end 2268 is transmitted, via the condenser lens 2273, through a container C containing a measurement5 ep. 11, 2025 sample in the container placement part 2271 and the measurement sample in the container C, to be detect by the light receiver 2274.

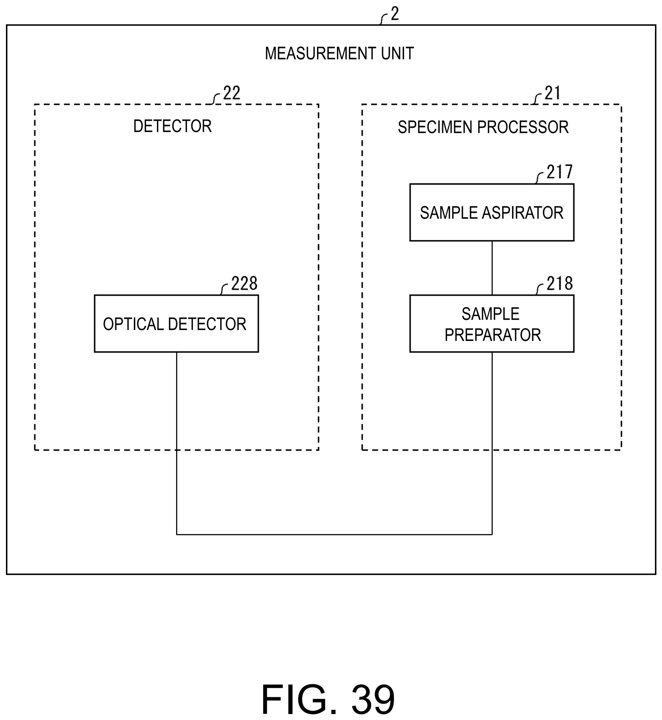

[Immunoassay Analyzer] FIG. 39 shows a configuration example when the measurement unit 2 is an immunoassay apparatus. In this case, the specimen processor 21 includes, for example, a specimen aspirator 217 and a sample preparator 218, and the detector 22 includes, for example, an optical detector 228.

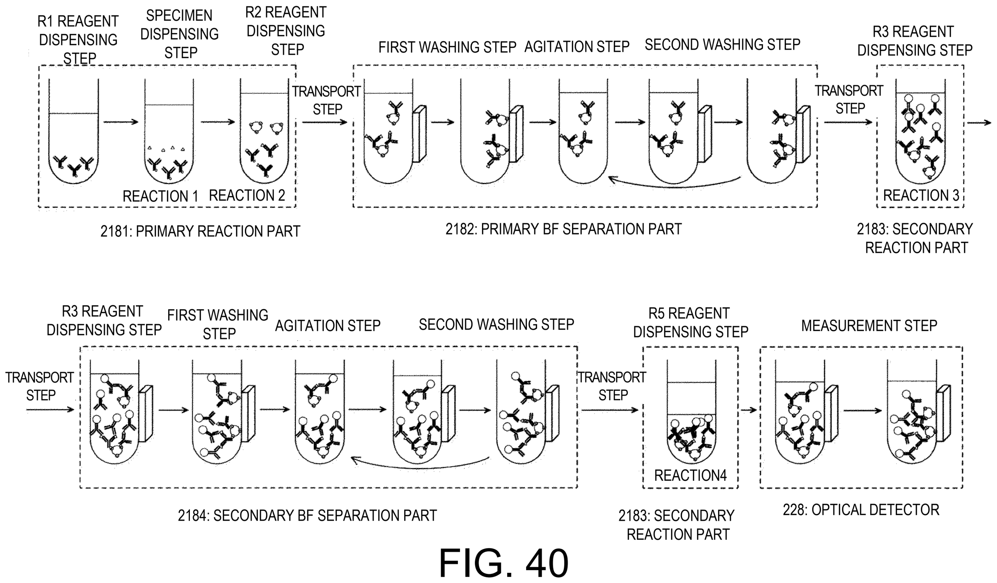

The specimen aspirator 217 aspirates a specimen from a specimen container. The sample preparator 218 includes, for example, a primary reaction part 2181, a primary BF (Bound Free) separation part 2182, a secondary reaction part 2183, and a secondary BF separation part 2184. An example of the flow of processing by the sample preparator 218 will be described with reference to FIG. 40. In the primary reaction part 2181, after magnetic particles (R2 reagent) are bound to a capturing antibody (R1 reagent) bound to an antigen included in the specimen aspirated by the specimen aspirator 217, the R1 reagent including unreacted (Free) capturing antibody is removed by drawing the bound antigen, capturing antibody, and magnetic particles to a magnet of the primary BF separation part 2182. Then, in the secondary reaction part 2183, after the antigen bound to the magnetic particles and a labeled antibody (R3 reagent) are bound, the R3 reagent including unreacted (Free) labeled antibody is removed by drawing the bound magnetic particles, antigen, and labeled antibody to a magnet of the secondary BF separation part 2184. Furthermore, in the secondary reaction part 2183, after a dispersant (R4 reagent) is added and then a luminescent substrate (R5 reagent) that emits light during the reaction process with the labeled antibody is added, the optical detector 228 acquires the amount of luminescence (an amount proportional to the number of photons) generated during the reaction process between the labeled antibody of the R3 reagent and the luminescent substrate of the R5 reagent with a Photo Multiplier Tube.

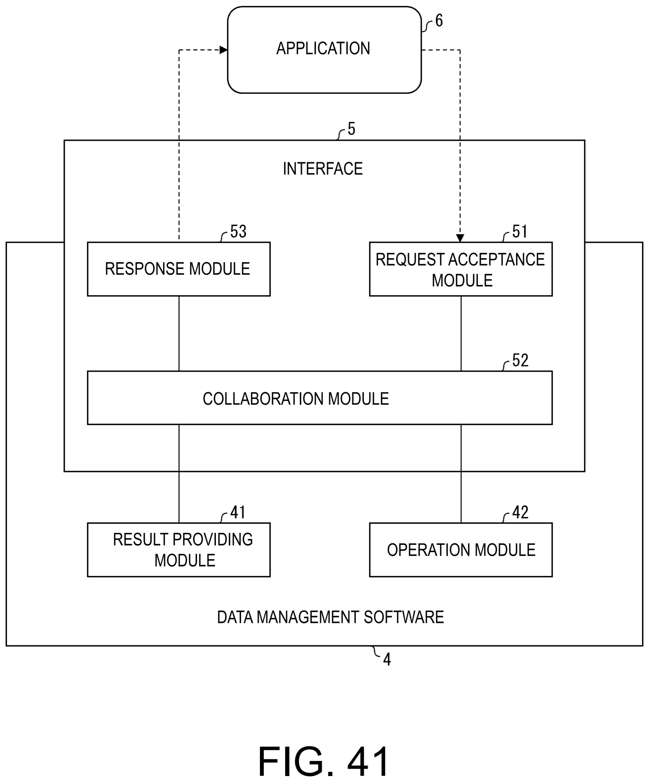

[Configuration Example of Interface] The interface 5 receives a request from the application 6, cooperates with the data management software 4 (the result providing module 41 and the operation module 42), and performs a response corresponding to the request to the application 6. FIG. 41 shows a configuration example of the interface 5. The interface 5 includes, as an example, a request acceptance module 51, a collaboration module 52, and a response module 53. The request acceptance module 51 receives a request from the application 6. The request acceptance module 51 analyzes the content of the request based on the predetermined rule R, and instructs the collaboration module 52 to cooperate with the data management software 4 for acquiring a response to the request based on the analyzed request. The collaboration module 52 cooperates with the data management software 4 according to the instruction and acquires a response corresponding to the request. The response module 53 provides the response acquired by the collaboration module 52 to the application 6.

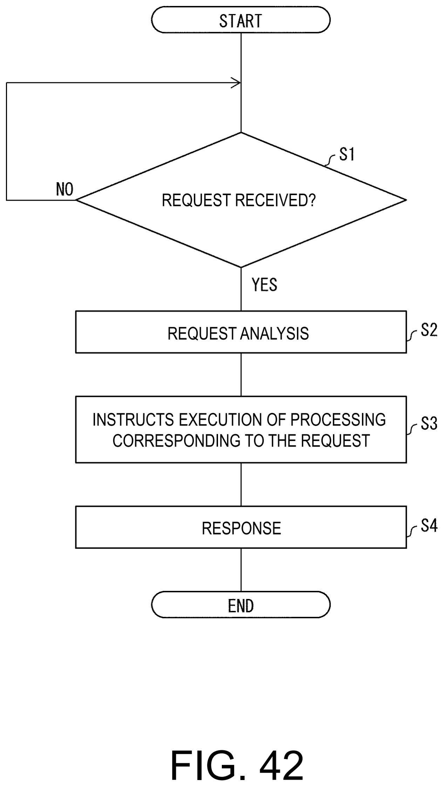

FIG. 42 is a flowchart showing an example of a processing flow (cooperation method) by the interface 5 of the specimen measurement apparatus 11. First, the interface 5 waits for a request from the application 6 (S1). In response to receiving a request from the application 6 (Yes in S1), the interface 5 analyzes the content of the request based on the predetermined rule R (S2). The interface 5 instructs the data management software 4 to perform processing corresponding to the analyzed request (S3). The data management software 4 executes processing corresponding to the instruction. For example, when the result providing module 41 of the data management software 4 is requested by the application 6 for information regarding a measurement result (for example, measurement data measured by the measurement unit 2 of a specific specimen measurement apparatus 11, or a measurement result of a quality control substance in a period (e.g., daily, weekly, or monthly period) specified by the request), the result providing module 41 specifies data corresponding to the request and provides the information to the application 6 via the interface 5. The operation module 42 of the data management software 4 registers a measurement order, for example, in response to a request for registration of a measurement order from the application 6, and provides a response indicating that the registration is complete to the application 6 via the interface 5. The interface 5 returns a response to the application 6 in response to the processing being executed by the data management software 4 (S4). Thus, the interface 5 allows the application 6 to use data and functions corresponding to the request.

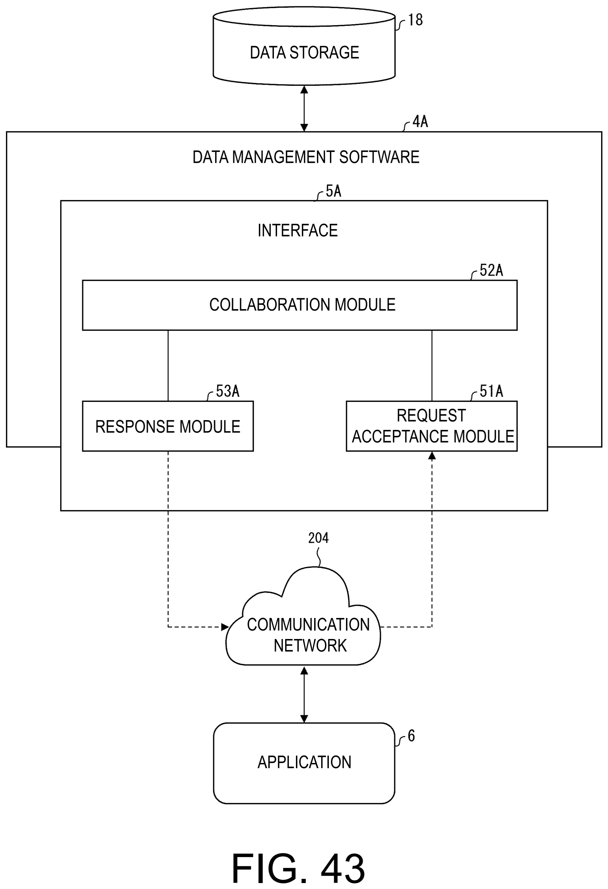

FIG. 43 shows a configuration example of the interface 5A of the data management system 15. The interface 5A includes, as an example, a request acceptance module 51A, a collaboration module 52A, and a response module 53A. The request acceptance module 51A receives a request from the application 6 via the communication network 204. The request acceptance module 51A analyzes the content of the request and instructs the collaboration module 52A to cooperate with the data management software 4A for acquiring a response to the request based on the analyzed request. The collaboration module 52A cooperates with the data management software 4A according to the instruction and acquires a response corresponding to the request. The response module 53A provides the response acquired by the collaboration module 52A to the application 6 via the communication network 204.

When the interface 5, 5A is configured as a Web API, the application 6 accesses the interface 5, 5A by using a URI defined according to the rule R. An example of the syntax of the URI defined according to the rule R is shown in Formula 1.

http://[server address]/[interface ID]/[apparatus ID]{/[resource]/[query parameter]} · · · (Formula 1) The ""server address"" in Formula 1 is a communication address corresponding to the interface 5, 5A. The server address is designated by, for example, an IP address and a port number.

The interface 5 and 5A may be set according to the type of the specimen measurement apparatus 11, for example. In this case, "interface ID" in Formula 1 is specified for identifying the interface 5 and 5A. The Interface ID is, for example, an ID corresponding to the type of the specimen measurement apparatus 11. Specification of the "interface ID" in Formula 1 is not mandatory, and if it is not specified, a wildcard (e.g., blank, *) is used, for example. The Interface ID corresponds to the type of the predetermined rule R, for example. For example, there are a plurality of types of the predetermined rule R depending on the specimen measurement apparatus 11. In other words, the interface ID corresponds to the type of the specimen measurement apparatus 11, for example. For example, the style of information management of the data management software 4 or the data management system 15 may differ depending on the type of the specimen measurement apparatus 11. In such a case, the application 6 can use a plurality of types of information with different styles of information management by, for example, the interface 5/5A and the application 6 cooperating based on a plurality of types of the predetermined rule R according to the style of information management.

The "apparatus ID" in Formula 1 is the ID of the specimen measurement apparatus 11 whose information and function are to be used. The Apparatus ID is, for example, a serial number of the specimen measurement apparatus 11. Specification of the "apparatus ID" in Formula 1 is not mandatory, and if it is not specified, a wildcard (e.g., blank, *) is used, for example.

The "resource" in Formula 1 is the resource of the API endpoint. The resource is, for example, a directory on a database corresponding to the information to be used.

The "query parameter" in Formula 1 is a query for uniquely specifying a plurality of data and control targets when they exist on the Resource. It is used, for example, for specifying measurement data of conditions specified by the query parameter (a specific period, a specific specimen, measurement data where a measurement abnormality has occurred) among a plurality of measurement data. Specification of the "resource" in Expression 1 is not mandatory, and if it is not specified, a wildcard (e.g., blank, *) is used, for example. The specification format of the "resource" and "query parameter" may differ depending on the type of the specimen measurement apparatus 11, for example. For example, in acquiring "measurement data", the specification format of the "resource" and/or "query parameter" for acquiring "measurement data" of a blood cell analyzer and the specification format of the "resource" and/or "query parameter" for acquiring "measurement data" of an immunoassay analyzer may differ from each other. Even for "measurement data", which is the same type of information, the resource as an API endpoint may differ depending on the type of the specimen measurement apparatus 11, or a query parameter unique to each type of the specimen measurement apparatus 11 may be required. In such a case, the specification format of the "resource" and "query parameter" may differ depending on the type of the specimen measurement apparatus 11, for example. Since the specification format of the "resource" and "query parameter" is part of the predetermined rule R, in other words, the "resource" and/or "query parameter" may be set based on a plurality of types of the predetermined rule R depending on the type of the specimen measurement apparatus 11.

An operation on the resource specified by the URI is specified by an HTTP method, for example. Examples of HTTP methods include "GET," "PUT," "DELETE," and "POST." By using "GET," information specified by the "resource" and "query parameter" of the URI is acquired.

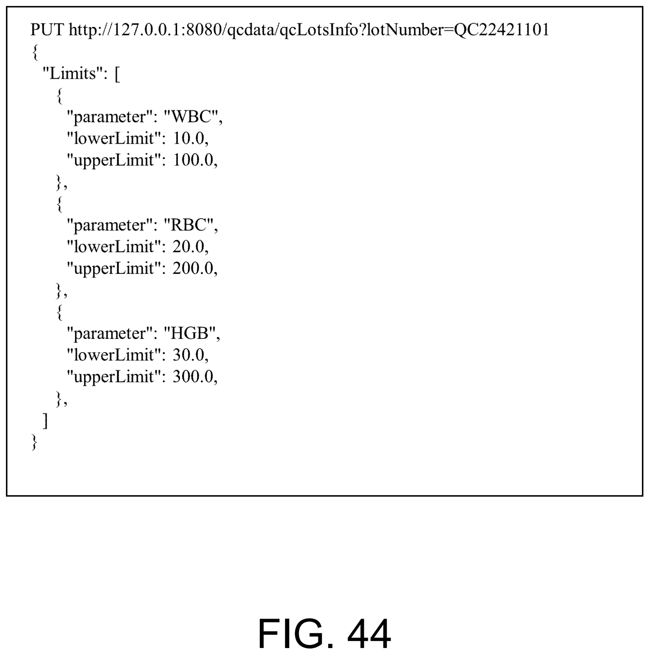

By using "PUT," information specified by the "resource" and "query parameter" of the URI is updated or edited. In this case, new data (content of the resource to be updated or edited) is included in the HTTP request body. FIG. 44 shows an example of the data structure of the HTTP request body when updating lot information for quality control. This example is described in JSON (JavaScript Object Notation) format (JavaScript is a registered trademark). For example, URI = "http://127.0.0.1:8080/qcdata/qcLotsInfo?lotNumber=QC22421101" specifies "server address" = "127.0.0.1" of the control unit 7 which is the target of the "PUT" process (update). QC (Quality Control) data held by the control unit 7 with "server address" = "127.0.0.1" is specified by "resource" = "qcdata". The "PUT" process (update) is specified for the QC lot information of "query parameter" = "QC22421101" (QC lot number) among the QC data held by the control unit 7 with "server address" = "127.0.0.1". HTTP request body="{"Limits":[{"parameter":"WBC","lowerLimit":10.0,"upperLimit":100.0},{"parameter": "RBC","lowerLimit":20.0,"upperLimit":200.0},{"parameter":"HGB","lowerLimit":30.0,"upper Limit":300.0},]}" specifies the target and content of the "PUT" process (update) for the specified QC lot information. By combining such a URI and HTTP request body, the lower limit value = 10.0 / upper limit value = 100.0 for WBC (White Blood Cell count), the lower limit value = 20.0 / upper limit value = 200.0 for RBC (Red Blood Cell count), and the lower limit value = 30.0 / upper limit value = 300.0 for HGB (Hemoglobin concentration) among the specified QC lot information are updated. Here, by updating the lower limit value and the upper limit value for each of WBC (White Blood Cell count), RBC (Red Blood Cell count), and HGB (Hemoglobin concentration), QC can be performed using the updated lower limit value and upper limit value. Such lower limit values and upper limit values are also called control values, and are set for the purpose of guaranteeing the accuracy of measurement results and proving the validity of the measurement method and its management method from the record of the measurement results. Furthermore, when a measurement result is outside the lower limit value or the upper limit value, it is also used as an index indicating that the measurement result is abnormal or that measurement could not be performed correctly.

By using "DELETE," information specified by the "resource" and "query parameter" of the URI is deleted.

When registering or creating new information, "POST" is used without specifying the "resource" and "query parameter". In this case, new data (content of the resource to be registered or created) is included in the HTTP request body.

The request acceptance module 51 of the interface 5 receives, for example, the URI and HTTP method received from the application 6. The collaboration module 52 of the interface 5 cooperates with the data management software 4 based on the URI and HTTP method received by the request acceptance module 51, for example. For example, the collaboration module 52 cooperates with the result providing module 41 in response to a request for acquiring a measurement result (HTTP method "GET") at the specimen measurement apparatus 11 specified by the "apparatus ID" of the URI, and acquires the corresponding measurement result. The response module 53 of the interface 5 transmits a response corresponding to the received URI and HTTP method to the application 6.

Similarly, the request acceptance module 51A of the interface 5A receives, for example, the URI and HTTP method received from the application 6. The collaboration module 52A of the interface 5A cooperates with the data management software 4A based on the URI and HTTP method received by the request acceptance module 51A, for example. For example, the collaboration module 52A cooperates with the data management software 4A in response to a request for acquiring a measurement result (HTTP method "GET") at the specimen measurement apparatus 11 specified by the "apparatus ID" of the URI, and acquires the corresponding measurement result. The response module 53A of the interface 5A transmits a response corresponding to the received URI and HTTP method to the application 6.

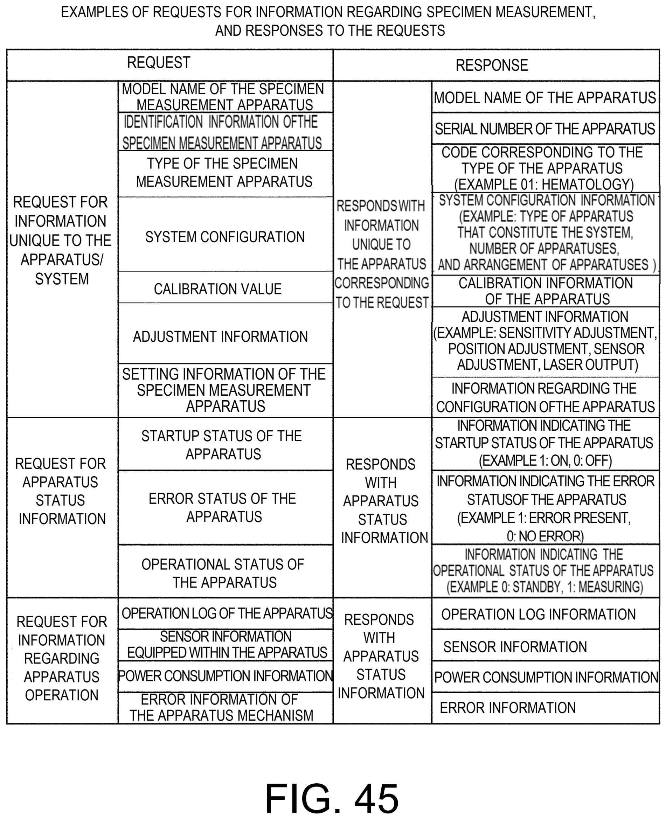

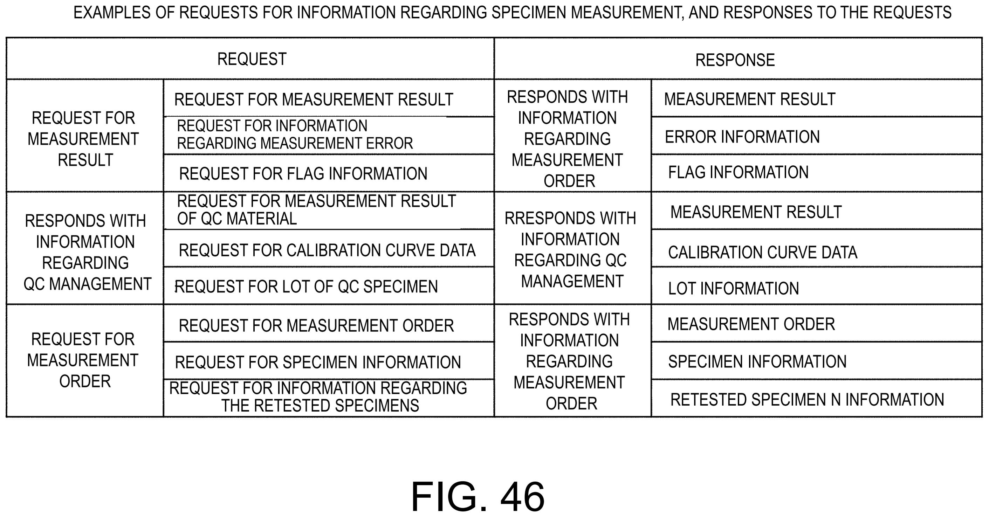

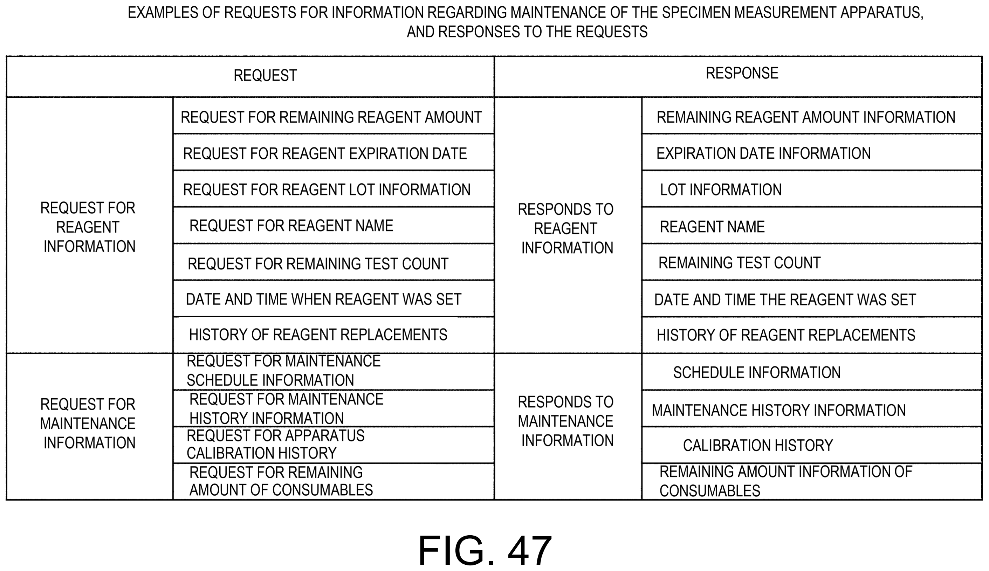

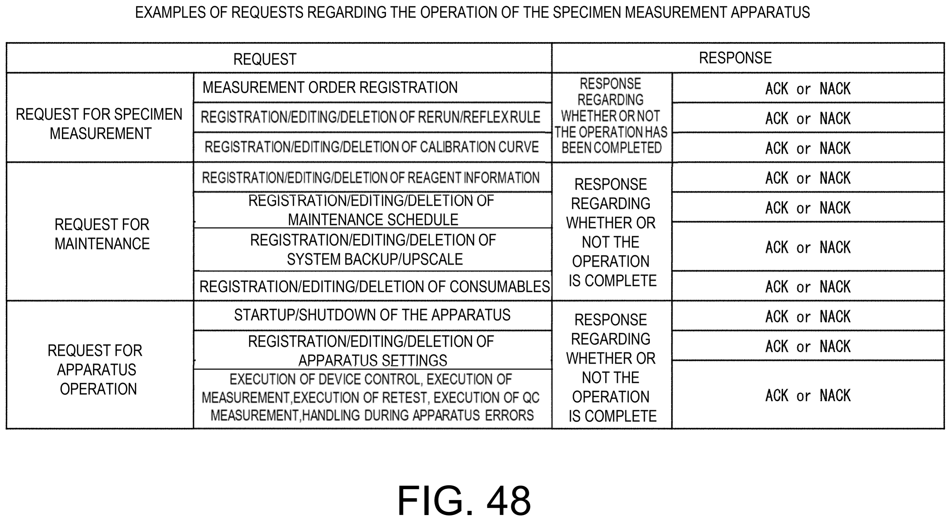

Examples of requests and responses to the interface 5 and 5A are shown in FIGS. 45 to 48. FIG. 45 shows examples of a request for information regarding the specimen measurement apparatus 11 / a response to the request. In FIG. 45, examples of (1) a request and response for information unique to the specimen measurement apparatus 11 or a system including the specimen measurement apparatus 11, (2) a request and response for information regarding the status of the specimen measurement apparatus 11, and (3) a request and response for information regarding the operation of the specimen measurement apparatus 11 are shown, for example. Examples of various kinds of information corresponding to the request and response are shown in the table of FIG. 45, but the various kinds of information corresponding to the request and response are not limited to the examples shown in the table. The interface 5 can provide the application 6 with information regarding a plurality of specimen measurement apparatuses 11 collectively (for example, Serial Numbers of the plurality of specimen measurement apparatuses 11 installed in a laboratory, error status of the plurality of specimen measurement apparatuses 11 installed in the laboratory, and the like). FIG. 46 shows an example of a request for information regarding specimen measurement / a response to the request. In FIG. 46, examples of (1) a request and response for information regarding a measurement result, (2) a request and response regarding quality control measurement, and (3) a request and response for information regarding a measurement order are shown, for example. Examples of various kinds of information corresponding to the request and response are shown in the table of FIG. 46, but the various kinds of information corresponding to the request and response are not limited to the examples shown in the table. The interface 5 can provide the application 6 with information regarding a plurality of specimen measurement apparatuses 11 collectively (for example, a measurement result of a specimen measured by the plurality of specimen measurement apparatuses 11 installed in a laboratory during a predetermined period, measurement results of a quality control specimen measured by the plurality of specimen measurement apparatuses 11 installed in the laboratory during a predetermined period, and the like). FIG. 47 shows examples of a request for information regarding maintenance of the specimen measurement apparatus 11 / a response to the request. In FIG. 47, examples of (1) a request and response for information regarding a reagent, and (2) a request and response regarding service/maintenance are shown, for example. Examples of various kinds of information corresponding to the request and response are shown in the table of FIG. 47, but the various kinds of information corresponding to the request and response are not limited to the examples shown in the table. The term "Consumables" as described in FIG. 47 refers to, for example, a cuvette used for measurement, a cleaning liquid for washing of a flow path in the apparatus, a pipette tip, and the like. The interface 5 can provide the application 6 with information regarding a plurality of specimen measurement apparatuses 11 collectively (for example, reagent remaining amount information of the plurality of specimen measurement apparatuses 11 installed in a laboratory, service schedule information of the plurality of specimen measurement apparatuses 11 installed in the laboratory, and the like). The interface 5 can provide the application 6 with remaining amount information of each of a plurality of types of reagents mounted on the specimen measurement apparatus 11, for example, in response to a request. The application 6 can request remaining amount information by designating a specific reagent container among a plurality of types of reagent containers placed on the specimen measurement apparatus 11, for example. The interface 5 can provide the application 6 with the remaining amount information of the designated reagent container in response to the request for the remaining amount information designating the reagent container, for example. FIG. 47 shows an example of a request regarding an operation of the specimen measurement apparatus 11. In FIG. 47, examples of (1) a request and response regarding an operation relating to specimen measurement, (2) a request and response regarding an operation relating to service/maintenance, and (3) a request and response regarding an operation of the specimen measurement apparatus 11 are shown, for example. Examples of various kinds of information corresponding to the request and response are shown in the table of FIG. 47, but the various kinds of information corresponding to the request and response are not limited to the examples shown in the table. The interface 5 can cause the application 6 to execute operations for a plurality of specimen measurement apparatuses 11 collectively (for example, registration of Rerun/Reflex rules for the plurality of specimen measurement apparatuses 11 installed in a laboratory, a request for startup/shutdown of the plurality of specimen measurement apparatuses 11 installed in a laboratory, and the like). In the example of FIG. 48, information indicating whether the operation is completed (for example, ACK corresponding to operation completion and NACK corresponding to operation incomplete (e.g., error)) is shown as a response to the operation request, for example.

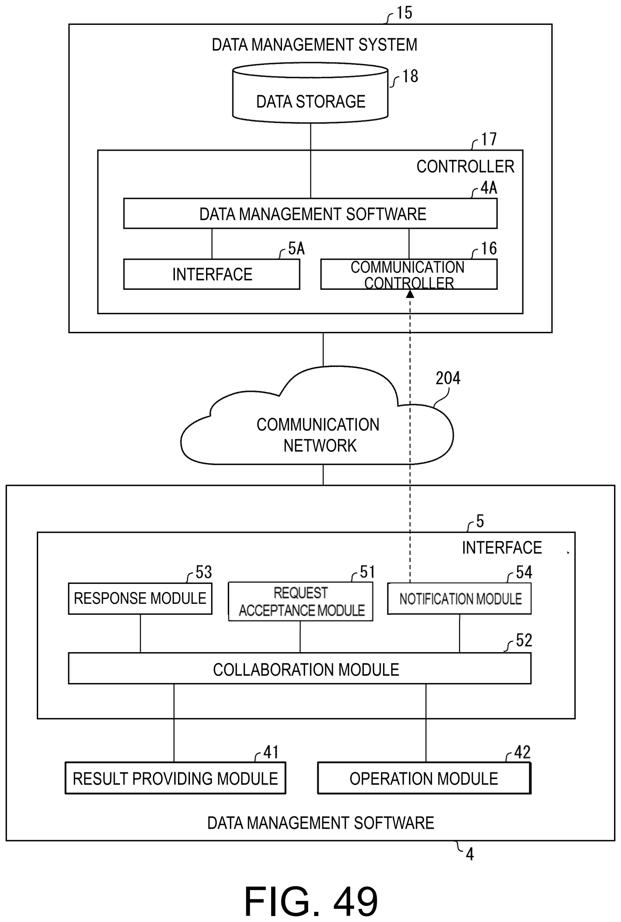

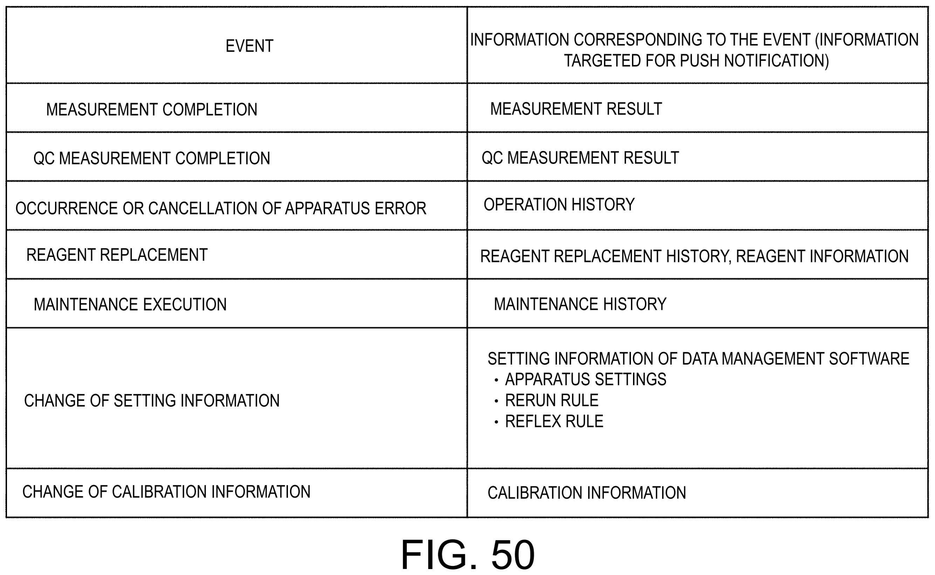

[PUSH Notification] FIG. 49 shows a configuration example of PUSH notification from the data management software 4 of the specimen measurement apparatus 11 and an imaging apparatus 12 to the data management system 15. The interface 5 may comprise a notification module 54 having a function for performing PUSH notification. The notification module 54 provides information corresponding to an event to the data management system 15 via the communication network 204 by PUSH notification, for example, when a predetermined event occurs. FIG. 50 shows an example of an event and an example of information corresponding to the event (information that is the subject of PUSH notification). For example, the notification module 54 provides the measurement result to the data management system 15 in response to the measurement result of the specimen being acquired by the specimen measurement apparatus 11. For example, the notification module 54 provides information related to an operation to the data management system 15 in response to a predetermined operation (for example, reagent replacement, maintenance, information setting, and the like) being performed on the specimen measurement apparatus 11. For example, the notification module 54 provides information related to a status change (for example, error information, operation history regarding the error, and the like) to the data management system 15 in response to a change in the status of the specimen measurement apparatus 11 (error occurrence, error cancellation, and the like).

The notification module 54 may be provided in the data management software 4 instead of the interface 5. The notification module 54 may also be provided in the control unit 7 as software independent of the interface 5 and the data management software 4.

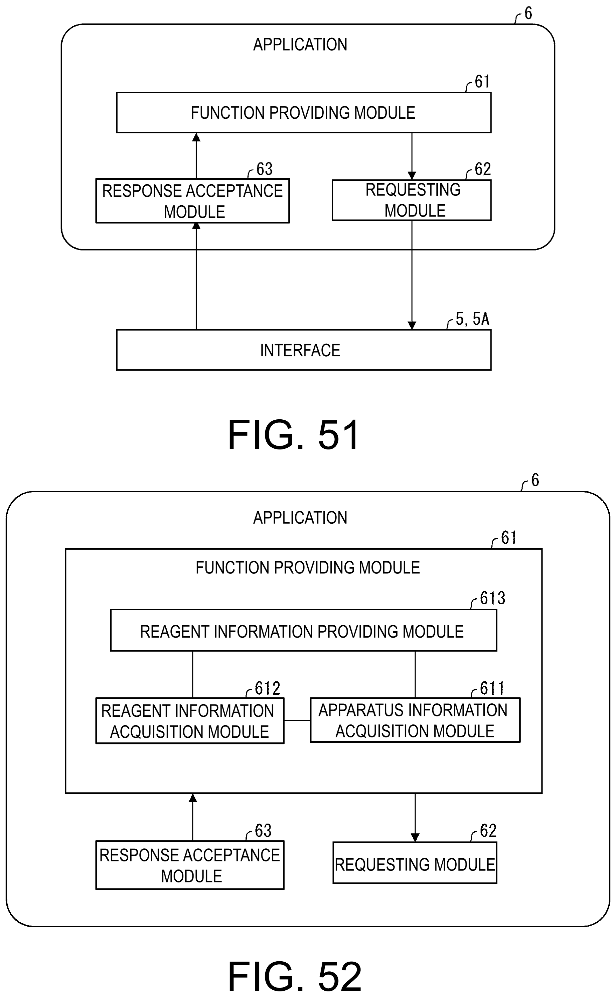

[Application] FIG. 51 shows a configuration example of the application 6. The application 6 includes, for example, a function providing module 61, a requesting module 62, and a response acceptance module 63.

The function providing module 61 provides a function for expanding the specimen measurement system 1. The function providing module 61 provides a function according to the type of the application 6. For example, the function providing module 61 provides a function according to the type of the application 6, such as providing a QC result (QC chart or the like), a function for managing the reagent remaining amount placed on the specimen measurement apparatus 11, a function regarding management of errors that occurred in the specimen measurement apparatus 11, a function regarding maintenance of the specimen measurement apparatus 11, and a function regarding operation management of the specimen measurement apparatus 11.

function providing module 61 may have a function for logging a user in with a service provider's account for a service provided by the application 6. In this case, the application 6 provides the service by function providing module 61 only when the user is logged in with the service provider's account.

For example, when information regarding the specimen measurement apparatus 11 is required, function providing module 61 requests the requesting module 62 to acquire the information. In response to the request from function providing module 61, the requesting module 62 requests information from the interface 5,5A. The requesting module 62 requests the information, for example, by a command C defined by a combination of a URI and an HTTP method, as described above. Further, when control of the specimen measurement apparatus 11 (e.g., registration and change of setting information of the specimen measurement apparatus 11, etc.) is required according to the operation of function providing module 61, function providing module 61 makes a request related to the control (e.g., a request for registration and change of setting information, etc.) to the requesting module 62. The requesting module 62 makes the request related to the control to the interface 5/5A. The requesting module 62 makes the request related to the control, for example, by a command C defined by a combination of a URI and an HTTP method, as described above. The requesting module 62 generates the command C including the URI, for example, based on the information provided from function providing module 61, and transmits the request to the interface 5,5A. For example, when requesting information regarding the specimen measurement apparatus 11, function providing module 61 notifies the requesting module 62 of an instruction regarding the requested information (e.g., results measured by the specimen measurement apparatus 11 of a specific ID during a predetermined period). The requesting module 62 generates the command C based on the notified instruction. The instruction from function providing module 61 to the requesting module 62 is notified, for example, based on an operation by a user of the application 6. For example, when the user requests a measurement result acquired by the specimen measurement apparatus 11 of a specific ID on a specific day, function providing module 61 notifies the requesting module 62 of an instruction corresponding to the request. When generating the command C, the requesting module 62 generates the command C, for example, by referring to setting information regarding URI creation (e.g., an IP address of a server of a request destination). The IP address of the server of the request destination itself may be set as the setting information, or a URL (Uniform Resource Locator) of the server may be set. The IP address of the server of the request destination is, for example, the IP address of the control unit 7 of the specimen measurement apparatus 11 set in a laboratory, or the IP address of a data management system 15. When the address of the server of the request destination is set by the URL, the requesting module 62 queries a DNS (Domain Name System) for the IP address, for example, based on a domain name included in the URL. The requesting module 62 generates the URI based on the IP address notified from the DNS. The IP address or the URL may be input by the user via a GUI of the application 6. The generation of the URI and the command C by the requesting module 62 is similar in an example of the application 6 described later.

The response acceptance module 63 accepts a response corresponding to the request by the requesting module 62 from the interface 5, 5A, and passes the content of the response to function providing module 61.

[Example of application 6] FIG. 51 shows a configuration example when the application 6 is a reagent management application. The reagent management application includes, for example, the functions of the remaining amount manager 701 and/or the reagent manager 702 described above. The reagent management application provides a function for managing, for example, the number of replacements and the number of recyclings of a reagent container. function providing module 61 of the application 6 in the configuration example includes, for example, an apparatus information acquisition module 611, a reagent information acquisition module 612, and a reagent information providing module 613.

The apparatus information acquisition module 611 requests the requesting module 62 to acquire information regarding the specimen measurement apparatus 11 which is a target of reagent management. For example, the apparatus information acquisition module 611 requests the requesting module 62 to acquire information regarding the specimen measurement apparatus 11 in which a reagent is installed, in order to acquire reagent information to be managed. For example, when the application 6 is used in a laboratory, the apparatus information acquisition module 611 requests the requesting module 62 to acquire information (e.g., an apparatus ID of the specimen measurement apparatus 11, a name of the specimen measurement apparatus 11, etc.) regarding the specimen measurement apparatus 11 installed in a facility 13 such as a laboratory. The apparatus information acquisition module 611 may request the requesting module 62 to acquire information (e.g., information regarding a type of the specimen measurement apparatus 11, the apparatus ID of the specimen measurement apparatus 11, the name of the specimen measurement apparatus 11, etc.) regarding a predetermined type of the specimen measurement apparatus 11 among a plurality of types of the specimen measurement apparatus 11 installed in the laboratory. The requesting module 62 generates a URI, for example, based on the content of the request from the apparatus information acquisition module 611, and requests the interface 5, 5A to acquire information by the command C generated by combining the generated URI and the HTTP method "GET". The URI generated by the requesting module 62 apparatus is, for example, "http://127.0.0.1:8080/XR//XXXX". In this example of the URI, a "server address" is specified as "127.0.0.1:8080", an "interface ID" is specified as "XR", an "apparatus ID" is not specified, a "resource" is specified as "XXXX", and a "query parameter" is not specified. "XXXX" is an API endpoint corresponding to the information regarding the specimen measurement apparatus 11 (e.g., information regarding the type of the specimen measurement apparatus 11, the apparatus ID of the specimen measurement apparatus 11, the name of the specimen measurement apparatus 11, etc.). The "server address" "127.0.0.1:8080" is an address corresponding to, for example, the interface 5A of the data management system 15 that manages information regarding a plurality of the specimen measurement apparatuses 11. If there are a plurality of "server addresses", a plurality of URIs (where each URI corresponds to each of the plurality of addresses) may be generated. The "interface ID" "XR" is set, for example, according to the type of the specimen measurement apparatus 11 that is the target of information acquisition. A plurality of URIs may be generated according to the type of requested information. The response acceptance module 63 accepts a response corresponding to the request of the requesting module 62, and passes the accepted information to the apparatus information acquisition module 611.

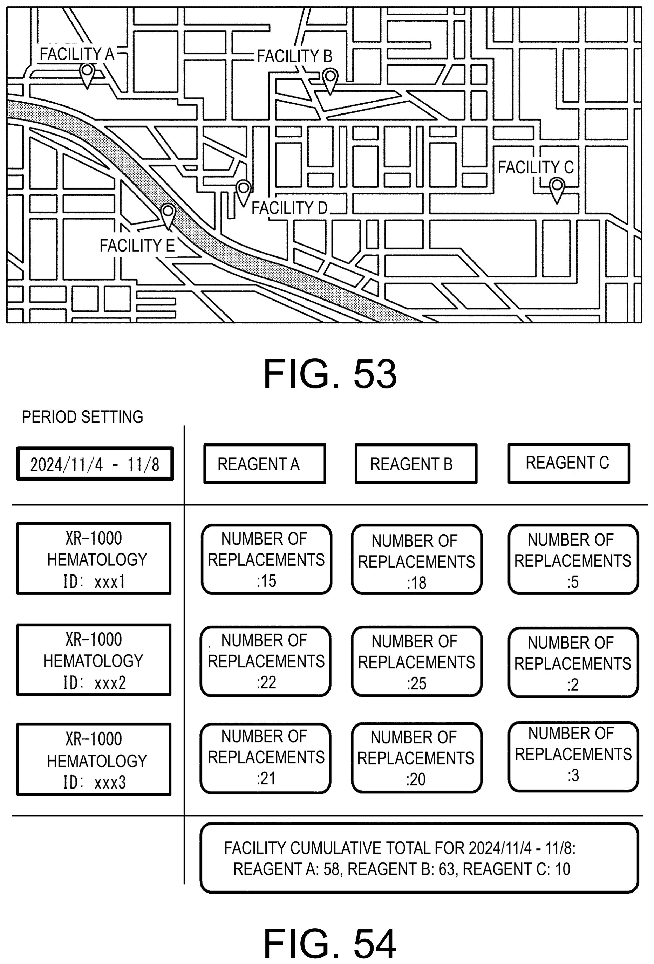

The apparatus information acquisition module 611 requests the requesting module 62 to acquire information regarding the specimen measurement apparatus 11 installed in the facility 13 selected from the GUI illustrated in FIG. 53, for example. As in the example of FIG. 53, function providing module 61 displays the facility 13 in association with the position on a map, for example, based on GPS (Global Positioning System) information of the terminal apparatus 101 in which the application 6 is installed. The facility 13 displayed on the map is, for example, a facility set in the application 6 as a target facility 13 managed by the user of the terminal apparatus 101. Function providing module 61 may display a list for the user to select the facility 13, for example, based on the information of the facility 13 set in the application 6.

The reagent information acquisition module 612 requests the requesting module 62 to acquire information regarding reagents based on the information of the specimen measurement apparatus 11 acquired by the apparatus information acquisition module 611. For example, the reagent information acquisition module 612 requests the requesting module 62 to acquire the reagent information for each of the specimen measurement apparatuses 11. For example, the requesting module 62 generates a URI in response to the request, and requests the interface 5, 5A to acquire information by the command C generated by combining the generated URI and the HTTP method "GET". The URI generated by the requesting module 62 is, for example, "http://127.0.0.1:8080/XR/XR-20^AB123456^11000/YYYY". In this URI, the "server address" is specified as "127.0.0.1:8080", the "interface ID" is specified as "XR", the "apparatus ID" is specified as "XR-20^AB123456^11000", the "resource" is specified as "YYYY", and a "query parameter" is not specified. "YYYY" is an API endpoint corresponding to the reagent information. "YYYY" is set with an API endpoint corresponding to, for example, the remaining amount information of the reagent. The "apparatus ID" "XR-20^AB123456^11000" is set, for example, based on the information acquired by the apparatus information acquisition module 611 (the apparatus ID of the specimen measurement apparatus 11).

The reagent information acquisition module 612 requests the requesting module 62 to acquire information regarding reagents, for example, at a predetermined cycle (e.g., every 1 minute, every 30 minutes, every 1 hour, etc.). The reagent information acquisition module 612 provides the remaining amount information acquired at the predetermined cycle to the reagent information providing module 613, for example. The reagent information providing module 613 counts the number of times the remaining amount of the reagent container has run out, for example, based on the information received from reagent information acquisition module 612. The reagent information providing module 613 manages the number of times the remaining amount has been depleted as the number of replacements of the reagent container, for example.

The requesting module 62 may generate a plurality of URIs corresponding to each of the plurality of specimen measurement apparatuses 11. In this case, the requesting module 62 generates a URI having a different "apparatus ID" for each specimen measurement apparatus 11. In addition, for example, the requesting module 62 can request the reagent information of the plurality of specimen measurement apparatuses 11 collectively with a single URI. In this case, the "apparatus ID" of the URI is listed, for example, by separating the plurality of apparatus IDs with a predetermined delimiter (e.g., [], , etc.). The response acceptance module 63 accepts a response corresponding to the request of the requesting module 62, and passes the accepted information to the reagent information acquisition module 612.

The reagent information providing module 613 provides information regarding reagent management based on the information acquired by the reagent information acquisition module 612. The reagent information providing module 613 provides the information regarding reagent management by a GUI, for example. In the example of the GUI shown in FIG. 54, the reagent information providing module 613 provides the number of replacements of a plurality of reagents mounted on each of the plurality of specimen measurement apparatuses 11. The reagent information providing module 613 provides the cumulative number of replacements during a period set by a user (e.g., "2024/11/4-11/8" in the example of FIG. 54), for example. The reagent information providing module 613 provides the cumulative number of replacements at the facility during the set period, for example. For example, the user can switch the display content of the number of replacements by setting a desired timeframe (e.g., day by day, week by week, month by month, every three months, every six months, every year, etc.) via the GUI provided by the reagent information providing module 613. The reagent information providing module 613 counts the number of times the remaining amount of the reagent has run out, for example, based on the remaining amount information of the reagent acquired by the reagent information acquisition module 612. The reagent information providing module 613 counts the number of times the remaining amount has run out, for example, for every predetermined time (e.g., 1 hour). For example, the reagent information providing module 613 manages the number of replacements as in "the number of replacements of reagent A of the apparatus with IDxxx1 from 9:00 am to 10:00 am on 2024/11/4 is 2". The reagent information providing module 613 totals the count number managed in this manner according to the period set by the user in the example of FIG. 54, and displays the total number on the GUI. For example, when the user sets the period as "2024/11/4", the reagent information providing module 613 totals the count number for every predetermined period (e.g., 1 hour) on 2024/11/4.

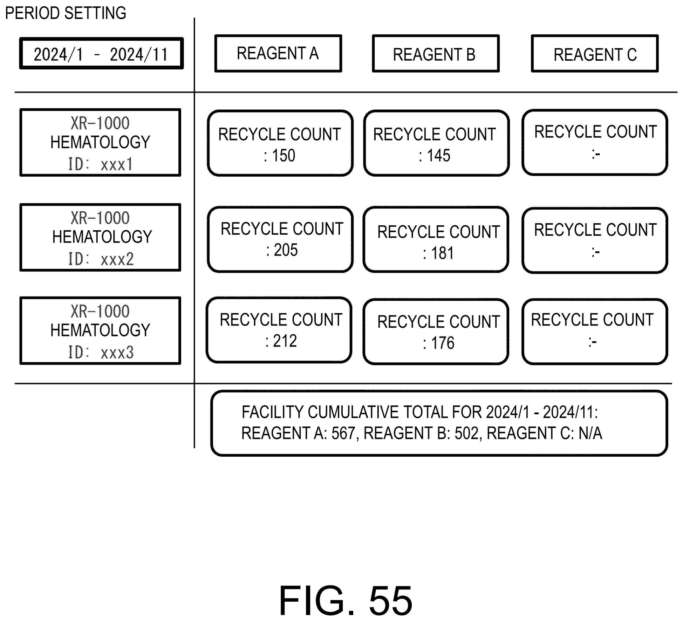

In the example of the GUI shown in FIG. 55, the reagent information providing module 613 displays the number of recycled reagent containers for each of the plurality of specimen measurement apparatuses 11. The number of recycled reagent containers refers to, for example, the number of reagent containers provided to a recycling contractor.

The reagent information providing module 613, for example, determines the number of reagent replacements as the number of recycles, and displays the determined number on the GUI. The reagent information providing module 613 may calculate the number of recycles from the number of reagent replacements and display the number on the GUI, for example, as shown in the example of FIG. 55. For example, the reagent information providing module 613 calculates the number of recycles by multiplying the number of reagent replacements by a predetermined coefficient. The predetermined coefficient may be set, for example, based on the rate at which the replaced reagent containers are disposed for recycling (e.g., "0.95"). The reagent information providing module 613 can display the number of recycles during a period set by the user.

[Configuration Example for Providing application 6 Function as a Web Service] The function of the application 6 is not limited to being provided as stand-alone software executed by the terminal apparatus 101 and the specimen measurement apparatus 11, but may be provided as a Web service.

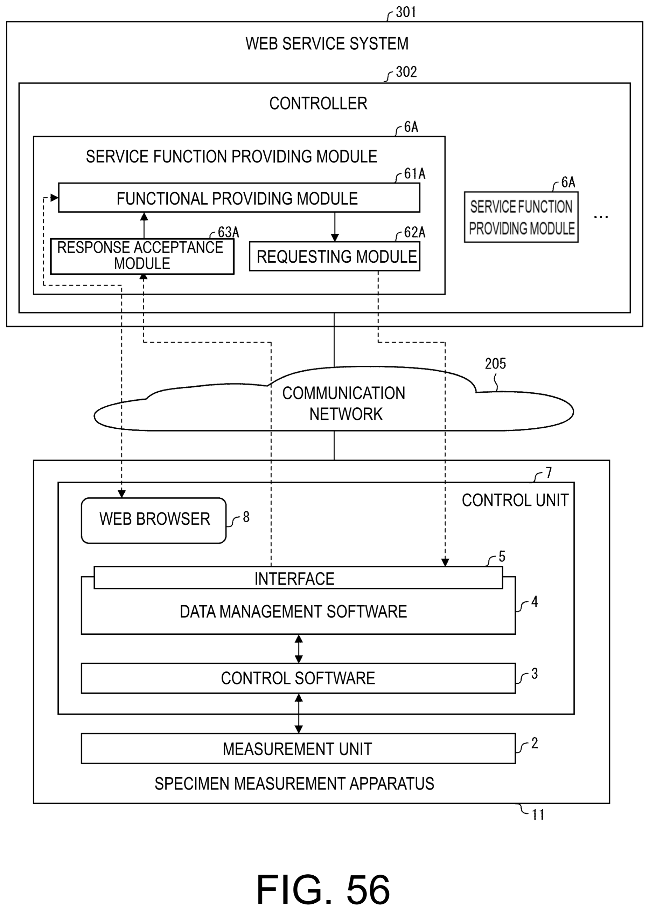

FIG. 56 shows a configuration example for providing the function of the application 6 as a Web service. In the configuration example shown in the figure, the specimen measurement system 1 includes the specimen measurement apparatus 11 equipped with a Web browser 8 and a Web service system 301 connected to the specimen measurement apparatus 11 via a communication network 205. The communication network 205 is, for example, the Internet. The specimen measurement apparatus 11 includes the measurement unit 2 and the control unit 7 having a processor 71 that executes the control software 3, the data management software 4, the interface 5, and the Web browser 8.

The Web service system 301 includes a controller 302 having a processor that executes a service function providing module 6A that functions as a Web service. The service function providing module 6A has functions equivalent to the application 6. The service function providing module 6A includes, for example, a function providing module 61A, a requesting module 62A, and a response acceptance module 63A. The function providing module 61A, the requesting module 62A, and the response acceptance module 63A have functions equivalent to function providing module 61, the requesting module 62, and the response acceptance module 63, respectively.

In the case of this configuration example, information and functions can be used via the interface 5 of the specimen measurement apparatus 11 by accessing the service function providing module 6A that functions as a Web service with the Web browser 8 of the specimen measurement apparatus 11.

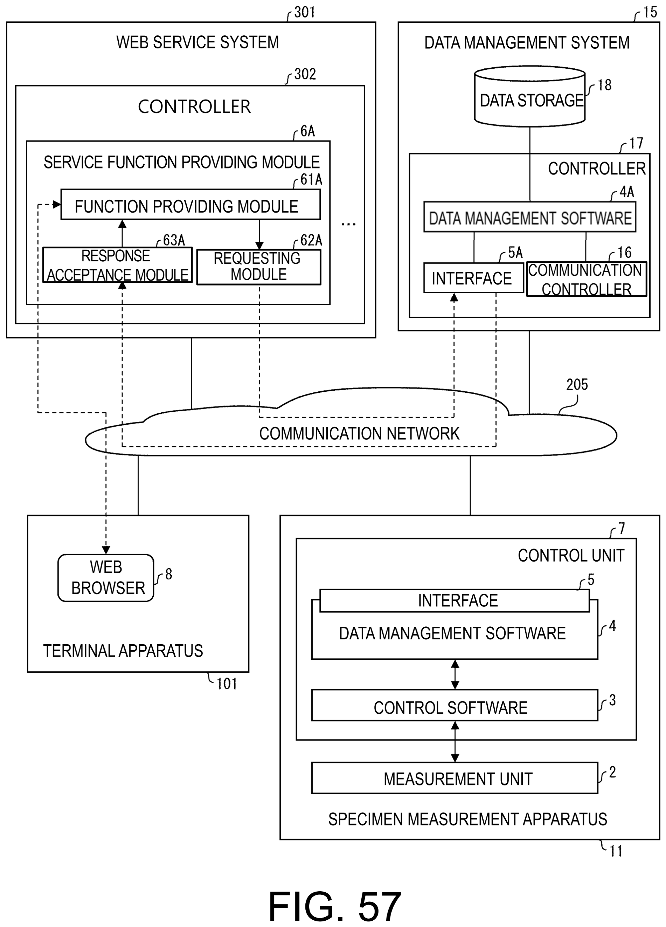

FIG. 57 shows another configuration example for providing the function of the application 6 as a Web service. In the configuration example shown in the figure, the specimen measurement system 1 has a configuration in which the specimen measurement apparatus 11, the Web service system 301, the data management system 15, and the terminal apparatus 101 equipped with the Web browser 8 are connected via the communication network 205.

In the case of this configuration example, information managed by a data storage 18 can be used via the interface 5A of the data management system 15 by accessing the service function providing module 6A that functions as a Web service with the Web browser 8 of the terminal apparatus 101.

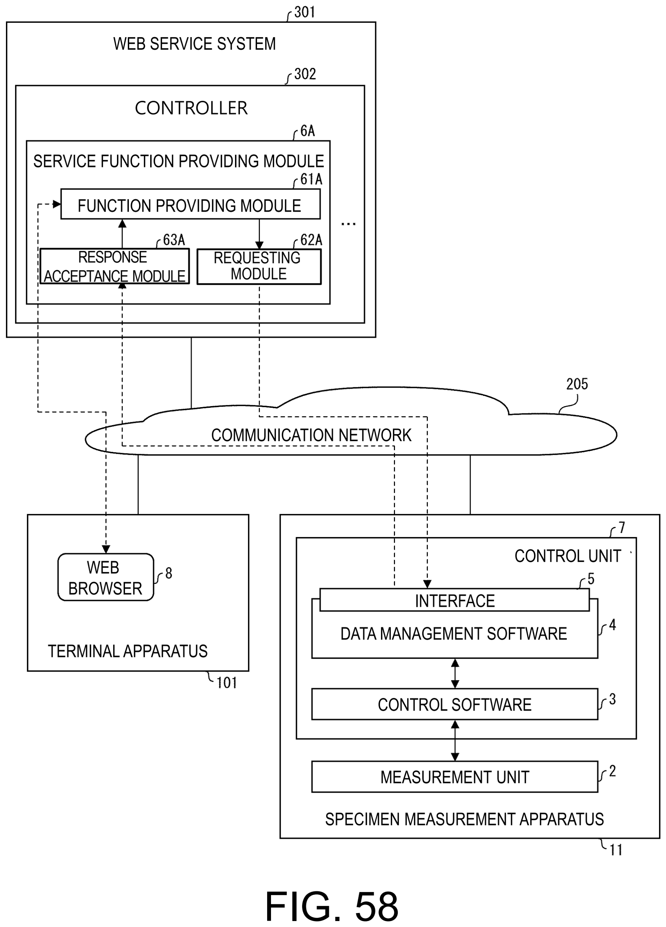

FIG. 58 shows still another configuration example for providing the function of the application 6 as a Web service. In the configuration example shown in the figure, the specimen measurement system 1 has a configuration in which the specimen measurement apparatus 11, the Web service system 301, and the terminal apparatus 101 equipped with the Web browser 8 are connected via the communication network 205.

In the case of this configuration example, information and functions can be used via the interface 5 of the specimen measurement apparatus 11 by accessing the service function providing module 6A that functions as a Web service with the Web browser 8 of the terminal apparatus 101.

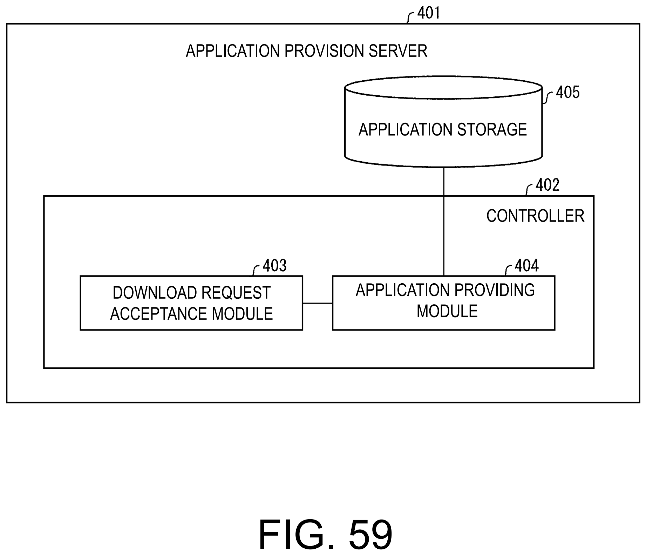

[Providing Forms of application 6] The providing forms of the application 6 will be described. FIG. 59 shows a configuration example of an application provision server 401 that provides the application 6. The application provision server 401 is arranged on a cloud, for example, and is communicably connected to the terminal apparatus 101 and the control unit 7 via a communication network. The terminal apparatus 101 and the control unit 7 are, for example, a smartphone (iPhone, Android terminal), a tablet (iPad, Android tablet, Windows tablet), a Windows PC with Windows OS installed, or a Mac with Mac OS installed. The application provision server 401 includes a controller 402 having a processor that executes a download request acceptance module 403 and an application providing module 404, and an application storage 405 that stores the application 6.

An operator of the terminal apparatus 101 and the control unit 7 logs into a predetermined download application (e.g., App Store, Google Play Store, Windows Store) with an account ID managed by an application provider (e.g., Apple ID, Google account, Microsoft account, etc.), and requests the application provision server 401 to download a desired application 6 via the download application.

The download request acceptance module 403 notifies the application providing module 404 of information regarding the requested application 6, for example. The application providing module 404 searches for and acquires the notified application 6 from the application storage 405, and transmits it to the requester (the terminal apparatus 101 or the control unit 7). The application providing module 404 may transmit an installer of the application 6 to the requester (the terminal apparatus 101 or the control unit 7), for example. The terminal apparatus 101 or the control unit 7 that has received the installer installs the application 6 based on the installer.

The application provision server 401 may be capable of supporting multiple platforms (e.g., Windows, MacOS, iOS, Android). Also, a plurality of the application provision servers 401 may exist depending on the type of platform. For example, there may be an application provision server 401 that provides the application 6 for iOS (e.g., App Store), an application provision server 401 that provides the application 6 for Android (e.g., Google Play), and an application provision server 401 that provides the application 6 for Windows (e.g., Microsoft Store), and the like. In this case, the terminal apparatus 101 and the control unit 7 request the provision of the application 6 in a method corresponding to the platform.

The terminal apparatus 101 and the control unit 7 equipped with iOS request the download of a desired application 6 searched for in a predetermined download application (e.g., App Store) from the application provision server 401 that provides the application 6 for iOS, for example. Also, the terminal apparatus 101 and the control unit 7 equipped with Android OS request the download of a desired application 6 searched for in a predetermined download application (e.g., Google Play Store) from the application provision server 401 that provides the application 6 for Android, for example. Also, the terminal apparatus 101 and the control unit 7 equipped with Windows OS request the download of a desired application 6 searched for in a predetermined download application (e.g., Microsoft Store) from the application provision server 401 that provides the application 6 for Windows, for example.

In some medical facilities and laboratories, there may be cases where the terminal apparatus 101 and the control unit 7 are not connected to the Internet or the like. In such a case, for example, a maintenance person may copy the installer of the application 6 from a medium (e.g., CD/DVD/USB memory/external HDD/SDD) storing the installer to the terminal apparatus 101 and the control unit 7, and install the application 6 on the terminal apparatus 101 and the control unit 7.

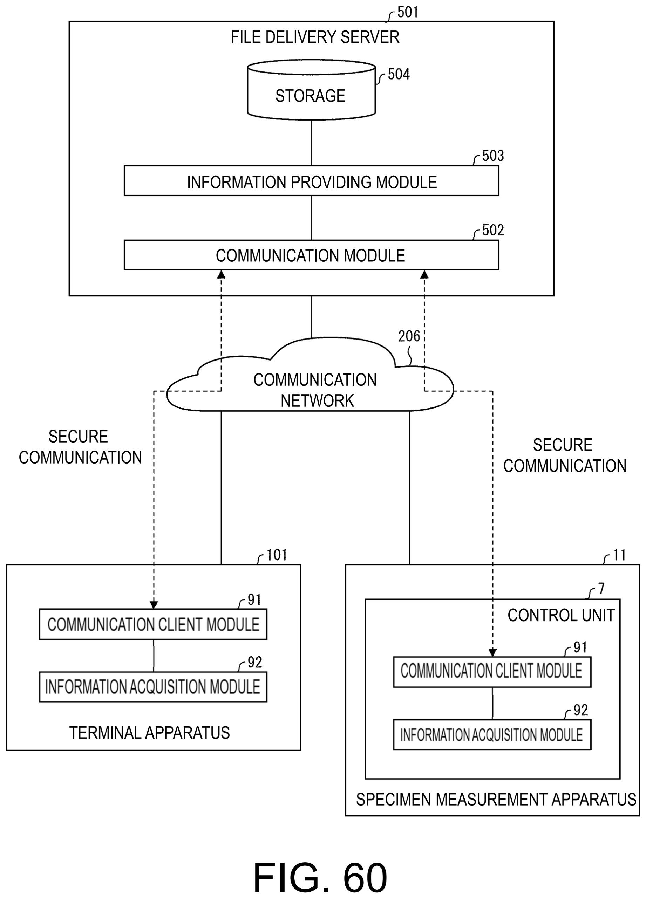

In some medical facilities and laboratories, the terminal apparatus 101 and the control unit 7 may be permitted to communicate with the outside only through a communication network where security is ensured (e.g., VPN: Virtual Private Network). In this case, the application 6 may be distributed, for example, from a server capable of setting up a secure communication network with the terminal apparatus 101 and the control unit 7. FIG. 60 shows a configuration example for providing the application 6 under a secure communication environment. The secure communication environment includes an environment in which a file delivery server 501 is installed in an intranet of the facility and is accessible from the terminal apparatus 101 and the control unit 7 via the intranet.

The file delivery server 501 includes a processor that executes a communication module 502 and an information providing module 503, and a storage 504 that stores data necessary for installing the application 6 (e.g., an installer and a setting file of the application 6). The communication module 502 has, for example, a VPN server function. The information providing module 503 has, for example, a Web server function.

The terminal apparatus 101 and the control unit 7 have a processor that executes a communication client module 91 and an information acquisition module 92. The communication client module 91 has a VPN client function, for example, and sets up a secure communication network 206 with the communication module 502. The information acquisition module 92 is, for example, a Web browser.

The information acquisition module 92 of the terminal apparatus 101 and the control unit 7 accesses the information providing module 503 of the file delivery server 501 via the secure communication network 206. The information providing module 503 provides data that can be downloaded by the terminal apparatus 101 and the control unit 7 to the information acquisition module 92, for example. The information acquisition module 92 presents the data on a Web page. When an operator of the terminal apparatus 101 and the control unit 7 selects the data to be downloaded from the Web page, the information providing module 503 acquires the corresponding data from the storage 504 and transmits it to the information acquisition module 92. The information acquisition module 92 installs the application 6 based on the acquired data.

The terminal apparatus 101 and the control unit 7 may download the installer of the application 6 via the Internet and install the application 6 using the installer.

[Web Clip] The function of the application 6 may be provided to the terminal apparatus 101 and the control unit 7 as a Web clip (shortcut to a Web site). The service provider notifies the terminal apparatus 101 and the control unit 7 of a URL (Uniform Resource Locator) which is an access destination of the Web clip, for example. The operator of the terminal apparatus 101 and the control unit 7 registers the notified URL as a Web clip on the home screen or desktop of the terminal apparatus 101 and the control unit 7, for example, as a bookmark. The operator of the terminal apparatus 101 and the control unit 7 may access the Web site of the service provider by a Web browser installed on the terminal apparatus 101 and the control unit 7, for example, and access a menu that provides a desired service from the Web site, and bookmark the site of the menu as a Web clip.

System configuration examples for using the function of the application 6 using the Web clip are similar to those in FIGS. 56 to 58. In the configuration example shown in FIG. 56, information and functions can be used via the interface 5 of the specimen measurement apparatus 11 by accessing the service function providing module 6A that functions as a Web service of the URL specified by the Web clip with the Web browser 8 of the control unit 7. Similarly, in the configuration example shown in FIG. 57, information managed by the data storage 18 can be used via the interface 5A of the data management system 15 by accessing the service function providing module 6A that functions as a Web service of the URL specified by the Web clip with the Web browser 8 of the terminal apparatus 101. Similarly, in the configuration example shown in FIG. 58, information and functions can be used via the interface 5 of the specimen measurement apparatus 11 by accessing the service function providing module 61A that functions as a Web service of the URL specified by the Web clip with the Web browser 8 of the terminal apparatus 101.

[Provision of application 6 by MDM/MAM] The application 6 may be provided without going through a predetermined application provider (e.g., Apple Store, Google Play Store, Microsoft Store). For example, the application 6 may be provided to the terminal apparatus 101 and the control unit 7 without going through a predetermined application provider, by utilizing a mechanism of MDM (Mobile Device Management) or MAM (Mobile Application Management).

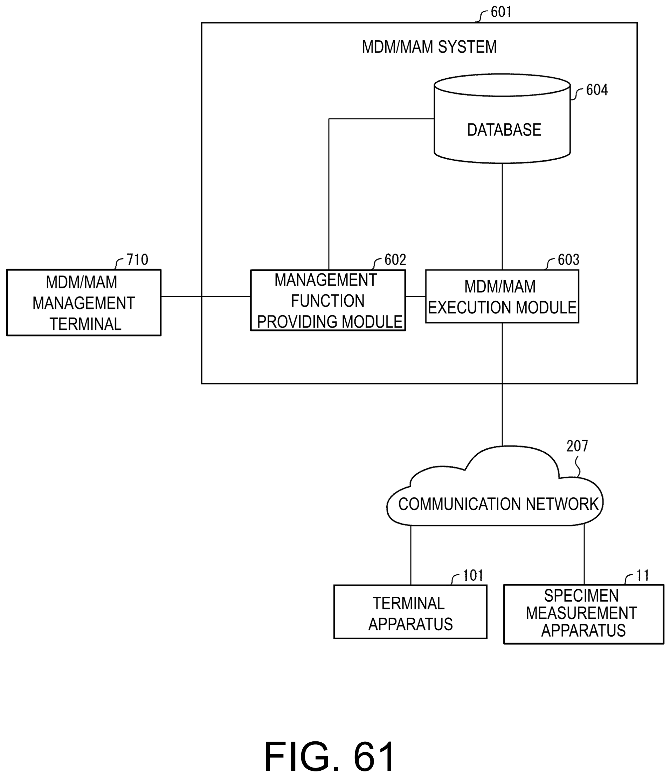

FIG. 61 shows a configuration example for providing the application 6 using MDM or MAM. The terminal apparatus 101 and the control unit 7 are communicably connected to an MDM/MAM system 601 via a communication network 207. The terminal apparatus 101 and the control unit 7 are registered with the MDM/MAM system 601 and managed by the MDM/MAM system 601 according to a management policy. To manage the terminal apparatus 101 and the control unit 7 with the MDM/MAM system 601, a management profile is installed on the terminal apparatus 101 and the control unit 7, for example. For example, information for installing the management profile (e.g., a URL for downloading an installer) is notified to the terminal apparatus 101 and the control unit 7 (e.g., by e-mail or the like).

When the management profile is installed on the terminal apparatus 101 and the control unit 7, the terminal apparatus 101 and the control unit 7 are registered with the MDM/MAM system 601, and information regarding the terminal apparatus 101 and the control unit 7 is registered in a database 604 of the MDM/MAM system 601.

An MDM/MAM execution module 603 acquires information of the application 6 installed on the terminal apparatus 101 and the control unit 7, and registers it in an application list of the database 604. The MDM/MAM execution module 603 can distribute the application 6 to the terminal apparatus 101 and the control unit 7. The terminal apparatus 101 and the control unit 7 install the distributed application 6. Thereby, the application 6 can be provided without going through a predetermined application provider (App Store, etc.).

A management functional providing module 602 provides a management function of the terminal apparatus 101 and the control unit 7 to an MDM/MAM management terminal 710. For example, the management functional providing module 602 provides a Web site for managing the terminal apparatus 101 and the control unit 7 to the MDM/MAM management terminal 710. Through the Web site, the operator of the MDM/MAM management terminal 710 performs, for example, registration and change of a management policy to the terminal apparatus 101 and the control unit 7, distribution of the application 6 to the terminal apparatus 101 and the control unit 7, and management of the application 6 installed on the terminal apparatus 101 and the control unit 7.

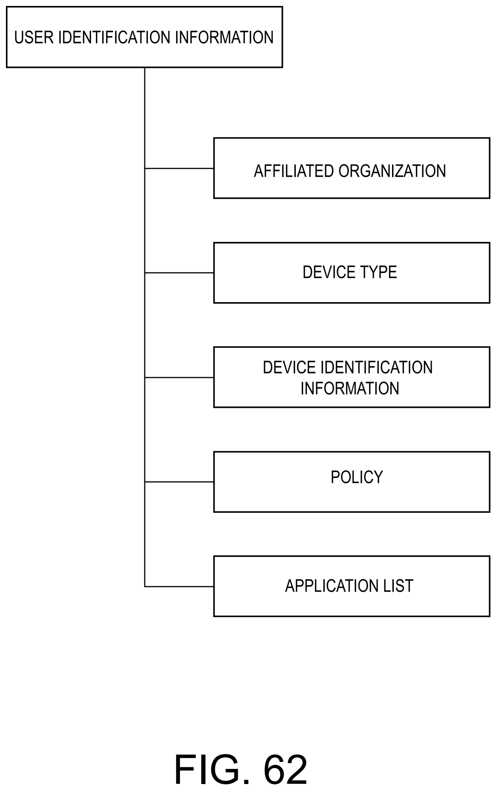

FIG. 62 is a diagram showing an example of a data structure of the database 604 when the database 604 is a relational database. As shown in the figure, information managed by the database 604 includes, for example, user identification information, affiliated organization, device type, device identification information, policy, and an application list.

The user identification information is information for identifying a user of the terminal apparatus 101 and the control unit 7. For example, it is an ID assigned to the user from the MDM/MAM system 601, the user's name, a combination thereof, or the like.

The affiliated organization is identification information of an organization to which the terminal apparatus 101 and the control unit 7 belong. For example, it is an ID assigned to the organization from the MDM/MAM system 601, the organization name, a combination thereof, or the like.

The device type is information for identifying the platform of the device. For example, it is iOS, Android, Windows, Mac, or the like.

The device identification information is identification information unique to the terminal apparatus 101 and the control unit 7 that are the management targets in the MDM/MAM system 601. For example, it is IMEI (International Mobile Equipment Identifier), serial number, SIM (Subscriber Identity Module) card number, telephone number, MAC (Media Access Control) address, a combination thereof, or the like.

The policy is a management policy by the MDM/MAM system 601. For example, it is setting information of the management policy.

The application list is information regarding the application 6 installed on the terminal apparatus 101 and the control unit 7 corresponding to the user identification information. For example, it is a list describing the identification information of the application 6 (application name, application ID) and the version of the application.

The present invention is not limited to the embodiment described above, and various modifications are possible within the scope indicated in the claims, and embodiments obtained by appropriately combining the technical means disclosed in different embodiments are also included in the technical scope of the present invention.

The functions provided in each apparatus (in particular, the control unit 7, the data management system 15, and the terminal apparatus 101) included in the specimen measurement system 1 can be realized by a program for causing a computer to function as the apparatus, and a program for causing a computer to function as each control block of the apparatus. The program may be recorded on one or more computer-readable recording media, not temporarily.

### [Remarks]

The present disclosure includes following items 1-40.
Item 1. A specimen measurement system comprising:
   a measurement unit configured to measure a specimen; and
   a control unit configured to analyze measurement data from the measurement unit;
   wherein the measurement unit comprises:
      a first reagent container accommodating a first reagent containing a substance that binds to an analyte in the specimen;
      a reagent holder configured to hold the first reagent container;
      a specimen processor configured to prepare a measurement sample by mixing the first reagent and the specimen; and
      a detector configured to interrogate the analyte for the measurement of the measurement sample;
      wherein the measurement unit is arranged on a housing that stores a second reagent container, the second reagent container containing a second reagent used for at least one of: (i) washing of a flow path of the measurement unit, (ii) dilution of the specimen, (iii) preparation of the measurement sample, and (iv) interrogation of the analyte of the measurement sample by the detector,
      wherein the second reagent container stored in the housing is connected to the measurement unit via a reagent feeding tube; and
      wherein the control unit is programmed to execute operations including:
         analyzing the measurement data acquired by the detector to generate a measurement result; and
         managing a number of replacements of the second reagent container based on a remaining amount of the second reagent.
Item 2. The specimen measurement system according to Item 1, wherein the second reagent container is a container formed of a recyclable material.
Item 3. The specimen measurement system according to Item 1, wherein the second reagent container is a container formed of a resin.
Item 4. The specimen measurement system according to Item 1, wherein the second reagent container is a mono-material container.
Item 5. The specimen measurement system according to Item 1, wherein the second reagent container is a container formed of a polyethylene-based resin.
Item 6. The specimen measurement system according to Item 1, wherein the control unit is configured to estimate the number of the second reagent containers collected for recycling based on the number of replacements.
Item 7. The specimen measurement system according to Item 1, wherein a capacity of the second reagent container is larger than a capacity of the first reagent container.
Item 8. The specimen measurement system according to Item 1, comprising a plurality of types of the first reagent containers corresponding to a plurality of types of measurement items, wherein the second reagent contained in the second reagent container is shared for a plurality of operations of the measurement unit corresponding to the plurality of types of measurement items.
Item 9. The specimen measurement system according to Item 1, wherein the first reagent contained in the first reagent container is exclusively used for the preparation of the measurement sample in the measurement unit.
Item 10. The specimen measurement system according to Item 1, comprising a plurality of types of the first reagent containers corresponding to a plurality of types of measurement items, wherein the first reagents contained in the plurality of types of the first reagent containers is exclusively used for the preparation of the measurement sample for measuring a corresponding measurement item in the measurement unit.
Item 11. The specimen measurement system according to Item 1, wherein a capacity of the second reagent container is not less than 2 liters and not more than 25 liters.
Item 12. The specimen measurement system according to Item 1, wherein a capacity of the first reagent container is not less than 1 ml and not more than 300 ml.
Item 13. The specimen measurement system according to Item 1, wherein
   the measurement unit comprises a first opening/closing part that allows placing the first reagent container into the reagent holder and removing the first reagent container from the reagent holder, and
   the housing comprises a second opening/closing part that allows placing the second reagent container and removing the second reagent container.
Item 14. The specimen measurement system according to Item 1, wherein
   the measurement unit comprises a first opening/closing part that allows placing the first reagent container into the reagent holder and removing the first reagent container from the reagent holder,
   the housing comprises a second opening/closing part that allows placing the second reagent container and removing the second reagent container, and
   the second opening/closing part is disposed below the first opening/closing part.
Item 15. The specimen measurement system according to Item 1, wherein
   a plurality of the second reagent containers are placed in the housing.
Item 16. The specimen measurement system according to Item 1, wherein
   a plurality of the second reagent containers are placed in the housing, and while at least one of the plurality of the second reagent containers is being replaced, the measurement unit operates using the second reagent supplied from another of the second reagent containers.
Item 17. The specimen measurement system according to Item 1, wherein
   the control unit manages the number of replacements for per facility where at least one specimen measurement apparatus including the measurement unit and the control unit is installed.
Item 18. The specimen measurement system according to Item 1, wherein
   the control unit manages information indicating whether or not the second reagent container installed in the housing is a recycled product.
Item 19. The specimen measurement system according to Item 1, wherein
   the control unit manages a number of times of having used a recycled second reagent container based on information indicating whether or not the second reagent container installed in the housing is a recycled product.
Item 20. A specimen measurement apparatus comprising:
   a measurement unit configured to measure a specimen, and
   a control unit configured to analyze measurement data from the measurement unit; wherein the measurement unit comprises:
   a first reagent container configured to contain a first reagent including a substance that binds to an analyte in the specimen;
   a reagent holder configured to holder the first reagent container;
   a specimen processor configured to prepare a measurement sample by mixing the first reagent and the specimen; and
   a detector configured to interrogate the analyte for the measurement of the measurement sample;
   wherein the measurement unit is arranged on a housing that stores a second reagent container, the second reagent container containing a second reagent used for at least one of: (i) washing of a flow path of the measurement unit, (ii) dilution of the specimen, (iii) preparation of the measurement sample, and (iv) interrogation of the analyte of the measurement sample by the detector,
   wherein the second reagent container stored in the housing is connected to the measurement unit via a reagent feeding tube; and
   wherein the control unit is programmed to execute operations including:
      analyzing the measurement data acquired by the detector to generate a measurement result; and
      managing a remaining amount of the second reagent for a management of a number of times the second reagent container has been replaced.
Item 21. The specimen measurement apparatus according to Item 20, wherein
   the second reagent container is a container formed of a recyclable material.
Item 22. The specimen measurement apparatus according to Item 20, wherein
   the second reagent container is a container formed of a resin.
Item 23. The specimen measurement apparatus according to Item 20, wherein
   the second reagent container is a mono-material container.
Item 24. The specimen measurement apparatus according to Item 20, wherein
   the second reagent container is a container formed of a polyethylene-based resin.
Item 25. The specimen measurement apparatus according to Item 20, wherein
   the control unit is configured to estimate a number of the second reagent containers collected for recycling based on the number of replacements.
Item 26. The specimen measurement apparatus according to Item 20, wherein
   a capacity of the second reagent container is larger than a capacity of the first reagent container.
Item 27. The specimen measurement apparatus according to Item 20, comprising
   a plurality of types of the first reagent containers corresponding to a plurality of types of measurement items, wherein the second reagent contained in the second reagent container is shared for a plurality of operations of the measurement unit corresponding to the plurality of types of measurement items.
Item 28. The specimen measurement apparatus according to Item 20, wherein
   the first reagent contained in the first reagent container is exclusively used for the preparation of the measurement sample in the measurement unit.
Item 29. The specimen measurement apparatus according to Item 20, comprising
   a plurality of types of the first reagent containers corresponding to a plurality of types of measurement items, wherein the first reagents contained in the plurality of types of the first reagent containers is exclusively used for the preparation of the measurement sample for measuring a corresponding measurement item in the measurement unit.
Item 30. The specimen measurement apparatus according to Item 20, wherein
   a capacity of the second reagent container is not less than 2 liters and not more than 25 liters.
Item 31. The specimen measurement apparatus according to Item 20, wherein
   a capacity of the first reagent container is not less than 1 ml and not more than 300 ml.
Item 32. The specimen measurement apparatus according to Item 20, wherein
   the measurement unit comprises a first opening/closing part that allows placing the first reagent container into the reagent holder and removing the first reagent container from the reagent holder, and
   the housing comprises a second opening/closing part that allows placing the second reagent container and for removing the second reagent container.
Item 33. The specimen measurement apparatus according to Item 20, wherein
   the measurement unit comprises a first opening/closing part that allows placing the first reagent container into the reagent holder and removing the first reagent container from the reagent holder,
   the housing comprises a second opening/closing part that allows placing the second reagent container and removing the second reagent container, and
   the second opening/closing part is disposed below the first opening/closing part.
Item 34. The specimen measurement apparatus according to Item 20, wherein
   a plurality of the second reagent containers are placed in the housing.
Item 35. The specimen measurement apparatus according to Item 20, wherein
   a plurality of the second reagent containers are placed in the housing, and while at least one of the plurality of the second reagent containers is being replaced, the measurement unit operates using the second reagent supplied from another of the second reagent containers.
Item 36. The specimen measurement apparatus according to Item 20, wherein
   the remaining amount management part manages the remaining amount in order to manage the number of replacements for per facility where the specimen measurement apparatus is installed.
Item 37. The specimen measurement apparatus according to Item 20, wherein
   the control unit manages information indicating whether or not the second reagent container installed in the housing is a recycled product.
Item 38. The specimen measurement apparatus according to Item 20, wherein
   the control unit manages a number of times of having used a recycled second reagent container based on information indicating whether or not the second reagent container installed in the housing is a recycled product.
Item 39. A specimen measurement system comprising:
   a measurement unit configured to measure a specimen; and
   a control unit configured to analyze measurement data from the measurement unit; wherein the measurement unit comprises:
      a first reagent container accommodating a first reagent containing a substance that binds to an analyte in the specimen;
      a reagent holder configured to hold the first reagent container;
      a specimen processor configured to prepare a measurement sample by mixing the first reagent and the specimen; and
      a detector configured to interrogate the analyte for the measurement of the measurement sample;
      wherein the measurement unit is arranged on a housing that stores a second reagent container, the second reagent container containing a second reagent used for at least one of: (i) washing of a flow path of the measurement unit, (ii) dilution of the specimen, (iii) preparation of the measurement sample, and (iv) interrogation of the analyte of the measurement sample by the detector,
      wherein the second reagent container stored in the housing is connected to the measurement unit via a reagent feeding tube; and
      wherein the control unit comprises:
         a measurement data analyzer configured to generate a measurement result by analyzing the measurement data acquired by the detector; and
         a reagent manager configured to manage a number of replacements of the second reagent container based on a remaining amount of the second reagent.
Item 40. A specimen measurement system comprising:
   a measurement unit configured to measure a specimen; and
   a control unit configured to analyze measurement data from the measurement unit; wherein the measurement unit comprises:
      a first reagent container accommodating a first reagent containing a substance that binds to an analyte in the specimen;
      a reagent holder configured to hold the first reagent container;
      a specimen processor configured to prepare a measurement sample by mixing the first reagent and the specimen; and
      a detector configured to interrogate the analyte for the measurement of the measurement sample;
      wherein the measurement unit is arranged on a housing that stores a second reagent container, the second reagent container containing a second reagent used for at least one of: (i) washing of a flow path of the measurement unit, (ii) dilution of the specimen, (iii) preparation of the measurement sample, and (iv) interrogation of the analyte of the measurement sample by the detector,
      wherein the second reagent container stored in the housing is connected to the measurement unit via a reagent feeding tube; and
      wherein the control unit comprises:
         a measurement data analyzer configured to generate a measurement result by analyzing the measurement data acquired by the detector; and
         a remaining amount manager configured to manage a remaining amount of the second reagent to allow a management of a number of times the second reagent container has been replaced.

## Claims

1. A specimen measurement system (1) comprising:
a measurement unit (2) configured to measure a specimen; and
a control unit (7) configured to analyze measurement data from the measurement unit (2); wherein the measurement unit (2) comprises:
a first reagent container (230) accommodating a first reagent containing a substance that binds to an analyte in the specimen;
a reagent holder (23) configured to hold the first reagent container (230);
a specimen processor (21) configured to prepare a measurement sample by mixing the first reagent and the specimen; and
a detector (22) configured to interrogate the analyte for the measurement of the measurement sample;
wherein the measurement unit (2) is arranged on a housing (24) that stores a second reagent container (240), the second reagent container (240) containing a second reagent used for at least one of: (i) washing of a flow path of the measurement unit (2), (ii) dilution of the specimen, (iii) preparation of the measurement sample, and (iv) interrogation of the analyte of the measurement sample by the detector (22),
wherein the second reagent container (240) stored in the housing (24) is connected to the measurement unit (2) via a reagent feeding tube; and
wherein the control unit (7) is programmed to execute operations including:
analyzing the measurement data acquired by the detector (22) to generate a measurement result; and
managing a number of replacements of the second reagent container (240) based on a remaining amount of the second reagent.

2. The specimen measurement system (1) according to claim 1, wherein
the second reagent container (240) is a container formed of a recyclable material.

3. The specimen measurement system (1) according to claim 1, wherein
the second reagent container (240) is a container formed of a resin.

4. The specimen measurement system (1) according to claim 1, wherein
the second reagent container (240) is a mono-material container.

5. The specimen measurement system (1) according to claim 1, wherein
the control unit (7) is configured to estimate the number of the second reagent containers (240) collected for recycling based on the number of replacements.

6. The specimen measurement system (1) according to claim 1, wherein
a capacity of the second reagent container (240) is larger than a capacity of the first reagent container (230).

7. The specimen measurement system (1) according to claim 1, comprising
a plurality of types of the first reagent containers (230) corresponding to a plurality of types of measurement items, wherein the second reagent contained in the second reagent container (240) is shared for a plurality of operations of the measurement unit (2) corresponding to the plurality of types of measurement items.

8. The specimen measurement system (1) according to claim 1, wherein
the first reagent contained in the first reagent container (230) is exclusively used for the preparation of the measurement sample in the measurement unit (2).

9. The specimen measurement system (1) according to claim 1, comprising
a plurality of types of the first reagent containers (230) corresponding to a plurality of types of measurement items, wherein the first reagents contained in the plurality of types of the first reagent containers (230) is exclusively used for the preparation of the measurement sample for measuring a corresponding measurement item in the measurement unit (2).

10. The specimen measurement system (1) according to claim 1, wherein
the measurement unit (2) comprises a first opening/closing part (231) that allows placing the first reagent container (230) into the reagent holder (23) and removing the first reagent container (230) from the reagent holder (23), and
the housing (24) comprises a second opening/closing part (242) that allows placing the second reagent container (240) and removing the second reagent container (240).

11. The specimen measurement system (1) according to claim 1, wherein
a plurality of the second reagent containers (240) are placed in the housing (24).

12. The specimen measurement system (1) according to claim 1, wherein
a plurality of the second reagent containers (240) are placed in the housing (24), and while at least one of the plurality of the second reagent containers (240) is being replaced, the measurement unit (2) operates using the second reagent supplied from another of the second reagent containers (240).

13. The specimen measurement system (1) according to claim 1, wherein
the control unit (7) manages the number of replacements for per facility (13) where at least one specimen measurement apparatus (11) including the measurement unit (2) and the control unit (7) is installed.

14. The specimen measurement system (1) according to claim 1, wherein
the control unit (7) manages information indicating whether or not the second reagent container (240) installed in the housing (24) is a recycled product.

15. The specimen measurement system (1) according to claim 1, wherein
the control unit (7) manages a number of times of having used a recycled second reagent container (240) based on information indicating whether or not the second reagent container (240) installed in the housing (24) is a recycled product.
